# EUROPÄISCHE PATENTSCHRIFT

(11) **EP 2 781 573 B1**
(45) Veröffentlichungstag und Bekanntmachung des Hinweises auf die Patenterteilung: **22.02.2023**
(21) Anmeldenummer: 14160997.4
(22) Anmeldetag: 21.03.2014
(51) Int. Cl.: C09J 167/04

(54) **Neue Klebstoffzusammensetzungen auf Basis nachwachsender Rohstoffe und deren Verwendung**
Novel adhesive compositions based on renewable raw materials and their use
Nouvelles compositions d'adhésif à base de matières premières renouvelables et leur utilisation

(30) Priorität: 22.03.2013 DE 102013004909
(43) Veröffentlichungstag der Anmeldung: 24.09.2014
(73) Patentinhaber: Jowat AG, 32758 Detmold (DE)
(72) Erfinder: Terfloth, Christian, 32760 Detmold (DE); Gantner, Carola, 32760 Detmold (DE)
(74) Vertreter: Strehlke, Ingo Kurt

(56) Entgegenhaltungen:
- EP-B1- 1 347 788
- WO-A1-95/10577
- FR-A1- 2 937 975
- JP-B2- 3 330 390
- DATABASE WPI Week 199404 Thomson Scientific, London, GB; AN 1994-032009 XP002727200, & JP H05 339557 A (MITSUI TOATSU CHEM INC) 21. Dezember 1993 (1993-12-21)

## Beschreibung

Die vorliegende Erfindung betrifft das technische Gebiet der Klebstoffzusammensetzungen auf Basis nachwachsender Rohstoffe.

Insbesondere betrifft die vorliegende Erfindung Haftklebstoffzusammensetzungen auf Basis nachwachsender Rohstoffe sowie deren Verwendung.

Des Weiteren betrifft die vorliegende Erfindung ein Verfahren zum Fügen von mindestens zwei Substraten durch Kleben.

Der Begriff des "Klebens" beschreibt im Allgemeinen ein Fertigungsverfahren zum stoffschlüssigen Fügen von Substraten. Beim Kleben haftet der Klebstoff durch physikalische Wechselwirkung - gelegentlich auch durch chemische Wechselwirkung - der sogenannten Adhäsion, an den Substraten und verbindet diese zumeist dauerhaft. Da das Kleben einerseits eine großflächige und kraftschlüssige Verbindung der Fügeteile erlaubt und andererseits aufgrund seiner materialschonenden Eigenschaften geeignet ist, nahezu sämtliche Materialien miteinander zu verbinden, werden Klebeverfahren sowohl für den Heimbedarf als auch für die industrielle Anwendung vielfältig angewendet. Immer öfter werden andere Fügeverfahren, wie beispielsweise Schweißen oder Löten, aber auch Verschrauben, durch Klebeverfahren ersetzt. So stehen mittlerweile rund 50 % der in Deutschland produzierten Waren mit Klebstoffen in Verbindung.

Von zunehmender Bedeutung sind in diesem Zusammenhang Haftklebstoffe, bei welchen es sich um nicht aushärtende, permanent klebrige Klebstoffe handelt, deren chemischer Zustand sich nach Fertigstellung der Klebstoffmasse nicht oder nur noch geringfügig verändert. Haftklebstoffe verfügen über eine permanente Oberflächenklebrigkeit, den sogenannten Tack, wodurch ein Verkleben durch leichtes Anpressen, ohne Zufuhr thermischer Energie und ohne chemische Reaktionen, erfolgen kann. Üblicherweise besitzen Haftklebstoffe einen dynamischen Adhäsionsaufbau, d. h. die Endfestigkeit der Klebeverbindung wird erst nach mehreren Minuten oder sogar Tagen erreicht. Basierend auf ihrer speziellen Anwendungsart werden Haftklebstoffe in drei Gruppen unterteilt:
Eine weitverbreitete Einsatzmöglichkeit von Haftklebstoffen sind wiederverklebbare Produkte, bei welchen der Klebstoff nur eine geringe Klebekraft aufweist. Das Klebstoffsystem wird beim Ablösen nicht beschädigt und kann mehrmals verklebt werden. Beispiele hierfür sind Haftnotizzettel oder Verschlussklebungen, wie beispielsweise von Papiertaschentuchpackungen oder von Feuchttücherpackungen.
Eine weitere weitverbreitete Einsatzmöglichkeit von Haftklebstoffen sind lösbare Produkte, in welchen der Haftklebstoff eine mittlere bis hohe Klebkraft aufweist. Bei diesen Produkten lässt sich die auf eine dauerhafte Verklebung ausgelegte Klebeverbindung wieder lösen, wobei oftmals sogar eine rückstandsfreie Lösung der Klebeverbindung möglich ist. Lösbare Produkte in diesem Sinne sind beispielsweise Wundpflaster, Aufkleber, Etiketten, selbstklebende Folien und Verpackungsbänder.

Schließlich werden Haftklebstoffe auch in zunehmenden Maße für permanentklebende Produkte eingesetzt, wobei der Haftklebstoff in diesem Fall eine besonders hohe Klebekraft besitzt und für semistrukturelle Anwendungen geeignet ist. Permanentklebende Produkte mit Haftklebstoffen werden daher oftmals für industrielle Anwendungen eingesetzt, wie beispielsweise bei der Befestigung von Außenspiegeln, Schutzleisten oder an Dämpfungs-Versteifungselementen im Fahrzeugbau. Weitere Anwendungen sind der Fenster- und Fassadenbau, Spiegelklebungen, aber auch die Herstellung von Elektronikartikeln, wie beispielsweise Mobiltelefonen, oder aber von selbstklebenden Produkten, die beim Ablösen bewusst sichtbar verändert oder zerstört werden sollen, wie beispielsweise Typenschilder oder TÜV-Plaketten.

Klebstoffsysteme im Allgemeinen und insbesondere auch Haftklebstoffsysteme beruhen überwiegend, wenn nicht sogar ausschließlich, auf petrochemischen Produkten. Dies hat zur Folge, dass bei ständig wachsender Nachfrage nach Rohöl bzw. rohölbasierten Produkten und gleichzeitig begrenzten Vorkommen, der Preis für Rohöl und damit auch für rohölbasierte Produkte stetig steigt. Auf diese Weise werden Klebstoffe und die Produkte, in welchen sie eingesetzt werden, gleichzeitig kostenintensiver in der Herstellung, so dass sich der Einsatz von Klebstoffen in einigen Produkten nicht mehr rentiert bzw. diese verteuert.

Darüber hinaus beträgt der Einsatz von rohölbasierten Produkten, insbesondere Klebstoffen, zu einem weiteren Verbrauch an fossilen Rohstoffen bei, so dass deren Verwendung zu einer ungünstigen CO₂-Bilanz führt und letztendlich zur Erderwärmung und zum Klimawandel beiträgt.

Vor diesem Hintergrund hat es im Stand der Technik nicht an Versuchen gefehlt, Klebstoffsysteme auf Basis nachwachsender Rohstoffe bereitzustellen.

So offenbart die US 2001/0045604 A1 eine mehrschichtige biologisch abbaubare Folie, welche eine Schicht eines biologisch abbaubaren Haftklebstoffs aufweist. Bei dem tatsächlich eingesetzten acrylathaltigen biologisch abbaubaren Haftklebstoff handelt es sich jedoch um ein petrochemisches Erzeugnis und nicht etwa um ein Produkt auf Basis nachwachsender Rohstoffe.

Die US 2008/0057300 A1 beschreibt biologisch abbaubare hitzeklebrige Zweikomponenten-Fasern auf Basis von Polylactiden. Die dort beschriebenen Fasern sind nicht als Haftschmelzklebstoffe geeignet.

Weiterhin betrifft die DE 1 99 44 159 A1 wasserlösliche, emissionsarme und biologisch abbaubare Klebstoffmischungen auf Basis von Polyasparaginsäure bzw. deren Salzen und Derivaten. Die Klebstoffmischungen bestehen allein aus Polyasparaginsäure bzw. ihren Salzen und/oder Derivaten sowie natürlichen Klebeharzen. Diese spezielle Kombination von Inhaltsstoffen ist nur für ein eng begrenztes Anwendungsgebiet geeignet.

Die EP 0 741 177 A2 beschreibt Schmelzklebstoffzusammensetzungen, welche aus einem durch Wasser zersetzbarem oder biologisch abbaubarem thermoplastischen Polymer unter Zuhilfenahme von Sucrosebenzoat als Klebrigmacher hergestellt werden.

Weiterhin betrifft die EP 0 899 274 A1 Pfropfcopolymere, bei welchen Polylactideinheiten auf ein gesättigtes polymeres Rückgrat mittels Pfropfpolymerisation aufgebracht werden, und welches als thermoplastische elastomere Komponente in einem Schmelzklebstoff verwendet werden kann.

Die WO 96/05264 A1 offenbart Haftklebstoffe auf Basis von Poly(β-hydroxyorganylen).

Die EP 0 438 426 B1 betrifft ein System für die kontrollierte Abgabe biologisch wirksamer Bestandteile, wobei die Bestandteile von einer polymeren Zusammensetzung gehalten werden, welche Abschnitte von Poly(R-lactid), die verzahnt sind mit Abschnitten von Poly(S-lactid), enthalten.

Die DE 100 54 277 A1 betrifft Aufreißstreifen, deren zugrundeliegende Kunststofffolien sowie darauf aufgebrachte Beschichtungen biologisch abbaubar sind. Die Aufreißstreifen können in Verbindung mit biologisch abbaubaren Verpackungsmaterialien verwendet werden.

Weiterhin offenbart die DE 692 03 713 T2 einen Schmelzkleber auf Basis von Polyhydroxybutyrat/Hydroxyvalerat.

Weiterhin offenbart die WO 94/10257 A1 eine Schmelzklebstoffzusammensetzung auf Basis von Polylactiden.

Die DE 198 55 100 A1 offenbart einen Klebstoff, welcher biologisch abbaubar ist.

Weiterhin beschreibt die DE 694 22 053 T2 biologisch abbaubare bzw. kompostierbare Schmelzklebstoffe, welche Polyester auf Basis von Milchsäure enthalten.

Darüber hinaus beschreibt die WO 02/070583 A2 biologisch abbaubare polymere Verbindungen auf Basis von Polylactiden sowie ihre Verwendung als Schmelzklebstoffe.

Mit den vorgenannten Polymeren bzw. Klebstoffsystemen ist es jedoch nicht möglich, Klebstoffsysteme, insbesondere Haftklebstoffsysteme, bereitzustellen, welche anwendungstechnisch und wirtschaftlich zu petrochemisch-basierten Klebstoffsystemen konkurrenzfähig sind.

In der jüngsten Zeit werden jedoch vermehrt biobasierte und/oder biologisch abbaubare Klebstoffe nachgefragt. Die erhöhte Nachfrage ist einerseits induziert durch ein immer weiter steigendes Bewusstseins für Umweltfragen, andererseits auch durch die in immer kürzeren Abständen auftretenden Versorgungsengpässe und damit einhergehenden Preissteigerungen bei erdölbasierten Rohstoffen wie z.B. Styrol-Isopren-Styrol-Blockcopolymeren und Kohlenwasserstoffharzen, welche die Hauptbestandteile der derzeit hergestellten Haftklebstoffe darstellen.

So besteht beispielsweise auf dem Markt für Lebensmittelverpackungen ein Interesse an biologisch abbaubaren Produkten. Im Bereich der Kunststoffe zur Herstellung von Folien oder Trays für Lebensmittel oder auch für Wegwerfgeschirr besteht bereits eine relativ große Auswahl an biobasierten und biologisch abbaubaren Produkten. Als Grundstoffe kommen hier zum Beispiel neben PLA PHB und modifizierte Stärke zum Einsatz. Durch den Einsatz von Klebstoffen auf Basis nachwachsender Rohstoffe wäre es möglich, vollständig biologisch abbaubare, biobasierte Verpackungen bereitzustellen.

Der Einsatz nachwachsender Rohstoffe in Klebstoffanwendungen vervielfacht oftmals die Produktionskosten, so dass trotz der besseren CO₂-Bilanz und der verbesserten Umweltwirkung ein Einsatz dieser Klebstoffsysteme in industriellen Anwendungen wirtschaftlich nicht sinnvoll ist. Darüber hinaus erreichen Klebstoffsysteme auf Basis nachwachsender Rohstoffe oftmals nicht die Eigenschaften von petrochemisch basierten Klebstoffsystemen. Dies gilt insbesondere für die Klebekraft sowie die Beständigkeit der Verklebung gegenüber Umwelteinflüssen, wie beispielsweise Temperaturänderungen, oder auch Chemikalien.

Dies führt dazu, dass momentan am Markt kein Klebstoffsystem auf Basis nachwachsender Rohstoffe erhältlich ist, welches in seinen Anwendungseigenschaften und seinem Eigenschaftsprofil mit petrochemisch basierten Klebstoffsystemen konkurrieren könnte, geschweige denn wirtschaftlich konkurrenzfähig wäre. Insbesondere ist bislang kein Haftschmelzklebstoff erhältlich, welcher auf nachwachsenden Rohstoffen basiert.

Der Datenbank-Exzerpt DATABASE WPI, Week 199404, Thomson Scientific, London, GB; AN 1994-032009, XP002727200; & JP H05 339557 A (MITSUI TOATSU CHEM INC), 21. Dezember 1993, betrifft eine Schmelzklebstoffzusammensetzung zur Verbindung biologisch abbaubarer Kunststoffe, welche ein thermoplastisches Harz sowie Klebrigmacher (Tackifier) auf Basis von Polylactiden enthalten kann.

Weiterhin betrifft die WO 95/10577 A1 einen biologisch abbaubaren bzw. kompostierbaren Schmelzklebstoff auf Basis eines Polyesters, welcher aus Milchsäure erhalten wird, wobei ein thermoplastisches Harz auf Basis eines Polyesters zu einem funktionsfähigen Klebstoff formuliert werden kann, und ein niedermolekulares Material als Klebrigmacher mit einem biologisch abbaubaren bzw. kompostierbaren Harz zu einem Heißschmelzklebstoff formuliert werden kann, wobei der Klebstoff in Art eines Haftklebstoffs ausgebildet sein und vollständig biologisch abbaubar sein kann.

Weiterhin betrifft EP 1 347 788 B1 eine antimikrobielle Schmelzklebstoffzusammensetzung, welche 10 bis 80 % eines Polymers, 20 bis 70 % eines klebrigmachenden Harzes, 0 bis 50 % eines Weichmachers, 0 bis 50 % eines Wachses, 0,1 bis 5 % eines Antioxidans und 0,01 bis 5 % eines bakteriostatischen Mittels aufweist.

Darüber hinaus betrifft FR 2 937 975 A1 einen Schmelzklebstoff auf Basis eines Polylactids, wobei die Zusammensetzung insbesondere 45 bis 100 % eines Polylactids, 0 bis 50 % eines klebrigmachenden Harzes und 0 bis 30 % eines Weichmachers aufweist.

Der vorliegenden Erfindung liegt daher die Aufgabe zugrunde, eine Klebstoffzusammensetzung auf Basis nachwachsender Rohstoffe und ein entsprechendes Fügeverfahren zur Verfügung zu stellen, wobei die zuvor geschilderten, im Zusammenhang mit dem Stand der Technik auftretenden Probleme und Nachteile zumindest weitgehend vermieden oder aber wenigstens abgeschwächt werden sollen.

Insbesondere ist es eine Aufgabe der vorliegenden Erfindung, eine Klebstoffzusammensetzung auf Basis nachwachsender Rohstoffe zur Verfügung zu stellen, deren Eigenschaftsprofil im Hinblick auf die Klebekraft sowie die Dauer und Haltbarkeit der Klebefuge mit petrochemisch basierten Klebstoffsystemen vergleichbar ist und darüber hinaus wirtschaftlich konkurrenzfähig ist, d. h. deren Herstellungskosten im Bereich von petrochemisch basierten Klebstoffsystemen liegt.

Des Weiteren ist eine Aufgabe der vorliegenden Erfindung darin zu sehen, ein Fügeverfahren bereitzustellen, welches auf der Verwendung von Klebstoffzusammensetzungen auf Basis nachwachsender Rohstoffe basiert und welches sich für eine Vielzahl von Anwendungen im industriellen und Heimbereich eignet.

Die zuvor geschilderte Aufgabenstellung wird erfindungsgemäß durch eine Haftklebstoffzusammensetzung nach Anspruch 1 gelöst; weitere vorteilhafte Weiterbildungen und Ausgestaltungen der erfindungsgemäßen Haftklebstoffzusammensetzung sind Gegenstand der diesbezüglichen Unteransprüche.

Ein weiterer Gegenstand der vorliegenden Erfindung ist ein Verfahren zum Fügen von mindestens zwei Substraten durch Kleben nach dem betreffenden unbabhängigen Verfahrensanspruch; weitere, vorteilhafte Weiterbildungen und Ausgestaltungen dieses Erfindungsaspekts sind Gegenstand der diesbezüglichen Verfahrensunteransprüche.

Wiederum weitere Gegenstände der vorliegenden Erfindung sind die Verwendungen der erfindungsgemäßen Haftklebstoffzusammensetzung nach den betreffenden Verwendungsansprüchen.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Weiterhin versteht es sich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann vielmehr von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber mit dem Fachmann auf diesem Gebiet an sich geläufigen Bestimmungsmethoden ermittelt bzw. bestimmt werden können.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - ist somit eine Haftklebstoffzusammensetzung auf Basis nachwachsender Rohstoffe, wobei die Klebstoffzusammensetzung enthält:
(a) mindestens ein Polymer auf Basis von Polymilchsäure in Mengen von 10 bis 60 Gew.-%, bezogen auf die Klebstoffzusammensetzung;
(b) mindestens ein Harz in Mengen von 10 bis 60 Gew.-%, bezogen auf die Klebstoffzusammensetzung;
(c) mindestens ein Plastifizierungsmittel (Weichmacher) in Mengen von 2 bis 60 Gew.-%, bezogen auf die Klebstoffzusammensetzung; und
(d) gegebenenfalls mindestens ein Wachs in Mengen von 0,1 bis 50 Gew.-%, bezogen auf die Klebstoffzusammensetzung,

wobei das Polymer (a) ein gewichtsmittleres Molekulargewicht M_{w} im Bereich von 1.000 bis 80.000 g/mol, bestimmt mittels GPC gemäß Punkt 1 der Ausführungsbeispiele, aufweist,
wobei das Polymer (a) eine Polydispersität M_{w}/Mₙ im Bereich von 1,5 bis 7 aufweist,
wobei das Polymer (a) auf Basis von Polymilchsäure L-Milchsäure- und D-Milchsäureeinheiten enthält, wobei das Polymer (a) ein Verhältnis von L-Milchsäureeinheiten zu D-Milchsäureeinheiten im Bereich von 85 : 15 bis 60 : 40 aufweist,
wobei das Polymer (a) Abschnitte und/oder Segmente aus Milchsäureeinheiten aufweist, wobei die einzelnen Abschnitte und/oder Segmente aus Milchsäureeinheiten eine zahlenmittlere Molmasse Mₙ im Bereich von 400 bis 8.000 g/mol, bestimmt mittels GPC gemäß Punkt 1 der Ausführungsbeispiele, aufweisen, und
wobei das Polymer (a) im Anschluss an die Abschnitte und/oder Segmente aus Milchsäureeinheiten zur Kettenverlängerung Modifizierungen auf Basis chemischer Gruppen und/oder Segmente ausgewählt aus
   (i) Polyethern, Polyestern, Polyamiden und/oder
   (ii) Urethanen, Polyurethanen und/oder
   (iii) Polyacrylaten, Polymethacrylaten, Polystyrolen, Acryl/Styrol-Copolymeren, Styrol-Copolymeren, Polyvinylacetaten, Polyolefinen
sowie deren Mischungen und Co- und Terpolymeren aufweist.

Die vorliegende Erfindung stellt somit eine Haftklebstoffzusammensetzung (synonym nachfolgend auch nur als Klebstoffzusammensetzung bezeichnet) bereit, welche auf Basis nachwachsender Rohstoffe, nämlich insbesondere auf Basis von Polymilchsäure, ausgebildet ist und in ihrem Eigenschaftsprofil mit petrochemisch basierten Klebstoffsystemen vergleichbar sowie wirtschaftlich konkurrenzfähig ist.

Besonders gute Ergebnisse werden im Rahmen der vorliegenden Erfindung erhalten, wenn die erfindungsgemäße Zusammensetzung als Komponente (b) mindestens ein Harz und als Komponente (c) mindestens ein Plastifizierungsmittel (Weichmacher) enthält. Durch das Harz einerseits und das Plastifizierungsmittel bzw. den Weichmacher andererseits können die Klebeeigenschaften sowie die rheologischen Eigenschaften der erfindungsgemäßen Klebstoffzusammensetzung gezielt eingestellt werden. Unter der Voraussetzung, dass die erfindungsgemäße Zusammensetzung ein Harz enthält, welches über plastifizierende Eigenschaften verfügt, kann jedoch auch auf ein zusätzliches Plastifizierungsmittel bzw. einen zusätzlichen Weichmacher verzichtet werden.

Polymilchsäuren, synonym auch als Polylactide bezeichnet, sind industriell auf einfachem Wege durch Polykondensation von Milchsäure oder durch ionische Polymerisation von Lactiden erhältlich. Die als Ausgangsstoff benötigte Milchsäure wird in der Regel mittels biotechnologischer Verfahren durch Fermentation von Kohlenhydraten, wie beispielsweise Zuckern oder Stärken, erhalten. Daneben kann Milchsäure auch durch katalytische Dehydrogenierung von mehrwertigen primären Alkoholen sowie Hydroxyaldehyden erhalten werden. Ein derartiges Verfahren wird beispielsweise in der DE 10 2008 013 474 A1 beschrieben.

Milchsäuren sowie Polymilchsäuren bzw. Polylactide sind somit im großindustriellen Maßstab erhältlich und im Hinblick auf die Herstellungskosten mit petrochemischen Erzeugnissen vergleichbar. Reine Polylactide bzw. Polymilchsäuren (auch bezeichnet als PLA; **P**oly **L**actic **A**cid) ergeben ohne weitere Zusatzstoffe äußerst spröde und brüchige Kunststoffe und sind folglich nicht zur Herstellung von Klebstoffsystemen geeignet. Im Rahmen der vorliegenden Erfindung ist es jedoch nun erstmals gelungen, Klebstoffsysteme, insbesondere Haftklebstoffzusammensetzungen, bereitzustellen, welche auf Polymilchsäuren bzw. Polylactiden basieren und hervorragende Anwendungseigenschaften besitzen.

Wie oben bereits ausgeführt, bezeichnen Polymilchsäure und Polylactide chemisch gleiche Makromoleküle. Der Unterschied zwischen den beiden Begriffen liegt lediglich im Herstellungsverfahren begründet. Das Monomer für PLA ist Milchsäure, die in Form zweier Stereoisomeren vorliegen, nämlich L- und D-Milchsäure.

Wird Milchsäure auf fermentativem Wege erzeugt, so werden optisch aktive Formen der Milchsäure erhalten. Homofermentative Lactobakterien generieren dabei ausschließlich L(+)-Milchsäure, heterofermentative Lactobakterien generieren entweder ein racemisches Gemisch oder auch D(-)-Milchsäure. Das Verhältnis zwischen L- und D-Milchsäure hängt von den Fermentationsparametern (Temperatur, pH-Wert, etc.) und dem Zustand der Bakterienkultur ab.

Es ist apparativ aufwendig, monomere Milchsäure zu erhalten, da sie bei Anreicherung in wässriger Lösung zur Selbstkondensation neigt und sich Oligomere bilden. Dieses Reaktionsverhalten zur Bildung linearer Polyester wird deshalb auch zur Synthese von Polymilchsäure genutzt. Für die Herstellung von PLA sind prinzipiell zwei verschiedene Synthesewege einsetzbar. Einer ist die Polykondensation, bei der direkt aus Milchsäure ein Polymer erzeugt wird. Eine Alternative zur PLA-Herstellung ist die ringöffnende Polymerisation von Dilactiden. Dilactide werden durch destillative Dehydratisierung von Milchsäure mit anschließender zyklisierender Depolymerisation erhalten.

Dilactide sind ebenfalls optisch aktiv. Die verschiedenen Stereoisomere der Polymilchsäure bzw. des Polylactids lassen sich in Abhängigkeit von den eingesetzten Monomeren ableiten. Da Dilactide zwei asymmetrische Kohlenstoffatome besitzen, existieren drei verschiedene Konfigurationen: zwei Enantiomere D- und L-Dilactid und eine meso-Form bestehend aus je einer Moleküleinheit D- und L-Milchsäure, die keine optische Aktivität aufweist. Das entsprechende Polymer wird als Polymeso-lactid (meso-PLA) bezeichnet. Racemische Ansätze (Molverhältnis D/L-Form: 1:1; optisch aktiv) von Milchsäure bzw. Lactid führen zu Polyestern, die als Poly-D,L-Milchsäure bzw. Poly-D,L-lactid (PDLLA) bezeichnet werden. Poly-L- bzw. -D-Milchsäure sind semikristalline Polymere (Kristallinität von Poly-L-Lactid bis zu 40 %) mit Glasübergangstemperaturen (T_{g}) von ca. 55 °C bis 70 °C (vgl. G.B. Kharas, F. Sanchez-Riera und D.K. Severson "Polymers of Lactic Acid" in "Plastics from Microbes", David P. Mobley, Carl Hanser Verlag, Munich Vienna New York (1994) 93-137). Die Glasübergangstemperatur T_{g} ist vom Wassergehalt abhängig. Die Schmelztemperatur (Tₘ) von PLLA bzw. PDLA liegt allgemein im Bereich von 170 °C bis 180 °C. Polymere der D,L-Milchsäure weisen grundsätzlich amorphe Eigenschaften auf. Die Schmelzenthalpie wurde für ein enantiomeres PLA mit einer Kristallinität von 100 % bei 93 J/g gemessen (vgl. L. T. Lim, R. Auras und M. Rubino "Processing technologies for poly (lactic acid)" Progress in Polymer Science 2008, 33, (8), 820-852). Schmelztemperatur und Kristallinitätsgrad sind abhängig von der Molmasse und der Reinheit des Polymers (vgl. K. Jamshidi, S.-H. Hydon und Y. Ikada "Thermal characterization of polylactide" Polymer 1988, 29, (12), 2229-2234). Die optimale Kristallisationstemperatur von PLLA liegt bei 105 °C-115 °C (vgl. D. Kaplan "Biopolymers from renewable resources" Springer Verlag: 1998, Ch. 15, M. H. Hartmann "High molecular weight polylactic acid polymers" 367 - 405). Der Kristallisationsprozess verläuft verhältnismäßig langsam mit einer Halbwertzeit von ca. 2,5 min. Diese Halbwertzeit erhöht sich um bis zu 40 % je 1 % im Polymer enthaltenes meso-Lactid.

Die Polymilchsäuren bzw. Polylactide bilden - ohne sich auf eine Theorie festlegen zu wollen - das sogenannte Basis- oder Rückgratpolymer der erfindungsgemäßen Klebstoffmischung, d. h. sie verleihen der Klebstoffzusammensetzung die nötige Kohäsion bzw. innere Festigkeit. Die in der erfindungsgemäßen Klebstoffzusammensetzung enthaltenen Harze sind im Gegensatz hierzu für die permanente Klebrigkeit der erfindungsgemäßen Klebstoffzusammensetzung verantwortlich, wobei das polymilchsäure- bzw. polylactidbasierte Rückgratpolymer vorteilhafterweise auch über eine gewisse Eigenklebrigkeit verfügt.

Die Klebkraft eines Haftklebstoffs und die Dauerhaftigkeit einer Verklebung hängen sowohl von der Adhäsion des Klebstoffs zu den zu verbindenden Substraten als auch von der inneren Festigkeit des Klebstoffs, der Kohäsion, ab. Ein Haftklebstoff wird im Allgemeinen aus einem Basispolymer als kohäsionsbestimmender Komponente sowie klebrigen Harzen und Weichmachern als adhäsionsbestimmenden Bestandteilen und gegebenenfalls weiteren Zusatzstoffen als Substanzen für spezielle Eigenschaftsbildungen formuliert.

Unter dem Begriff "Adhäsion" ist im Rahmen der vorliegenden Erfindung die Haftung der Klebstoffzusammensetzung an der Oberfläche eines oder mehrerer Substrate zu verstehen. Unter dem Begriff der "Kohäsion" ist die innere Festigkeit der Klebstoffzusammensetzung, d. h. die Wechselwirkungen zwischen den Molekülen des Klebstoffs, zu verstehen. Problematisch bei der Formulierung von Klebstoffzusammensetzungen ist oftmals, dass Verbindungen, wie beispielsweise bestimmte Polymere, entweder über eine hohe Adhäsion, d. h. eine hohe Klebekraft, oder eine hohe Kohäsion, d. h. eine hohe innere Festigkeit, verfügen. So sind die beiden maßgeblichen Komponenten von Haftklebstoffen in der Regel ein oder mehrere klebrigmachende Harze, auch als Tackifier bezeichnet, welche für eine gute Adhäsion sorgen, jedoch über keine ausreichende innere Festigkeit verfügen, und ein Basis- bzw. Rückgratpolymer, welches der Klebstoffzusammensetzung die nötige innere Festigkeit verleiht, jedoch meist nicht über die für Haftklebstoffe erforderliche ausreichende Eigenklebrigkeit verfügt.

Im Rahmen der vorliegenden Erfindung ist es nun erstmals gelungen, ein Basis- bzw. Rückgratpolymer auf Basis nachwachsender Rohstoffe bereitzustellen.

Die erfindungsgemäßen Klebstoffsysteme weisen sowohl eine hervorragende Anfangsklebrigkeit bzw. Tack auf und besitzen darüber hinaus hervorragende Schälwiderstände und gute Wärmestandsfestigkeiten.

Insbesondere ist es möglich, die Komponenten des erfindungsgemäßen Klebstoffsystems so aufeinander abzustimmen, dass variabel einstellbare Eigenschaftsprofile eingestellt werden können. Das erfindungsgemäße Klebstoffsystem kann somit für den jeweiligen Anwendungsfall maßgeschneidert werden.

Darüber hinaus ist das erfindungsgemäße Klebstoffsystem industriell nutzbar, da Milchsäure bzw. Polymilchsäuren und Polylactide kostengünstig in großen Mengen erhältlich sind.

Das erfindungsgemäße Klebstoffsystem ist für eine Vielzahl von Anwendungen geeignet und speziell auf diese abstimmbar. So können mit der erfindungsgemäßen Klebstoffzusammensetzung beispielsweise Klebstoffe für Etiketten, welche beim Klebprozess beschichtet werden, erhalten werden, insbesondere zur Etikettierung von PET-Flaschen.

Darüber hinaus ist auch die Verklebung von Trittschalldämmmaterialien unter Laminatböden bzw. Parkettböden möglich. Weiterhin kann das erfindungsgemäße Klebstoffsystem bzw. die erfindungsgemäße Klebstoffzusammensetzung als Montagehilfe zur Befestigung im Fahrzeugbau, insbesondere beispielsweise zur Befestigung von Schalldämmmatten in Automobilkarosserien, verwendet werden.

Gleichfalls ist die erfindungsgemäße Klebstoffzusammensetzung geeignet für Montageklebungen im Baubereich, z. B. für klebstoffbeschichtete Dämmstoffschaumplatten oder beschichtete Haltevorrichtungen für Fußbodenheizungsrohre.

Weiterhin eignet sich die erfindungsgemäße Klebstoffzusammensetzung auch für Anwendungen, welche traditionell auf Haftklebstoffen beruhen, wie beispielsweise der Herstellung von konfektionierten Klebeetiketten und -bändern, wie Klebebändern für den Haushalts- und Officebereich, sowie Selbstklebeetiketten für die industrielle Verarbeitung.

Durch den Einsatz nachwachsender Rohstoffe werden knappe Ressourcen wie Rohöl geschont. Gerade der Einsatz sehr kurzlebiger Produkte, deren Rohstoffbasis fossiler Natur ist, führt im Vergleich zu langfristig verwendeten Materialen zu einem beschleunigten CO₂-Ausstoß. Dies wird durch den Einsatz nachwachsender Rohstoffe vermindert. Außer Produkten, in denen Naturkautschuke als Klebemassen eingesetzt werden, gibt es bislang keine Haftschmelzklebstoffe auf Basis nachwachsender Rohstoffe.

Durch die erfindungsgemäße Klebstoffzusammensetzung auf Basis nachwachsender Rohstoffe wird es insbesondere auch möglich, durch Verwendung von Kunststoffen auf Basis nachwachsender Rohstoffe, wie beispielsweise Folien auf Basis von Polylactiden, insgesamt Produkte auf Basis nachwachsender Rohstoffe zur Verfügung zu stellen. Diese können darüber hinaus auch biologisch abbaubar ausgebildet sein.

Was die Aufbringung der erfindungsgemäßen Klebstoffzusammensetzung auf Substrate anbelangt, so kann diese auf vielfältige Art erfolgen. So kann die erfindungsgemäße Klebstoffzusammensetzung beispielsweise mittels Sprühen, Rakeln, Walzen, Kalandern, Druckverfahren, insbesondere Flexodruckverfahren und/oder Siebdruckverfahren, bzw. Extrusion auf das oder die Substrate aufgebracht werden.

Eine besonders gute Verarbeitbarkeit und gleichmäßige Auftragung in definierten Schichtdicken der erfindungsgemäßen Klebstoffzusammensetzung ist insbesondere dann möglich, wenn die erfindungsgemäße Klebstoffzusammensetzung eine Schmelzhaftklebstoffzusammensetzung ist. Die erfindungsgemäße Klebstoffzusammensetzung wird somit vorteilhafterweise vor der Aufbringung auf das Substrat auf Temperaturen erwärmt, welche oberhalb der Temperatur des eigentlichen Fügevorgangs, der sogenannten Verarbeitungstemperatur, liegen. Durch die Erwärmung der erfindungsgemäßen Schmelzhaftklebstoffzusammensetzung vor der Aufbringung auf das Substrat kann die Viskosität der erfindungsgemäßen Klebstoffzusammensetzung gezielt eingestellt werden, insbesondere genau auf das jeweilige Auftragungsverfahren abgestimmt werden.

Im Rahmen der vorliegenden Erfindung werden besonders gute Ergebnisse erhalten, wenn die Klebstoffzusammensetzung eine Brookfield-Viskosität bei 140 °C im Bereich von 10 bis 100.000 mPa s, insbesondere 20 bis 80.000 mPa s, vorzugsweise 50 bis 60.000 mPa·s, ganz besonders bevorzugt 50 bis 50.000 mPa.s aufweist. Die erfindungsgemäße Klebstoffzusammensetzung eignet sich somit in hervorragender Weise zur Aufbringung aus der Schmelze, wobei sie in diesem Fall über eine Vielzahl von Aufbringungsmöglichkeiten aufgebracht werden kann.

Ein großer Vorteil der erfindungsgemäßen Klebstoffzusammensetzung ist, dass sie auf Basis nachwachsender Rohstoffe ausgebildet ist, wodurch eine besonders nachhaltige Produktion möglich ist.

Bei nachwachsenden Rohstoffen handelt es sich um Rohstoffe auf organischer Basis - zumeist pflanzlicher, tierischer oder biogener Herkunft - die für Anwendungszwecke außerhalb des Nahrungs- und Futtermittelbereichs verwendet werden, insbesondere energetisch oder stofflich genutzt werden. Unter der energetischen Nutzung wird üblicherweise die Energiegewinnung aus nachwachsenden Rohstoffen, wie beispielsweise die Verbrennung von Biogas, verstanden. Bei der stofflichen Nutzung werden die nachwachsenden Rohstoffe beispielsweise zu chemischen Grundstoffen, Kunststoffen, Faserstoffen, aber auch Textilien und Baustoffen verarbeitet. Da nachwachsende Rohstoffe zumeist aus land- bzw. forstwirtschaftlicher Produktion stammen, geht ihr Einsatz im Allgemeinen mit einer guten Kohlendioxid- bzw. Umweltbilanz einher und ermöglicht somit eine besonders nachhaltige Produktion. Aus diesem Grund wird in zunehmendem Maße versucht, konventionelle Werkstoffe, insbesondere wenn sie auf petrochemischen Erzeugnissen basieren, durch Werkstoffe auf Basis nachwachsender Rohstoffe zu ersetzen.

Im Hinblick auf den Anteil an nachwachsenden Rohstoffen, ist es vorzugsweise vorgesehen, dass der Anteil an Komponenten auf Basis nachwachsender Rohstoffe in der Klebstoffzusammensetzung mindestens 30 Gew.-%, insbesondere mindestens 40 Gew.-%, vorzugsweise mindestens 50 Gew.-%, bevorzugt mindestens 60 Gew.-%, besonders bevorzugt mindestens 70 Gew.-%, ganz besonders bevorzugt mindestens 75 Gew.-%, bezogen auf das Gesamtgewicht der Klebstoffzusammensetzung, beträgt.

Im Rahmen der vorliegenden Erfindung ist es insbesondere möglich, Klebstoffzusammensetzungen bereitzustellen, welche Komponenten auf Basis nachwachsender Rohstoffe in Mengen von 30 bis 100 Gew.-%, insbesondere 40 bis 99,9 Gew. %, vorzugsweise 50 bis 99,8 Gew.-%, bevorzugt 60 bis 99,7 Gew.-%, besonders bevorzugt 70 bis 99,6 Gew.-%, ganz besonders bevorzugt 75 bis 99,5 Gew. %, bezogen auf das Gesamtgewicht der Klebstoffzusammensetzung, enthält.

Im Rahmen der vorliegenden Erfindung wird es - um ein insgesamt besonders nachhaltiges Produkt zu erhalten - bevorzugt, wenn der Gesamtanteil an Komponenten auf Basis nachwachsender Rohstoffe in der erfindungsgemäßen Klebstoffzusammensetzung besonders hoch ist. Dies bedeutet, dass nicht nur das Basis- bzw. Rückgratpolymer auf Basis von Polymilchsäuren bzw. Polylactiden auf nachwachsenden Rohstoffen basiert, sondern vorzugsweise auch die weiteren Inhaltsstoffe, wie beispielsweise Harze, Wachse, Plastifizierungsmittel (Weichmacher) und gegebenenfalls weitere vorhandene Zusatzstoffe bzw. Additive.

Was die Mengen der einzelnen Komponenten in der erfindungsgemäßen Klebstoffzusammensetzung anbelangt, so können diese in weiten Bereichen variieren.

Besonders gute Ergebnisse werden im Rahmen der vorliegenden Erfindung erhalten, wenn die Klebstoffzusammensetzung das Polymer (a) auf Basis von Milchsäure in Mengen von 10 bis 60 Gew.-%, bevorzugt 12,5 bis 55 Gew.-%, besonders bevorzugt 15 bis 50 Gew.-%, ganz besonders bevorzugt 17,5 bis 45 Gew.-%, bezogen auf die Klebstoffzusammensetzung, enthält.

Insbesondere in vorgenannten Mengen verleiht das erfindungsgemäß eingesetzte Polymer auf Basis von Polymilchsäuren der erfindungsgemäßen Klebstoffzusammensetzung als Basis- bzw. Rückgratpolymer die notwendige innere Festigkeit bzw. Kohäsion, welche für einen nutzbaren Klebstoff ausreichend groß sein muss. Überraschenderweise ist es im Rahmen der vorliegenden Erfindung erstmals gelungen, ein Basis- bzw. Rückgratpolymer auf Basis von Milchsäure bereitzustellen, obwohl Polymilchsäuren bzw. Polylactide besonders spröde Kunststoffe sind, welche der Fachmann nicht unmittelbar mit Haftklebstoffen assoziiert.

Gemäß der vorliegenden Erfindung enthält die erfindungsgemäße Klebstoffzusammensetzung das Harz in Mengen von 10 bis 60 Gew.-%, vorzugsweise 15 bis 55 Gew.-%, bevorzugt 17,5 bis 50 Gew.-%, besonders bevorzugt 20 bis 45 Gew.-%. Bei den erfindungsgemäß eingesetzten Harzen handelt es sich üblicherweise um Klebrigmacher - auch Tackifier genannt - welche der erfindungsgemäßen Klebstoffzusammensetzung eine permanente Oberflächen-Klebrigkeit, den sogenannten Tack, verleihen. Sie verfügen über eine hohe Adhäsion, jedoch nur über eine geringe Kohäsion, so dass Haftklebstoffe im Allgemeinen nicht allein auf Basis von Harzen bzw. Wachsen hergestellt werden können.

Die erfindungsgemäße Klebstoffzusammensetzung weist zudem ein Plastifizierungsmittel bzw. einen Weichmacher auf, wobei es im Rahmen der vorliegenden Erfindung vorgesehen ist, dass die erfindungsgemäße Klebstoffzusammensetzung das Plastifizierungsmittel bzw. den Weichmacher in Mengen von 2 bis 60 Gew.-%, vorzugsweise 3 bis 50 Gew.-%, bevorzugt 4 bis 40 Gew.-%, besonders bevorzugt 5 bis 35 Gew.-% enthält. Plastifizierungsmittel bzw. Weichmacher erlauben eine genaue Einstellung des rheologischen Profils der erfindungsgemäßen Klebstoffzusammensetzung und erhöhen darüber hinaus die Kompatibilität von Basis- bzw. Rückgratpolymer zu Harz- und Wachsbestandteilen. Die Weichmacher erlauben somit eine genaue Einstellung der rheologischen Eigenschaften, insbesondere der Viskosität, der erfindungsgemäßen Klebstoffzusammensetzung beim Auftrag, insbesondere aus der Schmelze sowie im Verarbeitungszustand.

Im Rahmen der vorliegenden Erfindung weist die erfindungsgemäße Klebstoffzusammensetzung sowohl mindestens ein Harz als auch mindestens ein Plastifizierungsmittel bzw. einen Weichmacher auf, da auf diese Weise die physikalischen Eigenschaften der erfindungsgemäßen Klebstoffzusammensetzung gezielt eingestellt werden können.

Wenn die erfindungsgemäße Klebstoffzusammensetzung ein Wachs enthält, so ist es im Allgemeinen vorgesehen, dass die Klebstoffzusammensetzung das Wachs in Mengen von 0,1 bis 50 Gew.-%, vorzugsweise 0,5 bis 30 Gew.-%, bevorzugt 0,5 bis 20 Gew.-%, besonders bevorzugt 1 bis 10 Gew.-%, bezogen auf die Zusammensetzung enthält.

Was nun das erfindungsgemäß eingesetzte Polymer (a) auf Basis von Polymilchsäure in der erfindungsgemäßen Klebstoffzusammensetzung anbelangt, so enthält das Polymer (a) auf Basis von Polymilchsäure L-Milchsäure- und/oder D-Milchsäureeinheiten. Unter Milchsäureeinheiten soll dabei im Rahmen der vorliegenden Erfindung verstanden werden, dass die Polymilchsäuren auf Basis von L-Milchsäuremonomeren bzw. D-Milchsäuremonomeren gebildet sind bzw. durch deren Polymerisation gebildet sind. Wie die einzelnen Milchsäuremonomere dabei polymerisiert sind, beispielsweise als statistische Polymere oder Block(co)polymere, ist dabei von untergeordneter Bedeutung und von den beabsichtigten Anwendungseigenschaften der Klebstoffzusammensetzung abhängig.

In diesem Zusammenhang ist es erfindungsgemäß vorgesehen, dass das Polymer (a) ein Verhältnis von L-Milchsäureeinheiten zu D-Milchsäureeinheiten im Bereich von 85 : 15 bis 60 : 40 aufweist. Es hat sich gezeigt, dass in den vorgenannten Mengenbereichen das Polymer (a) eine verbesserte Viskosität sowie Zähigkeit und Eigenklebrigkeit aufweist, insbesondere im Vergleich zu reiner Poly-L-Milchsäure.

Was nun die Beschaffenheit des erfindungsgemäß eingesetzten Polymers (a) weiterhin anbelangt, so weist das Polymer (a) Abschnitte und/oder Segmente aus Milchsäureeinheiten auf. Im Rahmen der vorliegenden Erfindung kann es somit vorgesehen sein, dass das erfindungsgemäße Polymer ausschließlich aus Milchsäureeinheiten, d. h. Polymilchsäuren bzw. Lactiden besteht. Es ist jedoch gleichfalls möglich und oftmals bevorzugt, wenn das Polymer (a) nur Segmente bzw. Abschnitte mit Milchsäureeinheiten aufweist, welche über andere Polymere oder niedermolekulare Verbindungen, beispielsweise Monomere, verbunden oder durch solche modifiziert sind.

Was nun die Herstellung der einzelnen Segmente bzw. Abschnitte aus Milchsäureeinheiten, d. h. Polymilchsäuren bzw. Polylactiden anbelangt, so können generell alle im Stand der Technik bekannten Methoden und Verfahren eingesetzt werden. So ist es beispielsweise möglich, geeignete Polymilchsäuren durch Kondensation von Mischungen aus L-Milchsäure und D-Milchsäure in den jeweiligen molaren Verhältnissen zu erhalten, wobei durch eine Polymerisation bzw. Kondensation in Gegenwart von Katalysatoren üblicherweise größere Molekulargewichte erhalten werden können.

Es kann eine Vielzahl von Katalysatoren zur Herstellung der erfindungsgemäß eingesetzten Basis- bzw. Rückgratpolymere verwendet werden. So können beispielsweise Titan(IV)-isopropylat (Ti(iOPr)₄), Titan(IV)-butylat (Ti(OBu)₄), Zinkchlorid (ZnCl₂), Zinkacetylacetonat (Zn(acac)₂), Kupferacetylacetonat (Cu(acac)₂), Eisenacetylacetonat (Fe(acac)₃), Zirkoniumacetylacetonat (Zr(acac)₄) sowie organische Verbindungen wie Phosphorsäure (H₃PO₄), Schwefelsäure (H₂SO₄), Bernsteinsäureanhydrid (BSA) und Guanidincarbonat (Gu₂CO₃) als Katalysatoren verwendet werden. Als Katalysatoren eignen sich insbesondere Zink-, Zirkonium-, Titan-, und Zinn(II)-organische Verbindungen, insbesondere Zinkacetylacetonat, Zirkoniumacetylacetonat, Titanbutylat, Titanisopropylat sowie Zinn(II)-ethylhexanoat. Zinn(II)-Katalysatoren weisen eine sehr hohe katalytische Aktivität auf und sind in organischen Lösungsmitteln gut löslich. Sie sind jedoch cytotoxisch und schwer aus den resultierenden Polymeren zu entfernen. Da für viele Anwendungen der Basis- bzw. Rückgratpolymeren die Freigabe für den direkten Lebensmittelkontakt gefordert wird, können zinnbasierte Katalysatoren für diese Zwecke nicht eingesetzt werden.

Was die Menge an Katalysator in der Reaktionsmischung anbelangt, so kann diese in weiten Bereichen variieren. Es wird jedoch bevorzugt, wenn der oder die Katalysator(en) in Mengen von 0,05 bis 5 Gew.-%, insbesondere 0,1 bis 3 Gew.-%, vorzugsweise 0,15 bis 2 Gew.-%, bevorzugt 0,2 bis zu 1,0 Gew.-%, bezogen auf die Menge eingesetzter Milchsäure bzw. eingesetzter Polymilchsäure, verwendet wird oder werden.

Eine weitere Möglichkeit, das erfindungsgemäß eingesetzte Polymer (a) bzw. die Milchsäuresegmente und/oder Abschnitte aus Milchsäureeinheiten herzustellen ist, eine entsprechende Mischung aus L-Milchsäure und D-Milchsäure zu polymerisieren und anschließend die erhaltenen Polymere durch Einsatz eines Katalysators nachzukondensieren, wodurch eine Kettenverlängerung erzielt wird.

Im Rahmen der vorliegenden Erfindung ist es vorgesehen, dass die einzelnen Abschnitte und/oder Segmente aus Milchsäureeinheiten eine zahlenmittlere Molmasse Mₙ im Bereich von 400 bis 8.000 g/mol, vorzugsweise 500 bis 7.000 g/mol, bevorzugt 600 bis 6.000 g/mol, besonders bevorzugt 700 bis 5.000 g/mol, ganz besonders bevorzugt 750 bis 4.000 g/mol, bestimmt mittels GPC gemäß Punkt 1 der Ausführungsbeispiele, aufweisen.

Die im Rahmen dieser Erfindung angegebenen Molmassen für polymere Verbindungen beziehen sich entweder auf die zahlenmittlere Molmasse Mₙ oder die gewichtsmittlere Molmasse M_{w}. Bei der zahlenmittleren Molmasse Mₙ wird die Masse der jeweiligen Einzelpolymere mit ihrem Zahlenanteil gewichtet, wohingegen bei der gewichtsmittleren Molmasse M_{w} die Masse der einzelnen polymeren Verbindungen mit ihrem Gewichtsanteil gewichtet wird. Die Molmassen bzw. die Molmassenverteilung kann durch verschiedene, standardisierte Verfahren und Methoden bestimmt werden, wie beispielsweise durch Lichtstreuung, Rheologie, Massenspektrometrie, Permeations-Chromatographie etc. Die zur Bestimmung der Molmassenverteilung verwendeten Verfahren sind dem Fachmann jedoch geläufig und bedürfen keiner näheren Erläuterung. So können die Molekulargewichte der eingesetzten Polymere insbesondere anhand einer GPC-Methode bestimmt werden, insbesondere auf Basis der DIN 55672 mit Polymethylmethacrylat bzw. Polystyrol als Standard.

Gemäß einer bevorzugten Ausführungsform der vorliegenden Erfindung sind im Polymer (a) die Abschnitte und/oder Segmente aus Milchsäureeinheiten über Esterfunktionen und/oder Amidfunktionen, vorzugsweise Esterfunktionen, miteinander verbunden. Die Veresterung bzw. Amidbildung erfolgt in diesem Zusammenhang vorzugsweise unter Einsatz von Katalysatoren, insbesondere unter Einsatz der zuvor genannten Katalysatoren.

Im Rahmen der vorliegenden Erfindung hat es sich dabei bewährt, wenn die Esterfunktionen und/oder die Amidfunktionen durch Umsetzung oligomerer Milchsäure mit und/oder durch Polymerisation von Milchsäure in Gegenwart von Alkoholen und/oder Aminen, insbesondere Polyolen und/oder Polyaminen, vorzugsweise Alkoholen, insbesondere Polyolen, erhalten werden. Durch die Reaktion der Säuregruppen mit den Alkoholen oder Aminen werden Milchsäurepolymere erhalten, welche durch die Beta-Hydroxyfunktionen der Milchsäure terminiert werden. Diese Hydroxyfunktionen können beispielsweise in nachfolgenden Reaktionsschritten weiter funktionalisiert werden. Es ist jedoch auch möglich, die durch Umsetzung mit Polyolen bzw. Polyaminen erhältlichen Polymilchsäuren als Rückgratpolymer einzusetzen.

In diesem Zusammenhang kann es vorgesehen sein, dass die Amine, insbesondere Polyamine, ausgewählt sind aus der Gruppe von C₂-C₁₀₀-Tetraminen, C₂-C₁₀₀-Triaminen, C₂-C₁₀₀-Diaminen, insbesondere C₂-C₅₀-Tetraminen, C₂-C₅₀-Triaminen, C₂-C₅₀-Diaminen, vorzugsweise C₂-C₂₀-Tetraminen, C₂-C₂₀-Triaminen, C₂-C₂₀-Diaminen, bevorzugt C₂-C₁₀-Tetraminen, C₂-C₁₀-Triaminen, C₂-C₁₀-Diaminen, und deren Mischungen. Die Amingruppen können dabei wahlweise endständig angeordnet sein oder sich in einer beliebigen anderen Stelle der Moleküle befinden, solange sie einer Reaktion zugänglich sind.

Besonders gute Ergebnisse werden im Rahmen der vorliegenden Erfindung erhalten, wenn die Alkohole, insbesondere Polyole, ausgewählt sind aus der Gruppe von Polyethylenglykolen (PEG), insbesondere mit einem gewichtsmittleren Molekulargewicht M_{w} im Bereich von 100 bis 2.000 g/mol, vorzugsweise 500 bis 1.000 g/mol, Polypropylenglykolen, insbesondere mit einem mittleren Molekulargewicht M_{w} im Bereich von 200 bis 2.000 g/mol, vorzugsweise 500 bis 1.000 g/mol, Trimethylolpropan (TMP), Pentaerythrit (Penta), Dipentaerythrit (Dipenta), Sorbitol, C₂-C₁₀₀-Tetraolen, C₂₋-C₁₀₀-Triolen und C₂-C₁₀₀-Diolen, insbesondere C₂-C₅₀-Tetraolen, C₂-C₅₀-Triolen und C₂-C₅₀-Diolen, vorzugsweise C₂-C₂₀-Tetraolen, C₂-C₂₀-Triolen und C₂-C₂₀-Diolen, bevorzugt C₂-C₁₀-Tetraolen, C₂-C₁₀- Triolen und C₂-C₁₀-Diolen, sowie deren Mischungen. Insbesondere durch die Lage der Hydroxyfunktionen in den Polyalkoholen sowie deren Anzahl kann ein spezifischer Verzweigungsgrad des erfindungsgemäß eingesetzten Polymers (a) eingestellt werden.

Die besonderen Eigenschaften von PEG, wie die Löslichkeit in Wasser und polaren Lösungsmitteln sowie die Unlöslichkeit in unpolaren Lösungsmitteln, eine hohe Beweglichkeit und FDA-Zulassung machen sie zu einem geeigneten Reaktionspartner für die Herstellung von Blockcopolymeren aus Milchsäure. Die Copolymere aus Milchsäure und PEG sind hydrophiler, flexibler und biologisch besser abbaubar als reine Polymilchsäure. Durch den Einbau von PEG in das PLA können die Wasserlöslichkeit der erhaltenen Blockcopolymere und das Molekulargewicht beeinflusst werden. Polymere mit niedrigem Molekulargewicht oder kürzerer PLLA-Blöcken sind in Wasser löslich, während Copolymere mit hohem Molekulargewicht und Copolymere mit längeren PLLA-Blöcken physikalisch vernetzte Hydrogele bilden (vgl. K. M. Huh und Y. H. Bae "Synthesis and characterization of poly(ethylene glycol)/poly(L-lactic acid) alternating multiblock copolymers" Polymer, 1999, 40, (22), 6147-6155). Durch Polykondensation von PLA-Diolen und PEG-Disäuren werden Multiblockcopolymere mit besonderen Eigenschaften wie erhöhter Mischbarkeit der beiden Komponenten, niedriger Kristallinität und erhöhter Hydrophilie erhalten (vgl. W. J. Luo, S. M. Li, J. Z. Bei und S. G. Wang "Poly(L-lactide)-Poly(ethylene glycol) Multiblock Copolymers: Synthesis and Properties" Chinese Chemical Letters 2002, 13, (1), 33 - 36).

Besonders gute Ergebnisse werden im Rahmen der vorliegenden Erfindung erhalten, wenn die Alkohole Diole sind, insbesondere ausgewählt aus linearen und/oder verzweigten, insbesondere linearen, C₂-C₂₀-Diolen, insbesondere C₂-C₁₀-Diolen, bevorzugt C₂-C₈-Diolen, vorzugsweise C₅-C₈-Diolen.

In diesem Zusammenhang kann es weiterhin vorgesehen sein, dass die Diole eine oder zwei, vorzugsweise eine, terminale Hydroxyfunktion aufweisen und/oder dass die Diole vicinale Hydroxyfunktionen aufweisen. So werden beispielsweise im Rahmen der vorliegenden Erfindung gute Ergebnisse erhalten, wenn 1,4-Butandiol oder 1,2-Hexandiol als Diole eingesetzt werden, wobei es sich gezeigt hat, dass der Einsatz vicinaler Diole, wie 1,2-Hexandiol, zu Polymeren (a) führt, welche besonders gute Eigenschaften als Basis- bzw. Rückgratpolymer besitzen.

Im Rahmen der vorliegenden Erfindung kann es weiterhin vorgesehen, dass das Polymer (a) durch Hydroxyfunktionen und/oder durch Carbonsäurefunktionen terminiert ist.

Hydroxyterminierte Polymere (a) werden beispielsweise erhalten, indem Polymilchsäuren mit Polyolen, insbesondere Diolen, umgesetzt werden oder indem monomere Milchsäure, insbesondere in einem spezifischen, vorher ausgewählten Verhältnis von L-Milchsäure zu D-Milchsäure, in Gegenwart von Polyolen, insbesondere Diolen polymerisiert wird. Carbonsäureterminierte Polymere (a) werden beispielsweise erhalten, indem hydroxyterminierte Polymere (a) mit Carbonsäureanhydriden, wie beispielsweise Bernsteinsäureanhydrid, umgesetzt werden. Gleichfalls ist es jedoch auch möglich, carbonsäureterminierte Polymere (a) zu erhalten, indem monomere Milchsäure, insbesondere in einem vorher festgelegten Verhältnis von L-Milchsäure zu D-Milchsäure, in Gegenwart von Carbonsäureanhydriden polymerisiert wird.

Die auf diese Weise erhaltenen hydroxy- bzw. carbonsäureterminierten Polymere können unmittelbar als Basis- bzw. Rückgratpolymer in der erfindungsgemäßen Klebstoffzusammensetzung eingesetzt werden, es ist jedoch auch möglich, diese Polymere weiter umzusetzen bzw. zu modifizieren.

Oftmals ist eine Erhöhung der Molmassen von niedermolekularen Oligomeren und Polymeren der Milchsäure erforderlich oder gewünscht. Diese kann mittels verschiedener Verfahren erreicht werden. So kann beispielsweise eine Erhöhung der Molmassen durch eine Transesterifikation bzw. Umesterung erfolgen. Auch eine Umsetzung mit Diisocyanaten kann zu einer Kettenverlängerung und somit zu höheren Molmassen führen. Es wird hinsichtlich der Monomerverteilung zwischen statistischen und nichtstatistischen Copolymeren unterschieden. Statistische Copolymere sind durch eine zufällige Anordnung der Monomere in der Polymerkette charakterisiert. Nichtstatistisch verteilte Copolymere oder Blockcopolymere sind durch geordnete Bereiche von Monomereinheiten in der Polymerkette gekennzeichnet. Die Eigenschaften statistischer Copolymere werden vor allem durch die Zusammensetzung der Comonomere, insbesondere im Hinblick auf Struktur und Konzentration, und durch die Molmassen bestimmt.

Was die weitere Funktionalisierung bzw. Umsetzung von Polymeren mit Milchsäureeinheiten anbelangt, so kann diese auf vielfältige Weise erfolgen. Erfindungsgemäß weist das Polymer (a) im Anschluss an die Abschnitte und/oder Segmente aus Milchsäureeinheiten zur Kettenverlängerung Modifizierungen durch chemische Gruppen auf. Durch die weitere chemische Modifizierung der milchsäurehaltigen Polymere können deren Eigenschaften als Basis- bzw. Rückgratpolymer in Haftklebstoffzusammensetzungen für verschiedenste Anwendungen individuell eingestellt werden.

Im Rahmen der vorliegenden Erfindung weist das Polymer (a) chemische Modifizierungen durch chemische Gruppen, auf Basis chemischer Gruppen und/oder Einheiten und/oder Segmente auf, ausgewählt aus
(i) Polyethern, Polyestern, Polyamiden und/oder
(ii) Urethanen, Polyurethanen und/oder
(iii) Polyacrylaten, Polymethacrylaten, Polystyrolen, Acryl/Styrol-Copolymeren, Styrol-Copolymeren, Polyvinylacetaten, Polyolefinen, insbesondere ataktischem Polypropylen,
sowie deren Mischungen und Co- und Terpolymeren. Die Modifizierung mit chemischen Gruppen bzw. Polymeren kann durch Reaktion der einzuführenden Verbindungen bzw. des Polymers mit dem vorhandenen milchsäurehaltigen Polymergrundgerüst erfolgen, sie kann jedoch auch durch den Aufbau einer weiteren Polymereinheit an dem milchsäurehaltigen Polymergrundgerüst erreicht werden.

Falls das erfindungsgemäße Polymer (a) chemische Modifizierungen durch Polyether, Polyester, Polyamide sowie deren Mischungen und/oder deren Co- und Terpolymere aufweist, so hat es sich als vorteilhaft erwiesen, wenn diese ein gewichtsmittleres Molekulargewicht M_{w} im Bereich von 200 bis 10.000 g/mol, insbesondere 300 bis 9.000 g/mol, vorzugsweise 400 bis 8.000 g/mol, bevorzugt 500 bis 7.000 g/mol, besonders bevorzugt 750 bis 6.500 g/mol, ganz besonderes bevorzugt 1.000 bis 6.000 g/mol, **bestimmt mittels GPC gemäß Punkt 1 der Ausführungsbeispiele,** aufweisen. Eine Modifizierung mit Polymeren im genannten Molekulargewichtsbereich führt zu Basis- bzw. Rückgratpolymeren (a) mit besonders vorteilhaften Eigenschaften.

Falls das erfindungsgemäß eingesetzte Polymer (a) eine chemische Modifizierung durch Urethane und/oder Polyurethane aufweist, so hat es sich in diesem Fall als vorteilhaft erwiesen, wenn diese ein gewichtsmittleres Molekulargewicht M_{w} im Bereich von 150 bis 10.000 g/mol, insbesondere 200 bis 8.000 g/mol, vorzugsweise 250 bis 7.000 g/mol, bevorzugt 500 bis 5.000 g/mol, besonders bevorzugt 750 bis 3.000 g/mol, ganz besonderes bevorzugt 1.000 bis 2.000 g/mol, **bestimmt mittels GPC gemäß Punkt 1 der Ausführungsbeispiele,** aufweisen. Hierbei kann es insbesondere für den Fall, dass Diisocyanate als Modifizierungsmittel zur Herstellung der Urethane eingesetzt werden, möglich sein, dass diese ein Molekulargewicht im Bereich von 150 bis 1.000 g/mol, insbesondere 150 bis 750 g/mol, vorzugsweise 150 bis 500 g/mol, bevorzugt 150 bis 300 g/mol, aufweisen. Eine Modifizierung mit Urethangruppen kann beispielsweise durch Umsetzung von hydroxyterminierten milchsäurehaltigen Polymeren mit monomeren Diisocyanaten erfolgen, wodurch die milchsäurehaltigen hydroxyterminierten Polymere über Urethangruppen gekoppelt werden, wodurch eine Erhöhung des Molekulargewichts und eine Kettenverlängerung erreicht werden.

Für den Fall, dass das erfindungsgemäß eingesetzte Polymer (a) Polyacrylate, Polymethacrylate, Polystyrole, Acryl/Styrol-Copolymere, Polyvinylacetate sowie deren Mischungen und/oder deren Co- und Terpolymere aufweist, werden besonders gute Ergebnisse erhalten, wenn diese ein gewichtsmittleres Molekulargewicht M_{w} im Bereich von 200 bis 20.000 g/mol, insbesondere 500 bis 15.000 g/mol, vorzugsweise 750 bis 10.000 g/mol, bevorzugt 1.000 bis 9.000 g/mol, besonders bevorzugt 2.500 bis 8.000 g/mol, ganz besonderes bevorzugt 5.000 bis 7.000 g/mol, **bestimmt mittels GPC gemäß Punkt 1 der Ausführungsbeispiele,** aufweisen. Die vorgenannten Polymere können über eine Vielzahl von chemischen Funktionalitäten an das milchsäurehaltige Polymergrundgerüst gebunden sein, insbesondere durch Reaktion von Epoxyfunktionen.

Was die vorgenannten chemischen Modifizierungen bzw. Polymere anbelangt, so können deren Eigenschaften und molekularer Aufbau in weiten Bereichen variieren, wodurch für den jeweiligen Anwendungszweck speziell zugeschnittene Basis- bzw. Rückgratpolymere erhältlich sind.

Wenn das Polymer (a) jedoch eine chemische Modifizierung durch Polyether aufweist, so werden im Rahmen der vorliegenden Erfindung besonders gute Ergebnisse erhalten, wenn die Polyether ausgewählt sind aus Polyglykolen, insbesondere Polyethylenglykol und Polypropylenglykol.

Weist das Polymer (a) hingegen Polyestereinheiten auf, so werden besonders gute Ergebnisse erhalten, wenn die Polyester ausgewählt sind aus Polyethylenterephthalat, Polybutylenterephthalat, Polycarbonat, Polyethylennaphthalat und deren Mischungen sowie deren Co- und Terpolymeren.

Werden Polyamide als chemische Modifizierung für das Polymer (a) gewählt, so hat es sich bewährt, wenn die Polyamide ausgewählt sind aus der Gruppe von Polycaprolactam, Poly-*N*,*N*'-hexamethylenadipindiamid, Polyhexamethylensebacamid, Polyhexamethylendodecandiamid, Polyundecanolactam, Polylauryllactam und deren Mischungen sowie deren Co- und Terpolymeren.

Gemäß einer bevorzugten Ausführungsform der vorliegenden Erfindung, sind die Urethane durch Umsetzung von Isocyanaten, insbesondere monomeren Isocyanaten mit Hydroxyfunktionen eines Präpolymers des Polymers (a) erhältlich. Bei diesen Präpolymeren kann es sich beispielsweise um hydroxyterminierte Varianten des Polymers (a) handeln, welche alle aus Milchsäuresegmenten bestehen, welche über Esterfunktionen verbunden sind. In diesem Zusammenhang kann es vorgesehen sein, dass die Isocyanate ausgewählt sind aus der Gruppe von Toluoldiisocyanat (TDI), Diphenylmethandiisocyanat (MDI), polymerem Diphenylmethandiisocyanat (pMDI), Hexamethylendiisocyanat (HMDI), Isophorondiisocyanat (IPDI), 4,4'-Diisocyanatodicyclohexylmethan (H12MDI) und/oder isocyanatterminierten Präpolymeren auf Basis dieser Isocyanate. Alternativ kann es jedoch auch vorgesehen sein, dass Polymere auf Basis von Polyurethanen eingesetzt werden, insbesondere thermoplastische Polyurethane (TPU). Vorzugsweise werden im Rahmen der vorliegenden Erfindung asymmetrische Diisocyanate, wie beispielsweise 2,4'-Diphenylmethandiisocyanat, zur weiteren Polymerisation bzw. Kettenverlängerung des milchsäurehaltigen Polymers (a) eingesetzt.

Im Rahmen der vorliegenden Erfindung weist somit das Polymer (a) im Anschluss an die Abschnitte und/oder Segmente aus Milchsäureeinheiten zur Kettenverlängerung Modifizierungen durch chemische Gruppen, ausgewählt aus Polyethern, Polyestern, Urethanen, Polyurethanen sowie deren Reaktionsprodukten und Co- und Terpolymeren, insbesondere eine Modifizierung mit Polyethern und/oder Urethanen, auf. Mit den vorgenannten chemischen Modifizierungen haben sich bislang besonders universell einsetzbare Basis- bzw. Rückgratpolymere für Haftklebstoffzusammensetzungen herstellen lassen.

Insbesondere werden im Rahmen der vorliegenden Erfindung besonders gute Ergebnisse erhalten, wenn das Polymer (a)
(I) L-Milchsäure- und/oder D-Milchsäureeinheiten, vorzugsweise L-Milchsäure- und D-Milchsäureeinheiten, und/oder
(II) terminale Hydroxy- und/oder Carbonsäurefunktionen und/oder Carbonsäureester und/oder Carbonsäureamide und/oder
(III) Polyethergruppen und/oder -einheiten und/oder
(IV) Urethangruppen und/oder -einheiten und/oder Polyurethangruppen und/oder -einheiten und/oder
(V) Polyacrylatgruppen und/oder -einheiten
aufweist.

Gemäß einer bevorzugten Ausführungsform der vorliegenden Erfindung weist das Polymer (a) eine Modifizierung mit Urethangruppen auf, wobei besonders gute Ergebnisse erhalten werden, wenn das Polymer (a) ein Polyesterurethan ist. Für weitere bevorzugte Möglichkeiten zur Darstellung von für die erfindungsgemäße Klebstoffzusammensetzung geeigneten Polyesterurethanen wird auf die zeitgleich eingereichte deutsche Patentanmeldung der Fraunhofer Gesellschaft zur Förderung der angewandten Forschung e.V., München, Deutschland, und der Westfälischen Hochschule, Gelsenkirchen, Bocholt, Recklinghausen, Deutschland, verwiesen.

Was das Molekulargewicht des Polymers (a) anbelangt, so kann dieses in weiten Bereichen variieren. Erfindungsgemäß weist das Polymer (a) eine gewichtsmittlere Molmasse M_{w} im Bereich von 1.000 bis 80.000 g/mol, besonders bevorzugt 5.000 bis 75.000 g/mol, ganz besonders bevorzugt 10.000 bis 70.000 g/mol, **bestimmt mittels GPC gemäß Punkt 1 der Ausführungsbeispiele,** auf. Polymere (a) mit den vorgenannten Molekulargewichten eignen sich in besonderer Art und Weise als Basis- bzw. Rückgratpolymere für Haftklebstoffzusammensetzungen, da sie geeignet sind, der Klebstoffzusammensetzung die nötige innere Festigkeit bzw. Kohäsion zu verleihen.

Was gleichfalls die Polydispersität der erfindungsgemäß eingesetzten Polymere (a) anbelangt, so kann auch diese in weiten Bereichen variieren. Besonders gute Ergebnisse werden erfindungsgemäß erhalten, wenn das Polymer (a) eine Polydispersität M_{w}/Mₙ im Bereich von 1,5 bis 7, bevorzugt 1,7 bis 6, besonders bevorzugt 1,9 bis 5,5, ganz besonders bevorzugt 1,9 bis 5, aufweist. Es hat sich gezeigt, dass besonders leistungsfähige Basis- bzw. Rückgratpolymere insbesondere dann erhalten werden, wenn die Polydispersität des Polymers besonders hoch ist. Folglich werden im Rahmen der vorliegenden Erfindung bevorzugt Polymere (a) mit einer besonders breiten Molmassenverteilung eingesetzt. Diese Moleküle sind insbesondere in der Lage, sowohl eine gewisse Eigenklebrigkeit sowie Zähigkeit bereitzustellen und darüber hinaus der resultierenden Klebstoffzusammensetzung die notwendige Kohäsion zu verleihen.

Wie zuvor ausgeführt, weist die erfindungsgemäße Klebstoffzusammensetzung mindestens ein Harz auf. In diesem Zusammenhang hat es sich bewährt, wenn das Harz aus der Gruppe von Kohlenwasserstoffharzen, insbesondere aliphatischen, cyclischen oder cycloaliphatischen Kohlenwasserstoffharzen, gegebenenfalls modifizierten Kolophoniumharzen, Terpenharzen, Terpenphenolharzen, Polyesterpolyolharzen, Polyurethanharzen, Cumaron-Indenharzen, α-Methylstyrolharzen, Tallharzen, polymerisierten Tallharzestern und/oder Ketonaldehydharzen, vorzugsweise Terpenharzen, Polyesterpolyolharzen und/oder Polyurethanharzen, sowie deren Mischungen ausgewählt ist. Die vorgenannten Harze sind mit einer Vielzahl von Basis- bzw. Rückgratpolymeren auf Basis von Milchsäure kompatibel und in weiten Bereichen mischbar, so dass eine große Vielzahl an speziell auf den jeweiligen Anwendungszweck abgestimmten Haftklebstoffzusammensetzungen verfügbar ist.

Wenn die erfindungsgemäße Klebstoffzusammensetzung ein Wachs enthält, so ist dieses vorzugsweise ausgewählt aus Polyolefinwachsen, wie Polyethylen- und Polypropylenwachsen, Wachsen auf Basis nachwachsender Rohstoffe, wie Zuckerrohrwachs und gehärteten Rizinuswachsen, und auf dieser Basis modifizierten Wachsen.

Die erfindungsgemäße Klebstoffzusammensetzung enthält zudem mindestens ein Plastifizierungsmittel (Weichmacher). Erfindungsgemäß können besonders gute Ergebnisse erhalten werden, wenn das Plastifizierungsmittel (Weichmacher) ausgewählt ist aus der Gruppe von Polyglykolen, insbesondere Polyethylenglykol und/oder Polypropylenglykol, Glycerin, Citrat und Citratderivaten, insbesondere Zitronensäureestern, sowie deren Mischungen.

Gemäß einer bevorzugten Ausführungsform der vorliegenden Erfindung weist die erfindungsgemäße Klebstoffzusammensetzung neben den genannten Komponenten außerdem noch mindestens ein Additiv auf.

Bei diesen Additiven kann es um an sich bekannte Zusatzstoffe, wie hochsiedende organische Öle, Ester oder andere der Plastifizierung dienende Additive, Stabilisatoren, insbesondere UV-Stabilisatoren, Antioxidantien, Säurefänger, Füllstoffe, insbesondere nanoteilige oder mikroskalige Füllstoffe, und/oder Alterungsschutzmittel, handeln. Die Additive werden insbesondere eingesetzt, um das Anwendungsprofil der erfindungsgemäßen Klebstoffzusammensetzung abzurunden, insbesondere im Hinblick auf Lagerstabilität sowie die Dauer und Stärke der Verklebungen. Darüber hinaus kann über die Additive auch die Rheologie und somit das Aufbringverhalten der erfindungsgemäßen Klebstoffe gezielt beeinflusst und eingestellt werden.

Insbesondere kann die erfindungsgemäße Klebstoffzusammensetzung Antioxidantien enthalten, um die mit Abbauvorgängen verbundenen Nachteile bei der Verarbeitung und beim Gebrauch der Klebstoffzusammensetzung zu vermeiden oder zumindest zu reduzieren. Je nach Wirkungsmechanismus unterscheidet man primäre (Radikalfänger) und sekundäre (Peroxidzersetzer) Antioxidantien. Zu ersteren gehören sterisch gehinderte Phenole, sekundäre, aromatische Amine, zu den anderen Phosphite, Phosphonite, Thioether, Carbodiimide und Zink-dibutyldithiocarbamat. Aus den unterschiedlichen Wirkungsmechanismen ist der Vorteil des Einsatzes von Mischungen zu erkennen. Aus der Vielzahl der Phosphorverbindungen sind als Stabilisatoren organische Phosphinsäurederivate, Phosphite und Phosphonate von Interesse. Unspezifische thermooxidative und hydrolytische Abbaureaktionen, vorzugsweise bei der Verformung dieser aliphatischen Polyester, werden durch organische Phosphorverbindungen (Thermooxidation) bzw. wasserbindende Additive (Hydrolyse), wie Carbodiimide, aktivierte Säurederivate oder Isocyanate, inhibiert. Zur Inhibierung des Abbaus werden als Antioxidantien, die seit langem bekannten Phosphite bzw. sterisch gehinderten Phenole, eingesetzt.

Was die Mengen anbelangt, in welchen die erfindungsgemäße Klebstoffzusammensetzung das Additiv enthält, so können diese in weiten Bereichen variieren. Im Allgemeinen enthält die Klebstoffzusammensetzung das Additiv in Mengen von 0,01 bis 10 Gew.-%, insbesondere 0,01 bis 8 Gew.-%, vorzugsweise 0,05 bis 7 Gew.-%, bevorzugt 0,05 bis 6 Gew.-%, besonders bevorzugt 0,1 bis 5 Gew.-%.

Was nun die Klebekraft der erfindungsgemäßen Klebstoffzusammensetzung, insbesondere Haftklebstoffzusammensetzung, anbelangt, so kann diese gleicherma-ßen in weiten Bereichen variieren. Insbesondere ist es jedoch im Rahmen der vorliegenden Erfindung möglich, Haftklebstoffzusammensetzungen zusammenzustellen, welche individuell an den jeweiligen Anwendungszweck angepasst sind. Hierbei kann es sich einerseits um die Etikettierung von PET-Flaschen handeln, gleichfalls können jedoch auch semistrukturelle Anwendungen, wie beispielsweise die Anbringung von Dämmplatten zur Außendämmung von Kellern oder als Montagehilfe im Fahrzeugbau vorgesehen sein.

Im Allgemeinen weist die erfindungsgemäße Klebstoffzusammensetzung eine Schälfestigkeit, bestimmt nach FTM 1, im Bereich von 1 bis 50 N/25 mm, insbesondere 2 bis 40 N/25 mm, vorzugsweise 3 bis 35 N/25 mm, bevorzugt 4 bis 30 N/25 mm, besonders bevorzugt 5 bis 25 N/25 mm, auf. Die erfindungsgemäße Klebstoffzusammensetzung weist somit eine Klebekraft auf, welche für eine Vielzahl von Anwendungen geeignet ist.

Weiterhin weist die erfindungsgemäße Klebstoffzusammensetzung im Allgemeinen eine Oberfächenklebrigkeit (Loop Tack), bestimmt nach FTM 9, im Bereich von 1 bis 50 N/25 mm, insbesondere 3 bis 40 N/25 mm, vorzugsweise 4 bis 35 N/25 mm, bevorzugt 5 bis 30 N/25 mm, besonders bevorzugt 6 bis 25 N/25 mm, auf. Die erfindungsgemäße Klebstoffzusammensetzung weist somit auch hervorragende Anfangsklebrigkeiten auf, weshalb sie für eine Vielzahl von Anwendungen geeignet ist.

Im Allgemeinen weist die erfindungsgemäße Klebstoffzusammensetzung eine Wärmestandsfestigkeit (shear adhesion failure temperature; SAFT), bestimmt nach ASTM D4998-07, im Bereich von 30 bis 160 °C, insbesondere 35 bis 150 °C, vorzugsweise 40 bis 140 °C, bevorzugt 50 bis 130 °C, auf.

Weiterer Gegenstand der vorliegenden Erfindung - gemäß einem **zweiten** Aspekt der vorliegenden Erfindung - ist ein Verfahren zum Fügen von mindestens zwei Substraten durch Kleben, wobei eine wie zuvor beschriebene Klebstoffzusammensetzung auf mindestens eines, vorzugsweise eines, der Substrate aufgebracht wird und anschließend die Substrate unterhalb der Temperatur, bei welcher die Klebstoffzusammensetzung aufgebracht wird, gefügt werden. Das erfindungsgemäße Verfahren erlaubt es, Substrate mittels Klebstoffen auf Basis nachwachsender Rohstoffe, insbesondere Haftklebstoffen auf Basis nachwachsender Rohstoffe, zu verkleben, und dies bei vergleichbaren Ergebnissen wie mit petrochemisch basierten Klebstoffen.

Im Rahmen der erfindungsgemäßen Verfahrensführung ist es möglich, dass die Klebstoffzusammensetzung kontinuierlich oder diskontinuierlich auf das Substrat aufgebracht wird. Unter einer kontinuierlichen Aufbringung der Klebstoffzusammensetzung auf das Substrat soll eine gleichmäßige und durchgängige Aufbringung des Klebstoffs verstanden werden. Eine diskontinuierliche Aufbringung der Klebstoffzusammensetzung auf das Substrat ist hingegen beispielsweise eine punkt- oder rasterförmige Auftragung des Klebstoffs.

In diesem Zusammenhang kann es vorgesehen sein, dass das Substrat mit der Klebstoffzusammensetzung beschichtet wird. Eine Beschichtung beinhaltet eine gleichmäßige und zumeist vollflächige Aufbringung des Klebstoffs auf die Fügefläche des Substrats.

Die Beschichtung kann dabei derart erfolgen, dass eine zusammenhängende bzw. durchgängige Klebstoffschicht oder eine unterbrochene bzw. nicht durchgängige Klebstoffschicht erhalten wird. Welche Art der Aufbringung der Klebstoffschicht bevorzugt wird, hängt vom jeweiligen Anwendungsfall ab, wobei jedoch generell eine durchgängige und vollflächige Beschichtung des Substrats bzw. der vorgesehenen Fügeflächen bevorzugt wird, da diese zu einer besseren Kraftübertragung führt.

Das erfindungsgemäße Verfahren ermöglicht es im Allgemeinen, dass die Substrate dauerhaft und/oder reversibel, vorzugsweise dauerhaft, verbunden werden. Die erfindungsgemäße Verfahrensführung in Kombination mit der erfindungsgemäßen Klebstoffzusammensetzung erlaubt eine wahlweise dauerhafte oder reversible, d. h. lösbare, Verklebung der Substrate. Für viele Anwendungen wird jedoch eine dauerhafte Verklebung bevorzugt, da diese mit einer höheren Klebkraft einhergeht.

Was die Temperaturen anbelangt, bei denen die erfindungsgemäße Klebstoffzusammensetzung auf das bzw. die Substrate aufgebracht wird, so kann diese in weiten Bereichen variieren. Im Rahmen der vorliegenden Erfindung hat es sich jedoch als vorteilhaft erwiesen, wenn die Klebstoffzusammensetzung aus der Schmelze aufgebracht wird, insbesondere bei Temperaturen im Bereich von 80 bis 250 °C, insbesondere 90 bis 200 °C, vorzugsweise 100 bis 180 °C.

Die Temperatur, bei welcher die Klebstoffzusammensetzung auf das Substrat aufgebracht wird, entspricht dabei der Verarbeitungstemperatur. Eine Besonderheit des erfindungsgemäßen Verfahrens ist nun darin zu sehen, dass der eigentliche Fügevorgang aufgrund der prinzipiell unendlich offenen Zeit bei Temperaturen unterhalb der Verarbeitungstemperatur erfolgen kann, insbesondere auch bei Raumtemperatur.

Im Rahmen des erfindungsgemäßen Verfahrens wird die erfindungsgemäße Klebstoffzusammensetzung aus der Schmelze bzw. in einem Zustand erniedrigter Viskosität auf das Substrat aufgebracht, wodurch sich eine besonders dünnschichtige und gleichmäßige Auftragung des Klebstoffs auf das Substrat erreichen lässt.

Was die Auftragung der Klebstoffzusammensetzung auf das Substrat bzw. die Substrate im Rahmen der erfindungsgemäßen Verfahrensführung anbelangt, so kann diese durch sämtliche geeignete Mittel erfolgen. Es hat sich jedoch gezeigt, dass besonders gute Ergebnisse erhalten werden, wenn die erfindungsgemäße Klebstoffzusammensetzung mittels Sprühen, Rakeln, Walzen, Kalandern, Druckverfahren, insbesondere mittels Flexodruckverfahren bzw. Siebdruckverfahren, und/oder Extrusion auf das Substrat aufgebracht wird. Durch diese Aufbringverfahren lässt sich eine besonders gleichmäßige und flexibel einstellbare Klebstoffschicht erzielen.

Auch die Menge des auf das Substrat aufgebrachten Klebstoffs kann je nach Anwendungsfall in weiten Bereichen variieren. Es hat sich jedoch auch hier bewährt, wenn die Klebstoffzusammensetzung mit einem Flächengewicht von 5 bis 250 g/m², insbesondere 8 bis 100 g/m², vorzugsweise 10 bis 50 g/m², auf das Substrat aufgebracht wird.

Im Hinblick auf den eigentlichen Fügevorgang wird erfindungsgemäß derart verfahren, dass der Fügevorgang im Allgemeinen unter Druck und/oder Anpressen erfolgt.

In diesem Zusammenhang ist es möglich, dass der Druck bzw. das Anpressen für eine Dauer von 0,001 bis 100 Sekunden, insbesondere 0,002 bis 80 Sekunden, vorzugsweise 0,005 bis 70 Sekunden, bevorzugt 0,008 bis 60 Sekunden, besonders bevorzugt 0,01 bis 50 Sekunden, aufrecht erhalten wird.

Das erfindungsgemäße Verfahren eignet sich zur Verklebung einer Vielzahl unterschiedlicher Materialien. So kann es beispielsweise erfindungsgemäß vorgesehen sein, dass mindestens ein Substrat Holz und/oder Papier aufweist, insbesondere zumindest überwiegend hieraus besteht.

Alternativ oder kumulativ ist es jedoch auch möglich, dass mindestens ein Substrat Kunststoff, Leder und/oder Metall aufweist, insbesondere zumindest überwiegend hieraus besteht.

Gleichfalls ist es jedoch auch möglich, dass mindestens ein Substrat Stein und/oder Beton aufweist, insbesondere zumindest überwiegend hieraus besteht. Im Rahmen der erfindungsgemäßen Verfahrensführung ist es insbesondere vorgesehen, unterschiedliche Materialien miteinander zu verkleben, wie beispielsweise Papieretiketten mit PET-Flaschen, Trittschalldämmungen mit dem Betonuntergrund und/oder mit Holzwerkstoffen oder auch Kunststoffdämmplatten an den Metallteilen von Autokarosserien.

Für weitere Einzelheiten zu dem erfindungsgemäßen Verfahren kann auf die obigen Ausführungen zu der erfindungsgemäßen Klebstoffzusammensetzung verwiesen werden, welche im Bezug auf das erfindungsgemäße Verfahren entsprechend gelten.

Weiterer Gegenstand der vorliegenden Erfindung - gemäß einem **dritten** Aspekt der vorliegenden Erfindung - ist die Verwendung einer zuvor beschriebenen Klebstoffzusammensetzung zur Kaschierung von Kunststoffen, insbesondere zur Anbringung von Etiketten auf Kunststoffflaschen, vorzugsweise PET-Flaschen.

Bei der Verwendung der erfindungsgemäßen Klebstoffzusammensetzungen zur Kaschierung von Kunststoffen, insbesondere zur Etikettierung von Kunststofflaschen, werden besonders gute Ergebnisse erhalten, wenn die erfindungsgemäße Klebstoffzusammensetzung eine Schälfestigkeit, bestimmt nach FTM 1, im Bereich von 1 bis 50 N/25 mm, insbesondere 2 bis 40 N/25 mm, vorzugsweise 2 bis 35 N/25 mm, bevorzugt 3 bis 30 N/25 mm, besonders bevorzugt 3 bis 28 N/25 mm, ganz besonders 4 bis 27 N/25 mm, aufweist.

Weiterhin kann es vorgesehen sein, dass die erfindungsgemäße Klebstoffzusammensetzung in diesem Zusammenhang eine Oberflächenklebrigkeit (Loop Tack), bestimmt nach FTM 9, im Bereich von 1 bis 50 N/25 mm, insbesondere 2 bis 40 N/25 mm, vorzugsweise 2 bis 30 N/25 mm, bevorzugt 3 bis 27 N/25 mm, besonders bevorzugt 3 bis 24 N/25 mm und ganz besonders bevorzugt 4 bis 22 N/25 mm, aufweist.

Gemäß einer besonderen Ausführungsform der vorliegenden Erfindung weist das erfindungsgemäße Klebstoffsystem, was in der Verwendung zur Kaschierung von Kunststoffen, insbesondere zur Etikettierung von Kunststoffflaschen, eine Wärmestandsfestigkeit (SAFT) von 30 bis 90 °C, insbesondere 35 bis 80 °C, auf.

Besonders gute und dauerhafte Verklebungen werden dabei erhalten, wenn das erfindungsgemäße Klebstoffsystem eine Viskosität von 200 bis 2.000 mPa·s, insbesondere 220 bis 1.800 mPa.s, vorzugsweise 250 bis 1.500 mPa.s, bevorzugt 280 bis 1.300 mPa.s, bevorzugt 300 bis 1.100 mPa·s, bei 140 °C aufweist.

Klebstoffsysteme mit den zuvor genannten Eigenschaften eignen sich in besonderer Weise zur Kaschierung von Kunststoffoberflächen, insbesondere zur Etikettierung von Kunststoffflaschen, da einerseits die Verklebung stabil und dauerhaft genug ist, um ein Ablösen des Etiketts zu verhindern, andererseits die Verklebung elastisch genug ist, um sich geringfügigen Änderungen der äußeren Form des Kunststoffsubstrats anpassen kann. Derartige Formänderungen des Kunststoffsubstrats können beispielsweise bei Kunststoffflaschen durch CO₂-Druck-entwicklungen entstehen.

So werden bei der In-Line-Etikettierung von PET-Flaschen unterschiedliche Anforderungen an den Klebstoff gestellt. Ein Faktor betrifft die Ausdehnung einer PET-Flasche, wenn sie höheren Temperaturen ausgesetzt wird. Dieser Effekt wird durch die Abfüllung von kohlensäurehaltigen Getränken verstärkt. Weist der eingesetzte Klebstoff eine zu geringe Elastizität und einen zu geringen Wärmestand auf, so würde das Etikett reißen bzw. es zu einem Kohäsionsbruch des Klebstoffes kommen. Dennoch muss der Klebstoff auch bei tiefen Temperaturen (z.B. bei Lagerung im Kühlschrank) eine gute Adhäsion zu den Substraten zeigen (s. Loop Tack und Glasübergangstemperatur). Zudem muss berücksichtigt werden, dass der Klebstoff z.B. aufgrund von Kondensation von Luftfeuchtigkeit Feuchtigkeit ausgesetzt sein kann.

Des Weiteren gibt es unterschiedliche Etikettenmaterialien und damit verbundene abweichende Anforderungen an den Klebstoff. Bei der Papieretikettierung ist aus optischen Gründen die Durchschlagsfreiheit von großer Bedeutung. Bei der Etikettierung mit Kunststoffetiketten steht dagegen die Adhäsion zu den schwierigen Substraten PE und PP im Vordergrund. Handelt es sich um transparente Etiketten, spielt die Farbe des Klebstoffes eine weitere große Rolle.

Da es sich um die Verpackung von Lebensmitteln handelt, sind ein möglichst geringer Geruch und die Freigabe des Klebstoffes für den Lebensmittelkontakt gemäß den FDA-Richtlinien (FDA; Food and Drug Administration) sowie gemäß EU-Richtlinien zwingend erforderlich.

Für weitergehende Einzelheiten zu der erfindungsgemäßen Verwendung kann auf die obigen Ausführungen zu den anderen Erfindungsaspekten verwiesen werden, welche im Bezug auf die erfindungsgemäße Verwendung entsprechend gelten.

Wiederum weiterer Gegenstand der vorliegenden Erfindung - gemäß einem **vierten** Aspekt der vorliegenden Erfindung - ist die Verwendung einer zuvor beschriebenen Klebstoffzusammensetzung zur Verklebung von Flächenmaterialien auf ebenen Substraten, insbesondere auf Holz- und/oder Kunststoffsubstraten, vorzugsweise zur Verklebung von Trittschalldämmungen, insbesondere für Laminat- und/oder Parkettböden.

Wenn die erfindungsgemäße Klebstoffzusammensetzung zur Verklebung von Flächenmaterialien auf ebenen Substraten, insbesondere auf Holz- und/oder Kunststoffsubstraten, eingesetzt wird, so weist die erfindungsgemäße Klebstoffzusammensetzung im Allgemeinen eine Schälfestigkeit von 1 bis 50 N/25 mm, insbesondere 2 bis 45 N/25 mm, vorzugsweise 3 bis 40 N/25 mm, bevorzugt 4 bis 35 N/25 mm, besonders bevorzugt 5 bis 30 N/25 mm, auf.

Besonders gute Ergebnisse bei der Verklebung von Flächenmaterialien auf ebenen Substraten, werden insbesondere dann erhalten, wenn die erfindungsgemäße Zusammensetzung eine Oberflächenklebrigkeit (Loop Tack) im Bereich von 1 bis 50 N/25 mm, insbesondere 2 bis 40 N/25 mm, vorzugsweise 4 bis 30 N/25 mm, bevorzugt 6 bis 27 N/25 mm, besonders bevorzugt 7 bis 25 N/25 mm, aufweist.

Darüber hinaus kann es vorgesehen sein, dass die erfindungsgemäße Klebstoffzusammensetzung in diesem Zusammenhang eine Wärmestandsfestigkeit (SAFT) im Bereich von 30 bis 130 °C, insbesondere 40 bis 125 °C, vorzugsweise 45 bis 120 °C, bevorzugt 50 bis 120 °C, aufweist.

Was die Viskosität der erfindungsgemäßen Klebstoffzusammensetzung während der Auftragung bei der Verwendung zur Verklebung von Flächenmaterialien auf ebenen Substraten anbelangt, so werden besonders gute Ergebnisse erhalten, wenn bei einem Auftrag mittels Düsen, die erfindungsgemäße Klebstoffzusammensetzung eine Brookfield-Viskosität von 300 bis 2.500 mPa.s, insbesondere 600 bis 2.300 mPa.s, vorzugsweise 700 bis 2.000 mPa.s, bevorzugt 750 bis 1.700 mPa·s, besonders bevorzugt 800 bis 1.500 mPa s, bei 140 °C aufweist. Falls die erfindungsgemäße Klebstoffzusammensetzung jedoch über eine Walze aufgetragen wird, so hat es sich bewährt, wenn die erfindungsgemäße Klebstoffzusammensetzung eine Brookfield-Viskosität von 5.000 bis 40.000 mPa·s, insbesondere 6.000 bis 35.000 mPa s, vorzugsweise 7.000 bis 30.000 mPa s, bevorzugt 8.000 bis 27.000 mPa s, besonders bevorzugt 9.000 bis 25.000 mPa s, bei 180 °C aufweist.

Bei der Verwendung von Klebstoffzusammensetzungen mit den vorgenannten Eigenschaften werden im Rahmen der vorliegenden Erfindung besonders gute und dauerhafte Klebeergebnisse bei der Verklebung von Flächenmaterialien auf ebenen Substraten, insbesondere auf Holz - und Kunststoffsubstraten, vorzugsweise bei der Verklebung von Trittschalldämmungen auf Laminat- und/oder Parkettböden erreicht.

Die wichtigste Anforderung an den Klebstoff bei der Klebung von Trittschalldämmung unter Laminatböden besteht in dem breiten Adhäsionsspektrum, das der Klebstoff aufweisen muss. Grund hierfür ist die Vielzahl an Dämmwerkstoffen wie Recyclingmatten, Kork- oder Holzfasermatten, die hierbei zum Einsatz kommen.

Abhängig vom Dämmwerkstoff, dem Verfahren und dem Anspruch der Recyclingfähigkeit (Trennung von Laminatboden und Dämmmaterial) kann die aufgetragene Klebstoffmenge stark variieren. Im Allgemeinen werden zwischen 5 und 250 g/m², insbesondere 10 bis 200 g/m², vorzugsweise 15 und 150 g/m², aufgetragen.

Die Klebstoffe können abhängig vom Auftragssystem unterteilt werden, wobei prinzipiell zwischen zwei Verfahrensweisen unterschieden wird: Der Laminatboden und die Trittschalldämmung werden bereits im Produktionsprozess gefügt oder eines der beiden Substrate wird selbstklebend ausgerüstet und mit dem zweiten Substrat vor Ort auf der Baustelle gefügt.

Erfolgt die Fügung vor Ort, ist die Temperatur von Bedeutung, da hierbei durchaus niedrige Temperaturen herrschen können. Weist der Klebstoff eine zu hohe Glasübergangstemperatur auf, kann bei niedrigen Temperaturen keine ausreichende Adhäsion erreicht werden. Zum Anderen kann die Klebung z.B. durch Sonneneinstrahlung auch relativ hohen Temperaturen ausgesetzt sein. Ob die Kohäsion des Klebstoffs hierfür ausreicht, kann durch Bestimmung des SAFT-Wertes ermittelt werden. Zusätzlich muss der Klebstoff eine gewisse Weichmacherbeständigkeit aufweisen, da die Dämmmaterialien Weichmacher enthalten können.

Weitere wichtige Eigenschaften bei der Auswahl des Klebstoffes sind zum einen die für das Auftragssystem geeignete Viskosität sowie eine hohe Eigenklebrigkeit (Loop Tack). Des Weiteren wird eine hohe Elastizität gefordert, um das Ziel der Anwendung, nämlich die Verbesserung der Raumakustik, zu unterstützen.

Allgemein muss die Klebstoffzusammensetzung im an dieser Stelle betrachteten System den Anforderungen diverser Anwendungsgebiete genügen. Häufig werden Materialien wie Vliese selbstklebend ausgerüstet und anschließend zur Wärme-, Schalldämmung oder Polsterung eingesetzt. Aber auch andere Materialien können selbstklebend ausgerüstet werden und somit vor Ort verklebt werden. Der Klebstoff übernimmt hier häufig die Funktion einer Montagehilfe. Die endgültige Fixierung erfolgt dann nachträglich über andere Methoden (z.B. mechanisch). Da die Klebung dann in der Regel bei einer Temperatur erfolgt, die deutlich unter der Auftragstemperatur liegt, muss der Klebstoff eine hohe Eigenklebrigkeit (Loop Tack) aufweisen, so dass eine gute Benetzung des Substrats gewährleistet ist. Hierbei kommen relativ hochviskose Klebstoffe zum Einsatz, da es sich bei den Dämm- und Isoliermaterialien in der Regel um poröse bzw. offenporige Systeme handelt. Ein niedrigviskoser Klebstoff würde in das Substrat abschlagen. Gleichzeitig wird ein Klebstoff mit einer hohen Elastizität gefordert, der die Dämpfungsfunktion unterstützt.

Die Anwendungsbereiche reichen somit vom Automobil- und Maschinenbau bis zum Haus- und Möbelbau. Da der Klebstoff somit auch in Außenanwendungen eingesetzt wird, muss er ein möglichst breites Temperaturspektrum bzgl. seiner Einsatztemperatur sowie eine hohe Beständigkeit gegenüber Feuchtigkeit aufweisen. Für den Automobilbereich sind zudem Geruchsneutralität und niedrige VOC-(Volatile Organic Compound) und Fogging-Werte von großer Bedeutung.

Für weitergehende Einzelheiten zu diesem Erfindungsaspekt kann auf die obigen Ausführungen zu den weiteren Erfindungsaspekten verwiesen werden, welche im Bezug auf die erfindungsgemäße Verwendung entsprechend gelten.

Wiederum weiterer Gegenstand der vorliegenden Erfindung - gemäß einem **fünften** Aspekt der vorliegenden Erfindung - ist die Verwendung einer zuvor beschriebenen Klebstoffzusammensetzung als Montagehilfe, insbesondere bei der Herstellung von Fahrzeugen, vorzugsweise bei der Herstellung von Automobilen, bevorzugt bei der Befestigung von Schalldämmplatten in Automobilkarosserien.

Falls die erfindungsgemäße Klebstoffzusammensetzung als Montagehilfe, insbesondere bei der Herstellung von Fahrzeugen, oder für Montageklebungen in der Bauindustrie, verwendet wird, so werden besonders gute Ergebnisse erhalten, wenn die erfindungsgemäße Klebstoffzusammensetzung eine Schälfestigkeit von 5 bis 50 N/25 mm, insbesondere 6 bis 45 N/25mm, vorzugsweise 7 bis 40 N/25 mm, bevorzugt 8 bis 35 N/25 mm, besonders bevorzugt 10 bis 30 N/25 mm, aufweist.

Im Allgemeinen weisen die für diese Zwecke eingesetzten Klebstoffzusammensetzungen eine Oberflächenklebrigkeit (Loop Tack) im Bereich von 5 bis 60 N/25 mm, insbesondere 6 bis 55 N/25 mm, vorzugsweise 7 bis 50 N/25 mm, bevorzugt 8 bis 45 N/25 mm, besonders bevorzugt 10 bis 40 N/25 mm, auf.

Weiterhin kann es vorgesehen sein, dass die erfindungsgemäße Klebstoffzusammensetzung ein Wärmestandsfestigkeit (SAFT) im Bereich von 40 bis 150 °C, insbesondere 45 bis 130 °C, vorzugsweise 50 bis 125 °C, bevorzugt 55 bis 120 °C, besonders bevorzugt 60 bis 115 °C, aufweist.

Wenn die erfindungsgemäße Klebstoffzusammensetzung als Montagehilfe oder für Montageklebungen im Baubereich verwendet wird, weist die erfindungsgemäße Klebstoffzusammensetzung im Allgemeinen eine Viskosität von 5.000 bis 85.000 mPa·s, insbesondere 6.000 bis 80.000 mPa.s, vorzugsweise 7.000 bis 75.000 mPa·s, bevorzugt 8.000 bis 70.000 mPa·s, besonders bevorzugt 9.000 bis 65.000 mPa s, ganz besonders bevorzugt 10.000 bis 60.000 mPa s, bei 160 °C auf.

Wenn Klebstoffzusammensetzungen mit dem vorgenannten Eigenschaftsprofil als Montagehilfe oder für Montageklebungen im Baubereich verwendet werden, werden besonders stabile Verklebungen erzielt.

Für weitergehende Einzelheiten zu diesem Erfindungsaspekt kann auf die obigen Ausführungen zu den weiteren Erfindungsaspekten verwiesen werden, welche im Bezug auf die erfindungsgemäße Verwendung entsprechend gelten.

Schließlich ist weiterer Gegenstand der vorliegenden Erfindung - gemäß einem **sechsten** Aspekt der vorliegenden Erfindung - die Verwendung einer zuvor genannten Klebstoffzusammensetzung für Montageklebungen in der Bauindustrie. Insbesondere kann es in diesem Zusammenhang vorgesehen sein, dass die erfindungsgemäße Klebstoffzusammensetzung zur Beschichtung von Dämmstoffplatten für die Außendämmung von Kellern eingesetzt wird. Gleichfalls eignet sich die erfindungsgemäße Klebstoffzusammensetzung gemäß einer bevorzugten Ausführungsform für beschichtete Haltevorrichtungen für Fußbodenheizungsrohre.

Für weitergehende Einzelheiten zu diesem Erfindungsaspekt kann auf die obigen Ausführungen zu den weiteren Erfindungsaspekten verwiesen werden, welche im Bezug auf die erfindungsgemäße Verwendung entsprechend gelten. Weitere Ausgestaltungen, Abwandlungen, Variationen und Besonderheiten der vorliegenden Erfindung sind für den Fachmann beim Lesen der Beschreibung ohne Weiteres erkennbar und realisierbar, ohne dass der Rahmen der vorliegenden Erfindung verlassen wird.

Die vorliegende Erfindung wird anhand der folgenden Ausführungsbeispiele veranschaulicht, ohne jedoch die vorliegende Erfindung hierauf zu beschränken.

### Ausführungsbeispiele

### 1. Analysemethoden

### Fourier-Transform-Infrarot-Spektroskopie (FTIR-Spektroskopie)

Die Proben werden auf einem Fourier-Transform-Infrarot-Spektrometer (FTIR) des Typs Vector 22 der Firma Bruker Analytik GmbH untersucht.

### Dynamische-Differenz-Kalorimetrie (Differential Scanning Calorimetry; DSC)

Die Messungen werden mit einem DSC-Gerät des Typs DSC 204 Phoenix der Firma Netzsch Gerätebau GmbH unter einem schwachen Stickstoffstrom durchgeführt. Der dynamische Messbereich liegt zwischen +/-0.01 und +/-100 mW. Als Probenbehälter wurden Aluminiumpfännchen benutzt. Alle hergestellten Muster wurden folgendem Messprogramm unterzogen:

| | |
|---|---|
| 1. Aufheizvorgang: | von 20°C bis 160°C; Aufheizgeschwindigkeit: 20 K/min |
| | Isotherme bei 160 °C: 2 min |
| Abkühlvorgang: | von 160°C bis -60°C; Abkühlgeschwindigkeit: 20 K/min |
| | Isotherme bei -60 °C: 2 min |
| 2. Aufheizvorgang: | von -60 °C bis 220 °C; Aufheizgeschwindigkeit: 10 K/min |

### Gelpermeationschromatographie (GPC)

Die Molmassen der Polymerproben und deren Molmassenverteilungen werden mittels Gelpermeationschromatographie (GPC) bestimmt.

| | |
|---|---|
| **Eluent** | Hexafluorisopropanol (HFIP) mit |
| | 0,05M Kaliumtrifluoracetat (KTFAc) |
| **Säulen** | PSS-PFG, 7 µm Partikelgröße, 1000Å, 8,0X300 mm |
| | PSS-PFG, 7 µm Partikelgröße, 300Å, 8,0X300 mm |
| | PSS-PFG, 7 µm Partikelgröße, 100Å, 8,0X300 mm |
| **Pumpe** | Isokratische Pumpe (Agilent Serie 1100) |
| **Fluss** | 1,0 ml/min |
| **Injektionssystem** | Probengeber mit 100 µl Injektionsvolumen (Agilent-Serie 1100) |
| **Temperatur** | 25 °C (Säulenofen) |
| **Detektor** | SECcurity Diodenarray-Detektor (DAD) (Agilent Serie 1260) |
| | Brechungsindexdetektor (RI) (Agilent Serie 1100) |
| | PSS SLD 7000 Lichtstreuphotometer (LS) (Brookhaven Instrument Inc.) |
| | SECcurity GPC Viskositätsdetektor ETA-2010 |
| **Temperatur** | 35 °C (optische Messzelle) |
| **Auswertung** | WinGPC^{®}Unity (Version 7.5.0) |

Die Anlage wurde mit engverteilten Polymethylmethacrylat-Standards (PMMA) im Trennbereich der Säulenkombination kalibriert. Die Auswertung der Proben erfolgte mittels der Streifenmethode rechnergestützt basierend auf der PMMA-Kalibration.

### Dynamisch-Mechanische Analyse (DMA)

Die Messungen wurden mit einem Rheometer BOHLIN CVO120 mittels Oszillationsmethode mit einem Platte-Platte-Messsystem (Durchmesser = 25 mm) durchgeführt. Alle hergestellten Muster wurden folgendem Messprogramm unterzogen:

| | |
|---|---|
| Deformationsvorgabe: | 100%; |
| T-Rampe: | mind. 130°C bis mind. -10°C; |
| Kühlrate: | 5 K/min. |

### 2. Synthese der Basis- bzw. Rückgratpolymere

### 2.1. Synthese von Rückgratpolymeren auf Basis von L-Milchsäure unter Verwendung von Katalysatoren

### 2.1.1. Allgemeine Arbeitsvorschriften

Die folgende Arbeitsvorschrift dient als Vorlage für alle durchgeführten Versuche zur Synthese von Milchsäuren, es sei denn, abweichende Reaktionsbedingungen werden genannt.

Zur Synthese von Polymilchsäure mittels Polykondensation wurde kommerzielle 80 %-ige L-Milchsäure verwendet. Die Polykondensationen von Milchsäure wurden als Polykondensation in der Schmelze durchgeführt. Der Herstellungsprozess verlief in zwei Stufen: Entwässerung und Polykondensation.

### Entwässerung der Milchsäure:

Eine auf 100 g wasserfreie Milchsäure umgerechnete Menge an kommerzieller Milchsäure wurde im Vakuum über eine Destillationsbrücke bei 130 °C 2 h entwässert. Um die Abtrennung von Milchsäure zu verhindern, wurde eine Vigreux-Kolonne zwischen den Vorratskolben und der Destillierbrücke eingesetzt. Zur Kontrolle der Wasserabtrennung wurde der Brechungsindex von jedem Destillat gemessen.

### Polymerherstellung:

Nach der Entwässerungsphase wurde die Ölbadtemperatur erhöht und der Katalysator zugesetzt. Anschließend wurde die Polykondensation im Vakuum (3-10 mbar) durchgeführt. Vom Destillat (Reaktionswasser) wurde ebenfalls der Brechungsindex gemessen. Das Produkt war eine leicht zähflüssige, hellgelbe, holzig riechende Masse.

### Reinigung der Polymilchsäure:

Das erhaltene Polymer wurde in Chloroform gelöst und in 10-facher Menge in Eis gekühltem Methanol ausgefällt. Die gereinigte PLA wurde filtriert und im Vakuumtrockenschrank (60 °C) bis zur Massenkonstanz getrocknet.

### Charakterisierung der Polymerproben:

Die hergestellten Polymerproben wurden vor der Extraktion (diese Proben werden als "Rohprodukt" bezeichnet) und nach der Extraktion (als "gereinigt" bezeichnet) mittels GPC, DSC und TG charakterisiert. Außerdem wurde die Ausbeute des Rohproduktes und der gereinigten Proben berechnet.

### 2.1.2. Synthese von Homopolyester der Milchsäure mittels direkter Polykondensation (DP)

### Katalysatorwahl

Es wurden anorganische Verbindungen des Zinn(ll)s, Titans, Natriums, Kaliums, Eisens, Zinks, Zirkoniums sowie Protonensäuren (p-Toluolsulfonsäure, Schwefelsäure, Phosphorsäure) und weitere organische Verbindungen wie Bernsteinsäureanhydrid, Guanidindicarbonat (Gu₂CO₃) und TBD (1,5,7-Triazabicyclo[4,4,0]dec-5-en) als Katalysatoren getestet.

Die Versuche wurden sowohl mit L-Milchsäure (im Folgenden auch L-LA genannt) als auch mit Oligo-L-Milchsäure (im Folgenden auch OLA genannt) durchgeführt. Die oligomere Milchsäure wurde während 8 Stunden (h) bei 150 °C (2 h unter Stickstoffatmosphäre und 6 h im Vakuum) hergestellt. Diese Polymer-Proben werden als "Rohprodukt" und extrahierte Polymer-Proben als "gereinigt" bezeichnet.

Zur Identifikation wurden die PLA-Proben IR-spektroskopisch untersucht. Die IR-Spektren der untersuchten Polymere zeigen für Polyester charakteristische Banden: 3500 cm⁻¹ - terminierte -OH-Gruppe (Hinweis auf niedermolekulare PLA), 1756 cm⁻¹ - C=O der Estergruppe, 1300 - 1500 cm⁻¹ - typische Estersequenzen der -CO-O--Gruppe, 3000, 2945 cm⁻¹ - C-H der CH₃- und CH₂-Gruppen.

### Zinnbasierte Katalysatoren

Zunächst wurden zinnbasierte Katalysatoren wie Zinn(II)-Chlorid (SnCl₂*2H₂O), Zinn(II)-2-Ethylhexanoat und Zinn(II)-octanoat (SnOct₂) sowie die Katalysator/Aktivator-Systeme SnCl₂/p-TSA und SnOct₂/TPP getestet. Zinnbasierte Katalysatoren gehören zu den meistverwendeten Katalysatoren bei der PLA-Synthese. Der Vorteil der zinnbasierten Katalysatoren liegt in ihrer hohen katalytischen Effektivität.

Die Synthese von PLA wurde in zwei Schritten durchgeführt. Die Entwässerung der 80 %-igen L-Milchsäure erfolgte in Stickstoffatmosphäre bei einer Temperatur von 130 °C für 2 h. Die Polymerisation der entwässerten Milchsäure fand bei 185 °C für 6 h im Vakuum statt.

Nach der Beendigung der Polykondensation wurden leicht gelbliche, holzig riechende Rohprodukte erhalten. Die extrahierten Polymere lagen als weiße, pulver- bzw. faserartige Materialien vor. Die Ausbeuten der Polymere wurden im Bereich von 70 bis 85 %, bezogen auf die Menge der entwässerten Milchsäure, bestimmt. Mittels GPC wurden die Molmassen der erhaltenen Polymere und deren Molmassenverteilungen gemessen.

Die höheren Molmassen der Rohprodukte und der gereinigten Proben wurden in Gegenwart von Zinnoctoat und Zinnchlorid/p-TSA als Katalysatoren erhalten. Das Katalysator/Aktivator-System SnOct₂/TPP hatte keinen Effekt auf die Molmassen der hergestellten Polymere.

Die hergestellten PLA-Proben wurden mittels DSC untersucht. Die Rohprodukte liegen meist als amorphe Polymere vor. Die Glasübergangstemperaturen (T_{g}) der Rohprodukte wurden in einem Bereich von 26,6 °C bis 40,9 °C gemessen (2. Aufheizkurve). Die OLA-Proben weisen Glasübergangstemperaturen im gleichen Temperaturbereich auf. Der niedrige Glasübergang wird durch die im Polymer vorhandenen nieder- und oligomeren Verbindungen verursacht. Die gereinigten Polyester-Proben aus L-Milchsäure sind teilkristalline Polymere mit T_{g} = 35,4 bis 49,4 °C, T_{c} = 90 bis 111 °C und Tₘ = 125 bis 145 °C.

### Weitere Katalysatoren

Es wurden mehrere Versuche in Gegenwart verschiedener metallorganischer Verbindungen zur Herstellung von Polymilchsäure getestet. Es wurden Titan(IV)-isopropylat (Ti(iOPr)₄), Titan(IV)-butylat (Ti(OBu)₄), Zinkchlorid (ZnCl₂), Zinkacetylacetonat (Zn(acac)₂), Kupferacetylacetonat (Cu(acac)₂), Eisenacetylacetonat (Fe(acac)₃), Zirkoniumacetylacetonat (Zr(acac)₄) sowie organische Verbindungen wie Phosphorsäure (H₃PO₄), Schwefelsäure (H₂SO₄), Bernsteinsäureanhydrid (BSA) und Guanidincarbonat (Gu₂CO₃) ausgewählt. Die Katalysatorkonzentration wurde in einem Bereich von 0,2 bis zu 1,0 Gew.-% bezogen auf die Menge der entwässerten Milchsäure bzw. OLA eingesetzt.

Die Synthese von Polymilchsäure erfolgte nach zwei verschiedenen Methoden. Der Unterschied zwischen den beiden Methoden liegt darin, dass in der Methode 1 die Entwässerung und Oligomerisierung der Milchsäure nach 2 h bei 130 °C abgeschlossen wurde. Danach wurde die Ölbadtemperatur auf 185 °C erhöht und eine Katalysator-Lösung nach Erreichen der vorgegebenen Ölbadtemperatur zugegeben. Die Reaktionszeit betrug nach der Katalysator-Zugabe 6 h.

Für die Methode 2 wurde zunächst eine große Menge an oligomerer Milchsäure mit einer Molmasse Mₙ von ca. 730 g/mol ohne Katalysator in 8 h bei 150 °C hergestellt. Das nach der Oligomerisierung erhaltene Produkt wird nachfolgend auch als "OLA" bezeichnet. Die Polymerisation wurde nach dem Aufschmelzen bei 185 °C durch die Zugabe einer Katalysator-Lösung gestartet. Die Reaktionszeit betrug 8 h.

Die PLA-Proben waren transparent und wiesen unterschiedliche Verfärbungen in Abhängigkeit der eingesetzten Katalysatoren aus. In Anwesenheit von titanbasierten Katalysatoren wurden rot-braune Polymere erhalten. Eisen- bzw. kupferbasierte Verbindungen verfärben die PLA-Proben grün bzw. türkis. Die Zink-Katalysatoren und die Phosphorsäure dagegen ergaben klare farblose Polymere. Die Verfärbung des Produkts bei der Polykondensation von Milchsäure kann durch verschiedene Faktoren, wie hohe Reaktionstemperaturen, lange Reaktionszeiten, Katalysatoren, Lösungsmittel und Nebenprodukte hervorgerufen werden.

Die Ausbeute der Präpolymere lag in einem Bereich von 72 bis 97 %. Es wurde festgestellt, dass nach der Methode 2 höhere Ausbeuten der hergestellten Polymere erhalten wurden. Mittels GPC wurden die Molmassen der Polymere und deren Molmassenverteilungen bestimmt. Es zeigt sich, dass Ti(OBu)₄ und Zn(acac)₂ effiziente Katalysatoren im Bezug auf die Molmasse der Rohprodukte sind. In Gegenwart dieser Katalysatoren wurden eine Molmasse Mₙ von ca. 4.200 g/mol bzw. 7.800 g/mol erhalten.

Die mit anorganischen Säuren und organischen Verbindungen als Katalysatoren hergestellten PLA-Proben wurden ebenfalls mittels GPC untersucht. Es zeigt sich, dass abgesehen von Schwefelsäure die katalytische Aktivität der organischen Katalysatoren sehr gering ist. In diesem Fall wurden Molmassen Mₙ von ca. 13.000 g/mol und M_{w} von ca. 26.000 g/mol gemessen.

Eine Aufreinigung der Präpolymere aus den oben genannten Versuchen fand nicht statt. Stattdessen wurden diese Proben weiter nachkondensiert (vgl. 2.4.1).

Die hergestellten Polymilchsäure-Proben wurden mittels DSC untersucht. Es wurde eine Glasübergangstemperatur (T_{g}) von 48,7 °C gemessen (2. Aufheizkurve). Der niedrige Glasübergang wird durch die im Polymer vorhandenen niedermolekularen und oligomeren Verbindungen verursacht.

Das Verhalten der Präpolymer-Proben aus dieser Versuchsreihe unterscheidet sich nicht vom Verhalten der Proben, die in Gegenwart von zinnbasierten Katalysatoren hergestellt wurden.

### 2.2. Basis- bzw. Rückgratpolymere basierend auf L- und/oder D-Milchsäure ohne Verwendung eines Katalysators

Es wurden entweder L-Milchsäure (L-LA) oder Mischungen von D- und L-Milchsäure (DL-LA) mit einem L/D-Verhältnis von 50/50, 75/25 und 80/20 ohne Katalysator eingesetzt. Das nach der Oligomerisierung der L-LA erhaltene Produkt wird nachfolgend auch als "OLA" bezeichnet. Das nach der Oligomerisierung der DL-LA erhaltene Produkt wird nachfolgend auch als "ODLA" bezeichnet. Die zahlenmittlere Molmasse (Mₙ) von OLA bzw. ODLA wurde in einem Bereich von 1.200 bis 2.000 g/mol gemessen. Die hergestellte OLA bzw. ODLA wird zur Nachkondensation, zur Synthese von Polyester-Urethanen sowie mit JONCRYL^{®}4368 zur Kettenverlängerung verwendet.

### 2.3. Herstellung von Polymilchsäuren mit terminalen Hydroxy- oder Carbonsäurefunktionen

### 2.3.1. Herstellung von hydroxyterminierten Polymilchsäuren

Es wurde entweder L-Milchsäure oder DL-Milchsäure mit einem L/D-Verhältnis von 50/50, 75/25 und 80/20 zusammen mit einem Diol eingesetzt, um an beiden Enden der Molekülkette eine OH-Gruppe als Abschluss zu erhalten. Als Diolkomponente wurden 1,4-Butandiol, 1,2-Butandiol, 2-Ethyl-1,3-Hexandiol, 1,2-Hexandiol oder Trimethylolpropan (TMP) ausgewählt. Diese Diole wurden in einer Konzentration von 2 bzw. 4 mol-%, bezogen auf die wasserfreie Milchsäure eingesetzt. Die erhaltenen Produkte werden analog zu der Bezeichnung im Punkt 1 als "OLA-OH" bzw. als "ODLA-OH" bezeichnet.

Die Molmasse (Mₙ) von OLA-OH bzw. ODLA-OH ohne Katalysator wurde in einem Bereich von 1.200 bis 1.900 g/mol gemessen. Bei der Durchführung der Versuche wurde kein Einfluss des L/D-Verhältnisses auf die Molmasse der hergestellten oligomeren Milchsäure festgestellt.

Mehrere Versuchsreihen wurden in Gegenwart verschiedener metallorganischer Verbindungen zur Beschleunigung der Herstellung oligomerer Milchsäure durchgeführt. Es wurden Zinn(II)-2-Ethylhexanoat (SnOct₂), Titan(IV)-isopropylat (Ti(ⁱOPr)₄), Titan(IV)-butylat (Ti(OBu)₄), Zinkacetylacetonat (Zn(acac)₂) sowie Zirkoniumacetylacetonat (Zr(acac)₄) in einer Konzentration von 0,5 und 1,0 w.-% bezogen auf die Menge der OLA eingesetzt. Zinn(II)-2-Ethylhexanoat (SnOct₂) wurde als Referenz eingesetzt, weil Zinn(II)-Katalysatoren eine sehr hohe katalytische Aktivität aufweisen.

Die Molmasse (Mₙ) der hergestellten OLA-OH bzw. ODLA-OH wurde in einem Bereich von 1.600 bis 3.700 g/mol gemessen. Die besten Ergebnisse bezogen auf Mₙ wurden mit SnOct₂ und mit titanbasierten Katalysatoren erreicht.

Die hergestellten OH-terminierten oligomeren Milchsäuren sind harte, spröde und amorphe Polymere. Die so hergestellte OLA-OH bzw. ODLA-OH wurde zur Kettenverlängerung mit Diisocyanaten eingesetzt.

### 2.3.1. Herstellung von carbonsäureterminierten Polymilchsäuren

Um COOH-terminierte oligomere Milchsäure zu erhalten, wurde L-Milchsäure mit Bernsteinsäurechlorid bzw. Bernsteinsäureanhydrid mit und ohne Katalysator umgesetzt. Das nach der Oligomerisierung erhaltene Produkt wird als "OLA-COOH" bezeichnet. Die Molmasse der Oligomere lag bei 900 g/mol. Diese oligomere Milchsäure wurde zur Umsetzung mit Polyolen und Polyestern zur Herstellung von Copolymeren verwendet.

### 2.4. Kettenverlängerung und Modifizierung von Polymilchsäuren

### 2.4.1. Nachkondensation in der Schmelze

Niedermolekulare PLA kann durch verschiedene Post-Polykondensationsmethoden zu einem hochmolekularen Polymer modifiziert werden, z. B. durch Nachkondensation in der Schmelze oder durch Polykondensation in der festen Phase. Zur Durchführung der Nachkondensation in der Festphase werden Vorprodukte niedriger oder mittlerer Molmasse als Granulat oder Pulver unterhalb ihres Schmelzpunktes in Inertgasatmosphäre oder im Vakuum erhitzt. Die höheren Molmassen können dabei auf schonende Weise aufgebaut werden.

Die Polykondensation von Milchsäure und die Nachkondensation der Präpolymere können miteinander kombiniert werden. Hierbei wird neben den drei ersten Stufen der direkten Polykondensation eine zusätzliche vierte Stufe eingesetzt. In der vierten Stufe wird das Präpolymer unterhalb seiner Schmelztemperatur abgekühlt. Dabei bilden sich feste PLA-Partikel. Bei der Kristallisation der festen Teilchen entstehen eine kristalline und eine amorphe Phase. Die reaktiven Endgruppen sowie der Katalysator befinden sich in der amorphen Phase zwischen den Kristallen. Obwohl die Polykondensation im festen Zustand bei niedriger Temperatur durchgeführt wird, können hochmolekulare Polymere erhalten werden.

Der geschwindigkeitsbestimmende Schritt in der Festphasen-Polykondensation ist der Stofftransport des Reaktionswassers durch molekulare Diffusion. Die Entfernung des Reaktionswassers kann durch die Reaktionsführung unter Vakuum oder in einer inerten Atmosphäre unterstützt werden (vgl. A. Södergärd und M. Stolt, "Industrial production of high molecular weight poly(lactic acid)", in "Poly(lactic acid)", eds.: R. Auras, L.-T. Lim, S. E. M. Selke und H. Tsuji, Wiley, 2010).

### 2.4.1.1. Nachkondensation der gemäß Abschnitt 2.1.2. erhaltenen Polymilchsäuren

### Allgemeine Reaktionsbedingungen

Die niedermolekularen Rohprodukte aus der oben beschriebenen Polykondensation gemäß Abschnitt 2.1.2. der Milchsäure wurden in der Schmelze nachkondensiert.

Das PLA-Rohprodukt wurde in einem Kolben, ausgestattet mit einem Magnetrührer, einer Destillationsbrücke, einer Vorlage und einer Kühlfalle, eingewogen. Der Kolbeninhalt wurde auf 185 °C erhitzt. Nachdem das Polymer geschmolzen ist, wurde Vakuum (ca. 14 mbar) angelegt und bei dieser Temperatur für 15 h gehalten. Nach Beendigung der Reaktion wurde das Polymer in Chloroform gelöst und in eiskaltem Methanol ausgefällt. Nach Filtration wurde der Filterkuchen zunächst luftgetrocknet und anschließend über Nacht in einem Vakuumtrockenschrank bei 60 °C bis zur Gewichtskonstanz getrocknet.

Die erhaltenen Polymerproben wurden mittels GPC untersucht. Im Vergleich zu den Molmassen der Ausgangsprodukte wurden durch die Nachkondensation fast doppelt so hohe Molmassen Mₙ erhalten. Die besten Ergebnisse wurden mit Zirkoniumacetylacetonat, Eisenacetylacetonat, Zinkchlorid sowie mit Phosphorsäure erzielt. Die höchsten Molmassen Mₙ von 14.500 g/mol und M_{w} von 22.500 g/mol lieferte die Nachkondensation in Anwesenheit von Zirkoniumacetylacetonat als Katalysator.

Von den Proben wurden DSC-Messungen durchgeführt. Ein Vergleich zwischen den DSC-Messkurven einer PLA-Probe vor und nach der Nachkondensation sowie nach der Aufreinigung zeigt, dass alle DSC-Messkurven einen deutlich ausgeprägten Glasübergang aufweisen. Die Glasübergangstemperatur der nachkondensierten Rohprobe ist 6 °C höher als die Glasübergangstemperatur des Ausgangspolymers. Nach der Extraktion der nachkondensierten PLA-Probe ist die Glasübergangstemperatur über 20 °C höher im Vergleich zu der ursprünglichen Polymer-Probe und liegt bei 54,7 °C. Die Lage des Glasübergangs korreliert mit den Molmassen der Polymer-Proben.

Ebenfalls ist eine Verschiebung der Nachkristallisationstemperatur vom Ausgangspolymer zur aufgereinigten nachkondensierten PLA-Probe deutlich zu erkennen. Der Schmelzpunkt der aufgereinigten nachkondensierten PLA-Probe ist zu höheren Temperaturen verschoben. Ein doppelter Peak im Schmelzbereich ist typisch für PLA.

Es wurden verschiedene Katalysatoren zur Herstellung von PLA ausgewählt und getestet. Sehr gute Ergebnisse in Bezug auf die Molmassen und die Ausbeuten der hergestellten Polymere der Milchsäure wurden mit zinnbasierten Katalysatoren erzielt.

Titan(VI)-isopropylat lieferte ein Polymer (Rohprodukt) mit niedrigerer Molmasse Mₙ und breiterer Molmassenverteilung als Titan(VI)-butylat. Nach Aufreinigung hatten die entsprechenden Polymere fast die gleiche Molmasse Mₙ. Die mit Titan-Katalysatoren hergestellten Polymere weisen eine rot-braune Verfärbung auf. Die Protonensäuren lieferten Polymere mit einer Molmasse Mₙ von ca. 4.500 g/mol und können als Katalysatoren weiterhin eingesetzt werden. Eisen- und Zirkoniumacetylacetonat führten ebenfalls zu Polymeren mit akzeptablen Molmassen. Die Verfärbung kann durch verschiedene Faktoren, wie hohe Reaktionstemperaturen, lange Reaktionszeiten, Katalysatoren, Lösungsmittel und Nebenprodukte entstehen. Die Nachkondensation der hergestellten PLA-Proben bewirkte meist eine deutliche Steigerung der Molmassen. Die höchsten Molmassen Mₙ von 14.500 g/mol und M_{w} von 22.500 g/mol lieferte die Nachkondensation in Anwesenheit von Zirkoniumacetylacetonat als Katalysator.

### 2.4.1.1. Nachkondensation der gemäß Abschnitt 2.2 erhaltenen Polymilchsäuren

Die niedermolekularen Rohprodukte aus der in Abschnitt 2.2 beschriebenen Polykondensation der Milchsäure wurden in der Schmelze nachkondensiert, um höhermolekulare Polymere zu erhalten. Dazu wurde die OLA auf 180 °C erhitzt. Nachdem das Polymer geschmolzen ist, wurde Katalysator zugegeben, Vakuum (ca. 50 mbar) angelegt und bei dieser Temperatur für 15 h bzw. 24 h gehalten.

Im Vergleich zu den Molmassen der Ausgangsprodukte (Mₙ von OLA bzw. ODLA: 2.300 g/mol) wurden durch die Nachkondensation mehr als dreimal so hohe Molmassen Mₙ (7.300 g/mol) mit Zirkoniumacetylacetonat als Katalysator erhalten.

Alle DSC-Messkurven weisen einen deutlich ausgeprägten Glasübergang auf. Das Muster aus L-Milchsäure ist ein teilkristallines Polymer mit einer Glasübergangstemperatur T_{g} = 41,1 °C, Rekristallisationstemperatur T_{c} = 103 °C und Schmelztemperatur Tₘ = 135 °C. Ein doppelter Peak im Schmelzbereich ist typisch für PLA. Die Muster aus L-Milchsäure mit 50 % bzw. 25 % D-Milchsäureanteil sind amorphe Polymere. Die T_{g} des Musters mit 50 % D-Anteil ist 6 °C höher als die T_{g} des Musters mit 25 %-D-Anteil. Die Unterschiede in der T_{g} können an der Molmasse des jeweiligen Musters liegen. Die Lage des Glasübergangs korreliert mit den Molmassen der Polymer-Proben.

### 2.4.2. Herstellung von Copolyestern der Milchsäure

Die Erhöhung der Molmassen der hergestellten niedermolekularen Präpolymere kann mittels verschiedener Verfahren erreicht werden. Zum einen kann dies durch eine Transesterifikation bzw. Umesterung erfolgt werden. Zum anderen kann die Kettenverlängerung mit Diisocyanaten zu höheren Molmassen führen.

### 2.4.2.1. Umesterung mit verschiedenen Polyestern

Die Blockcopolymere lassen sich dadurch herstellen, dass man zwei oder mehrere Homo- oder Copolyester in der Schmelze intensiv durchmischt. Die verschiedenen Polyester reagieren über die kettenverknüpfenden Estergruppen unter intermolekularem Zwischenkettenaustausch (vgl. W.M. Stevels, A. Bernard, P. van de Witt, P.J. Dijkstra und J. Feijen, "Block copolymers of poly(L-lactide) and poly( -caprolactone) or poly(ethylene glycol) prepared by reactive extrusion" Journal of Applied Polymer Science, Vol. 62 (1996) 1295-1301). Auf diese Weise lassen sich strukturell verschiedene Homopolyester oder auch Homopolyester mit Copolyestern zu Blockcopolymeren umsetzen. Die Blockcopolymere können auch aus einem Homopolymer und einem Monomer hergestellt werden. Zur Umesterung von nieder- bzw. mittelmolekularen PLA-Proben aus den vorherigen Versuchsreihen wurden verschiedene Polyester ausgewählt und getestet. Zur Auswahl gehören zwei verschieden PHBHx-Typen und PBS.

Poly(3-Hydroxybutyrat-co-3-Hydroxyhexanoat) (PHBHx) ist ein neues Mitglied der PHA-Familie, das seit kurzem in großem Maßstab hergestellt wird (vgl. G. Q. Chen, G. Zhang, S. J. Park und S. Y. Lee "Industrial scale production of poly(3-hydroxybutyrate-co-3-hydroxyhexanoate)" Appl. Microbiol. Biotechnol. 2001, 57, 50-5. PHBHx zeigt aufgrund von Langkettenverzweigungen, die die Kristallinität und Schmelztemperatur reduzieren, ein deutlich anderes Verhalten im Vergleich zu PHB.

Polybutylensuccinat (PBS) ist ein kommerziell verfügbares biologisch abbaubares Polymer. Hochmolekulares PBS schmilzt bei 114 bis 118 °C und hat einen Glasübergang bei -40 °C. Die biologisch abbaubaren Blockcopolyester können durch eine Schmelzpolykondensation von OH-terminierten PBS-Präpolymere als Weich-Segment und PLA als Hart-Segment erhalten werden. Die Glasübergangstemperatur dieser Copolyester liegt zwischen den Glasübergangstemperaturen von PLA und PBS in Abhängigkeit von der Länge der PLA-Blöcke (vgl. C. Ba, J. Yang, Q. Hao, X. Liu und A. Cao "Syntheses and physical characterization of new aliphatic triblock poly (l-lactide-b-butylene succinate-b-l-lactide)s bearing soft and hard biodegradable building blocksy" Biomacromolecules 2003, 4, (6), 1827-1834; L. Jia, L. Yin, Y. Li, Q. Li, J. Yang, J. Yu, Z. Shi, Q. Fang und A. Cao "New Enantiomeric Polylactide-block-Poly(butylene succinate)-block-Polylactides: Syntheses, Characterization and in situ Self-Assembly" Macromolecular bioscience 2005, 5, (6), 526-538). Die Flexibilität der PLA-Blöcke wird durch PBS-Blöcke deutlich verbessert.

### Allgemeine Reaktionsbedingungen

In einem Dreihalskolben, ausgestattet mit einer Destillationsbrücke, einer Gaseinleitung (oder Vakuumlinie), einer Vorlage, einem Blasenzähler (oder Kühlfalle) und einem Magnetrührer mit Ölbad, wurde PLA bzw. OLA, PHBH oder PBS im Verhältnis 50:50 und mit 0,5 Gew.-% Zr(acac)₄ als Katalysator geschmolzen. Die Reaktion wurde 8 h unter Stickstoffatmosphäre (oder Vakuum) durchgeführt. Mit "PHBH-7mol" wird der Anteil des Hexanoats im PHBH bezeichnet. Unter "OLA-COOH" wird carboxyterminierte oligomere PLA bezeichnet, die aus Milchsäure und Adipinsäure hergestellt wurde. "PBS-OH" ist ein OH-terminiertes PBS-Präpolymer. In der Tabelle 1 sind die Parameter zusammengefasst.

**Tabelle 1: Bedingungen der Transesterifikation von PLA bzw. OLA mit verschiedenen Polyestern; das Gewichtsverhältnis von Komponente 1 zu Komponente 2 betrug stets 1 : 1**

| **Versuch** | **Komponente 1** | | | **Komponente 2** | | | **T [°C]** |
|---|---|---|---|---|---|---|---|
| | | **Mₙ [g/mol]** | **M_{w} [g/mol]** | | **Mₙ [g/mol]** | **M_{w} [g/mol]** | |
| CoPLA 1 | PLA | 1.500 | | PHBH-7mol | 193.200 | 473.700 | 165 |
| CoPLA 2 | PLA | 1.400 | | PHBH-7mol | 193.200 | 473.700 | 165 |
| CoPLA 3 | OLA-COOH | 700 | 1.200 | PBS-OH | 9.900 | 22.300 | 180 |
| CoPLA 4 | OLA-COOH | 700 | 1.200 | PBS-OH | 1.900 | 2.800 | 180 |

Die PLA-Komponenten wurden ohne vorherige Aufreinigung eingesetzt.

### Polymerisation von PLA und PHBH-7mol

Die Copolyester aus PLA und PHBH sind gelbliche, harte, elastische und trübe Materialien. Nach der Extraktion wurden pulverförmige weiße Polymere erhalten. In Abhängigkeit von der Reaktionsführung wurde ein unterschiedlicher Verlauf der Reaktion zwischen PLA und PHBH-7mol beobachtet. Unter Stickstoffatmosphäre wurde eine große Menge an Dilactid gebildet. Bei der Reaktionsführung unter Vakuum wurde keine Dilactidbildung festgestellt. Die Reaktion zwischen PLA und PHBH-11mol verlief ebenfalls ohne Dilactidbildung.

Mittels GPC wurden die Molmassen der erhaltenen Polymere und deren Molmassenverteilungen bestimmt. Der unter Stickstoffatmosphäre hergestellte Copolyester aus PLA und PHBH-7mol wies eine Polydispersität von 3,17 und eine bimodale Verteilung auf, d. h. es liegt ein Gemisch aus höher- und niedermolekularen Bestandteilen vor. Das Elugramm von der im Vakuum hergestellten Polymer-Probe aus PLA und PHBH-7mol zeigt ebenfalls eine bimodale Verteilung.

Die Auswertung des GPC-Elugramms des unter Stickstoffatmosphäre hergestellten Copolymers aus PLA und PHBH-7mol hat eine Molmasse Mₙ von 4.200 g/mol und eine Molmasse M_{w} von 13.400 g/mol ergeben. Der Copolyester, der im Vakuum hergestellt wurde, hat eine zahlenmittlere Molmasse Mₙ von 3.800 g/mol, M_{w} von 10.700 g/mol und eine Polydispersität von 2,82.

Bedingt durch die langen Reaktionszeiten und den Einsatz von Katalysator bei hochmolekularem PHBH hat vermutlich ein Abbau stattgefunden. Dadurch sind kurzkettige Moleküle mit flexiblen und zugänglichen Endgruppen bzw. aktiven Zentren entstanden, die wiederum teilweise mit PLA-Enden zu einem Blockpolymer reagiert haben.

Nach der Aufreinigung beider Proben wurde eine Molmasse Mₙ bei 6.500 g/mol, M_{w} von 13.000 g/mol und die Polydispersität M_{w}/Mₙ von 2,1 gemessen. Trotz der Aufreinigung waren die Polymer-Proben bimodal verteilt.

Das Schmelzverhalten der erhaltenen Polyester-Proben wurde thermoanalytisch mittels DSC untersucht. Die Glasübergangstemperatur des Polymers aus PLA und PHBH-7mol liegt zwischen den Glasübergangstemperaturen der Ausgangspolymere und beträgt 5,3 °C. Ein endothermer Peak bei 23,7 °C könnte der Nachkristallisation von PHBH entsprechen. Bei 74 °C folgt die Nachkristallisation von PLA. Der Schmelzpeak weist ein doppeltes Maximum auf. Der Schmelzpunkt liegt bei 124 °C.

### Polymerisation von OLA und PBS

Die Polymere aus OLA und PBS sind gelbliche, hart-elastische Materialien. Die GPC-Messungen der Proben aus OLA-COOH und PBS-OH ergaben einen Mₙ-Wert von 2.800 und ein M_{w}-Wert von 4.600 g/mol. Eine Zunahme der Molmassen deutet darauf hin, dass ein Copolymer hergestellt wurde.

Die Copolyester aus OLA-COOH und PBS-OH wurden mittels DSC thermisch untersucht. Der Copolyester ist ein teilkristallines Polymer mit einem Glasübergang bei - 13,4 °C. Die Glasübergangstemperatur des Copolyesters liegt zwischen -40 °C für PBS und 2,4°C für OLA-COOH (2 mol-% Adipinsäure). Ein einzelner Glasübergang deutet darauf hin, dass die amorphe PBS- und PLA-Segmente gut verträglich sind, was zur Ausbildung einer gemischten amorphen Phase geführt haben könnte. Der Schmelzpunkt von PBS-OH liegt bei 114 °C. Der Schmelzpunkt des Copolymers ist in Richtung zu tieferen Temperaturen verschoben und wurde bei 82 °C bestimmt. Eine Nachkristallisation findet bei ca. 49 °C statt.

### 2.4.2.2. Umesterung mit Polyolen

Die Eigenschaften von PLA können durch die Copolymerisation mit verschiedenen Di- und/oder Polyolen eingestellt werden. Als Comonomere können PEG, PPG oder 1,4-Butandiol (1,4-BDO) eingesetzt werden.

### Allgemeine Reaktionsbedingungen

In einem Dreihalskolben, ausgestattet mit einer Destillationsbrücke, einer Gaseinleitung, einer Vorlage, einen Blasenzähler (bzw. Kühlfalle) und einen Magnetrührer mit Ölbad, wurde PLA bzw. OLA-COOH und Polyol sowie Zr(acac)₄ oder Zn(acac)₂ als Katalysator geschmolzen und 8 h unter Stickstoffatmosphäre gerührt. In Tabelle 2 sind die Reaktionsparameter zusammengefasst. Die Zahlenangabe hinter den Polyglykolen gibt die Molekülmasse M_{w} der Verbindungen wieder.

**Tabelle 2: Zusammenfassung der durchgeführten Versuche; das Gewichtsverhältnis von Komponente 1 zu Komponente 2 betrug stets 80 : 20**

| **Versuch** | **Komponente 1** | | | **Komponente 2** | **T [°C]** |
|---|---|---|---|---|---|
| | | **Mₙ [g/mol]** | **M_{w} [g/mol]** | | |
| CoPLA 5 | OLA-COOH | 850 | | PEG1000 | 180 |
| CoPLA 6 | OLA-COOH | 850 | | PEG4000 | 180 |
| CoPLA 7 | PLA | 3.600 | 9.300 | PPG2025 | 180 |
| CoPLA 8 | PLA-COOH | 3.100 | 4.600 | PPG2025 | 180 |

OLA-COOH wurde durch die Kondensation von Milchsäure mit 2 mol-% Adipinsäure hergestellt. PLA-COOH wurde durch die Reaktion von niedermolekularer PLA und 2 Gew.-% Bernsteinsäuredichlorid erhalten. Die COOH-terminierten PLA bzw. OLA wurden als Makromonomere eingesetzt, da die Funktionalität der Endgruppen des Polymers Auswirkungen auf das Molekulargewicht des Multiblockcopolymere hat.

### Polymerisation von PLA mit PEG

Die Polymere aus OLA-COOH und PEG1000 und PEG4000 sind feste, leicht gelbliche, elastische Produkte. Als Ausbeute der hergestellten Blockcopolymere wurde ein Wert von 97 % bezogen auf die Gesamtmasse der eingesetzten PolymerKomponenten bestimmt.

Die Gesamtmolmasse der PLA- und PEG1000-Segmente wurde zu 1.850 g/mol berechnet. Die GPC-Messergebnisse zeigten, dass das Polymer aus OLA-COOH und PEG1000 die Molmassen Mₙ von 4.100 g/mol und M_{w} von 7.500 g/mol aufweist. Das Polymer aus OLA-COOH und PEG4000 weist die Molmassen Mₙ von 3.500 g/mol und M_{w} von 9.900 g/mol auf. Die Probe war bimodal verteilt. Die hergestellte Probe besteht aus einem hochmolekularen Anteil (Mₙ von 18.700 g/mol, M_{w} von 19.900 g/mol) und aus einem niedermolekularen Teil (Mₙ von 2.300 g/mol, M_{w} von 3.500 g/mol). Anhand der Molmassenzunahme des resultierenden Polymers kann angenommen werden, dass ein Copolyester gebildet wurde. Reines Polyethylenglykol mit einem Molekulargewicht von 1000 g/mol (PEG1000) ist ein weißer Feststoff und schmilzt bei ca. 37 °C, PEG4000 schmilzt bei ca. 55 °C.

### Polymerisation von PLA mit PPG2025

Neben den Polyethylenglykolen wurde Polypropylenglykol 2025 (PPG2025) zur Synthese von Copolymeren eingesetzt. Zunächst wurden die Copolymere aus der nachkondensierten PLA-Probe mit einem zahlenmittleren Molekulargewicht von 3.600 g/mol hergestellt. Das PLA-Material wurde vorher nicht aufgereinigt. Die Gesamtmolmasse der PLA- und PPG2025-Segmente dieses Copolymers wurde zu 5.600 g/mol berechnet.

Die GPC-Messergebnisse zeigen, dass das Rohprodukt aus PLA-SSP (Mₙ=3.600 g/mol) und PPG2025 die Molmassen Mₙ von 7.100 und M_{w} von 12.200 g/mol aufweist. Das Copolymer aus COOH-terminierten PLA (Mₙ=3.100 g/mol) und PPG2025 hat fast identische Werte für Mₙ von 7.200 g/mol und M_{w} von 11.800 g/mol. Betrachtet man die Gesamtmolmasse der PLA- und PPG2025-Segmente und die Molmassen der erhaltenen Copolymere, ist aus den GPC-Messungen nicht eindeutig erkennbar, ob ein Blockcopolymer oder ein Blend vorliegt.

Die hergestellten Polymere wurden mittels DSC untersucht. Die Glasübergangstemperatur der Polymere auf Basis von PLA und PPG ist niedriger als die von PLA vor der Einführung der flexiblen PPG-Segmente.

Die Glasübergangstemperatur des Copolymers aus PLA und PPG2025 liegt zwischen den Glasübergangstemperaturen der Ausgangspolymere und beträgt 7,0 °C und 9,5 °C, wenn entsprechend PLA-SSP bzw. PLA-COOH eingesetzt wurden. Ein endothermer Peak bei 85 °C könnte der Nachkristallisation von PLA entsprechen. Der Schmelzpeak weist ein doppeltes Maximum auf.

### 2.4.2.2.1. Herstellung von Rückgratpolymeren durch Transesterifikation von OLA-COOH bzw. ODLA-COOH gemäß Abschnitt 2.3.2 mit Polyolen

Ein charakteristisches Merkmal üblicher Haftklebstoff-Basispolymere sind Glasübergangstemperaturen im Bereich von -70 bis -20 °C. Die thermischen Eigenschaften von PLA können durch die Transesterifikation mit Polyolen eingestellt werden.

Hierfür wird COOH-terminierte oligomere Milchsäure gemäß Kapitel 2.3.1 mit Polyethylenglykol, mittlere Molmasse 1.000 g/mol (PEG1000), und Polypropylenglykol, mittlere Molmasse 2.000 g/mol (PPG2000), umgesetzt. Das OLA-COOH/PEG1000- bzw. OLA-COOH/PPG2000-Verhältnis wurde auf 50/50 und 80/20 festgelegt. Die Molmassenbestimmung der hergestellten Copolymere mit Polyolen mittels GPC zeigte wie erwartet höhere Molmassen als die Summe der mittleren Molmassen der Ausgangspolymere. Durch die IR-spektroskopische Untersuchungen konnte die Bildung eines Copolymers bestätigt werden.

Es ist bekannt, dass die Glasübergangstemperatur T_{g} und die Schmelztemperatur Tₘ mit zunehmendem PPG-Gehalt im Copolymer abnehmen. PPG mit ataktischer Mikrostruktur ist amorph und weist eine Glasübergangstemperatur von -75 °C bis -60 °C auf. Aufgrund der T_{g} der PPG-reichen Phase wird bei RT der kautschukelastische Charakter des Materials erhöht.

Von den Copolymeren mit unterschiedlichem Gehalt an PPG2000 wurden DSC-Messkurven aufgenommen. Das Copolymer aus OLA-COOH und PPG2000 mit einem Verhältnis von 50/50 zeigt eine deutlich niedrigere T_{g} (- 32 °C) als ein Copolymer mit einem Verhältnis von 80/20 (T_{g} von 4 °C).

Das Copolymer OLA-COOH/PPG2000 (80/20) weist außerdem ausgeprägte Schmelz- und Kristallisationsvorgänge auf. Der Schmelzpeak in der 2. Aufheizkurve weist ein doppeltes Maximum auf. Hier finden zwei aufeinander folgende Kristallisationsprozesse statt: Proben wurden zunächst beim Abkühlvorgang kristallisiert, wobei die Zeit zur vollständigen Kristallisation nicht ausreichend ist, und dann bei nachfolgender Aufheizung vollständig kristallisiert. Der Schmelzvorgang bei dem Muster mit einem Verhältnis von 50/50 ist schwach ausgeprägt.

Im Vergleich zu den Copolymeren aus PPG2000, ist ein Copolymer aus OLA-COOH und PEG1000 (50/50) amorph. Es wurden weder Schmelz- noch Kristallisationsprozesse detektiert. Die Untersuchungen der thermischen Eigenschaften der Copolymere zeigen, dass es sich bei dem Copolymer um ein Multiphasen-System mit zwei getrennten Glasübergangstemperaturen handeln könnte. Es könnte eine vollständige Phasenseparation mit zwei getrennten T_{g} stattgefunden haben.

### 2.4.3. Herstellung von Rückgratpolymeren auf Basis von Polyesterurethanen

### Allgemeines

Aliphatische Polyester, wie Polymilchsäure, müssen für akzeptable mechanische Eigenschaften ein hohes Molekulargewicht aufweisen. Der Syntheseweg der direkten Polykondensation von Milchsäure ist jedoch zeit- und kostenintensiv. Alternativ kann die hochmolekulare PLA in einem zweistufigen Verfahren synthetisiert werden. Zuerst wird die Milchsäure polykondensiert und dann erfolgt eine Erhöhung des Molekulargewichts mittels einer Reaktion mit Diisocyanaten. Das Endprodukt ist ein thermoplastisches Polyesterurethan. Zur Synthese von Polyesterurethanen können verschiedene Diisocyanate als Vernetzermolekül bzw. als Kettenverlängerer eingesetzt werden, wie beispielsweise 2,4-Toluoldiisocyanat (2,4-TDI), 2,6-Toluoldiisocyanat (2,6-TDI), Isophorondiisocyanat (IPDI), 4,4'-Diisocyanatodiphenylmethan (4,4'-MDI), 2,4'-Diisocyanatodiphenylmethan (2,4'-MDI), polymeres Diphenylmethandiisocyanat (pMDI) oder Hexamethylendiisocyanat (HDI). Die Kettenverlängerung erfolgt durch Reaktion der Hydroxygruppen des Polyesters mit den Isocyanatgruppen des Diisocyanates.

Zhong et al. (vgl. W. Zhong, J. Ge, Z. Gu, W. Li, X. Chen, Y. Zang und Y. Yang "Study on Biodegradable Polymer Materials Based on Poly-(lactic acid). I. Chain Extending of Low Molecular Weight Poly(lactic acid) with Methylenediphenyl Diisocyanate" Journal of Applied Polymer Science 1999, 74, (10), 2546 - 2551) haben die Kettenverlängerung von niedermolekularer PLA mit MDI zu einer hochmolekularen PLA untersucht und festgestellt, dass die erhaltenen Polymere eine höhere thermische Stabilität aufweisen. Auf die thermische Stabilität der resultierenden Polymere wurde aus der Erhöhung der Glasübergangstemperatur geschlossen. Die Synthese von thermoplastischen Polyesterurethanen wurde von Härkönen et al. (M. Härkönen, K. Hiltunen, M. Malin und J. V. Seppälä "Properties and polymerization of biodegradable thermoplastic poly (ester-urethane)" Journal of Macromolecular Science, Part A 1995, 32, (4), 857-862) untersucht. Die OH-terminierten Präpolymere wurden aus L-Milchsäure und einer geringen Menge von 1,4-Butandiol hergestellt. Die Herstellung von Polyesterurethanen wurde in der Schmelze unter Verwendung von aliphatischen Diisocyanaten als Kettenverlängerern durchgeführt. Die mechanischen Eigenschaften dieser Polyesterurethane sind vergleichbar mit denen von Polylactiden, die durch eine Ringöffnungspolymerisation erhalten wurden. Die rheologischen Messungen zeigen, dass das Polymer verarbeitbar mit herkömmlichen Methoden wie Spritzguss und Extrusion ist.

Ein neuartiges biologisch abbaubares Polyesterurethan, bestehend aus PLLA- und PBS-Segmenten, wird durch Kettenverlängerungsreaktion von PLLA-OH und PBS-OH mit Toluol-1 ,4-Diisocyanat (TDI) als Kettenverlängerer synthetisiert. Die Eigenschaften sind durch Variation der Molmassen von Präpolymeren und das Massenverhältnis von PLLA-OH zu PBS-OH steuerbar. Die hergestellten Polyesterurethane sind stabiler gegen thermische Zersetzung als PLLA-OH. Zugversuche bewiesen, dass die Zähigkeit der PLLA durch Einführung von PBS-Segmenten weitgehend verbessert wird (vgl. J.-B. Zeng, Y.-D. Li, Q.-Y. Zhu, K.-K. Yang, X.-L. Wang und Y.-Z Wang "A novel biodegradable multiblock poly(ester urethane) containing poly(l-lactic acid) and poly(butylene succinate) blocks" Polymer 2009, 50, (5), 1178-1186).

Der Verlauf der Kettenverlängerung wird durch die Menge an eingesetzten Diisocyanaten bestimmt. Ebenfalls sind die Endgruppen des Polyesters für den Kettenverlängerungsprozess von großer Bedeutung (vgl. A. Södergärd und M. Stolt "Industrial production of high molecular weight poly(lactic acid)", in "Poly(lactic acid)", eds.: Auras, R.; Lim, L.-T., Selke, S. E. M.; Tsuji, H., Wiley, 2010).

Die Kettenverlängerungsreaktion zwischen äquimolaren Mengen an Diisocyanaten und hydroxyterminierten Präpolymeren verläuft sehr schnell. Die Molmasse erreicht ihr Maximum schon in wenigen Minuten. Nach dem Erreichen des Maximums findet die Abnahme der Molmasse durch die thermische Zersetzung statt. Eine Zunahme der gewichtsmittleren Molmasse M_{w} und keine Veränderung der zahlenmittleren Molmasse Mₙ kann als Indiz der stattfindenden Nebenreaktionen gedeutet werden, wenn die eingesetzten Mengen an Diisocyanat erhöht werden.

Die Carboxygruppen können ebenfalls mit Isocyanaten zu Amiden, Carbonsäureanhydriden oder Harnstoffe reagieren. Die Anwesenheit von Carboxygruppen würde die Reaktion zwischen den Hydroxy- und Isocyanatgruppen verzögern. Die Säurezahl (SZ) der Präpolymere ist ein wichtiger Parameter und somit nützlich als Werkzeug zur Steuerung der Kettenverlängerungsreaktion (vgl. A. Södergärd und M. Stolt "Industrial production of high molecular weight poly(lactic acid)", in "Poly(lactic acid) ", eds.: Auras, R.; Lim, L.-T., Selke, S. E. M.; Tsuji, H., Wiley, 2010).

Das stöchiometrische Verhältnis für eine Umsetzung von Isocyanaten mit Polyolen wird über das NCO/OH-Verhältnis (Index) angegeben. Bei der Umsetzung von Polyisocyanaten mit Polyolen ist es für den Polymeraufbau und die resultierenden Polymereigenschaften sehr entscheidend, welches stöchiometrische Verhältnis vorliegt. Die Umsetzung difunktioneller Polyole mit difunktionellen Isocyanaten führt nur bei äquivalenten Mengen beider Reaktionspartner zu hochmolekularen Polymeren. Bei Überschuss an Polyol sinkt die erreichte Molmasse entsprechend dem Überschuss proportional, man erhält OH-terminierte Oligomere. Beim Überschuss von Isocyanat erhält man dementsprechend NCO-terminierte, reaktive Präpolymere, deren Molmasse sich über das stöchiometrische Verhältnis von NCO zu OH einstellen lässt (vgl. B. Müller und W. Rath "Formulierungen von Kleb- und Dichtstoffen" 2004).

### Allgemeine Reaktionsbedingungen

Zur Kettenverlängerung von niedermolekularen Präpolymeren der Milchsäure wurde pMDI mit einem NCO-Gehalt von ca. 31,5 Gew.-% (DESMODUR 1520 A20, Fa. Bayer MaterialScience AG) eingesetzt. pMDI wird als polymeres MDI, technisches MDI oder polymeres Diphenylmethandiisocyanat bezeichnet. Des Weiteren wurde auch 2,4-TDI zur Kettenverlängerung eingesetzt.

In einem Kolben, ausgestattet mit einer Destillationsbrücke, einen Blasenzähler, einer Vorlage, einer Gaseinleitung und einem Magnetrührer mit Ölbad, wurden OH-terminierte PLA bzw. OH-terminierte OLA bei 160°C unter Stickstoffatmosphäre geschmolzen. Zu dem Reaktionsgemisch wurde tropfenweise Diisocyanat-Lösung zugegeben und weiter 1 Stunde bei 160°C gerührt. In Tabelle 3 sind die durchgeführten Versuche zur Kettenverlängerung von oligo- und niedermolekularem PLA zusammengefasst.

**Tabelle 3: Zusammenfassung der durchgeführten Versuche**

| **Versuch** | **m**_{(PLA)} **[g]** | **M(PLA) [g]** | **OHZ [gKOH/ kg]** | **C_{(OH)} [%]** | **Typ DI** | **m(DI) [g]** | **C_{(DI)} [Gew.-%]** | **C_{(NCO)} [%]** | **NCO/ OH** |
|---|---|---|---|---|---|---|---|---|---|
| CoPLA 9 | 15,12 | 806 | 139 | 4,23 | pMDI | 0,63 | 4 | 31,5 | 0,1 |
| CoPLA 10 | 52,92 | 4.900 | 23 | 0,70 | pMDI | 5,66 | 10 | 31,5 | 1,7 |
| CoPLA 11 | 36,16 | 4.900 | 23 | 0,70 | pMDI | 0,38 | 1 | 31,5 | 0,17 |
| CoPLA 12 | 36,28 | 4.900 | 23 | 0,70 | pMDI | 0,91 | 2,5 | 31,5 | 0,4 |
| CoPLA 13 | 36,77 | 4.900 | 23 | 0,70 | TDI | 0,40 | 1 | 48,3 | 0,3 |
| CoPLA 14 | 38,12 | 4.900 | 23 | 0,70 | TDI | 2,05 | 5 | 48,3 | 1,52 |
| CoPLA- 15 | 36,77 | 4.900 | 23 | 0,70 | TDI | 0,7019 | 2,5 | 48,3 | 0,54 |

Zur Identifizierung der Polyesterurethane auf Basis von PLA und Diisocyanaten wurde unter anderem IR-Spektroskopie angewandt. Die IR-Spektren der Polyester-urethane zeigen zwei charakteristische Banden bei 1530 cm⁻¹ und 1220 cm⁻¹, von denen die letztere auch von einer Polyesterbande im gleichen Bereich überlagert sein kann. Die Polyesterurethane haben zwei intensive Banden bei 1150 cm⁻¹ bis 1250 cm⁻¹. Im IR-Spektrum lassen sich aromatische Isocyanate an einigen charakteristischen Banden erkennen. Z.B. TDI: Banden bei 450 und 1600 cm⁻¹ und MDI: Banden bei 500, 1410 und 1600 cm⁻¹. Sehr einfach ist die Bestimmung von Rest-NCO mit Hilfe der IR-Spektroskopie: die NCO-Bande bei 2270 cm⁻¹ ist eine der intensivsten Banden und wird durch die Absorption anderer Molekülgruppen praktisch nicht gestört.

### Reaktionen von PLA mit pMDI

Vergleicht man die NCO/OH-Verhältnisse der durchgeführten Versuche (Tabelle 3), so wird es deutlich, dass nur bei dem Versuch CoPLA 10 NCO-terminierte reaktive Polymere erhalten wurden. Solche Polymere können mit OH-terminierten Polyolen weiter reagieren.

Das NCO/OH-Verhältnis spiegelt sich entsprechend in den Molmassen der erhaltenen Polymere wider. Die Molmassen der hergestellten Polymere nahmen nach der Kettenverlängerung zu. Dies weist darauf hin, dass die Reaktion zwischen pMDI und den OH-Gruppen stattgefunden hat. Die Molmassen Mₙ und M_{w} der Copolymere stiegen von Mₙ 4.000 g/mol und M_{w} 7.000 g/mol des Ausgangsmaterials mit steigender pMDI-Konzentration bis zu Mₙ von 7.000 g/mol und M_{w} von 13.400 g/mol an. Eine starke Zunahme der Molmassen, insbesondere M_{w}, und dementsprechend eine starke Erhöhung der Polydispersität wurde bei einem Versuch erzielt, bei dem pMDI mit ca. 70 % im Überschuss vorlag. Hier wurden Mₙ-Werte von 14.600 g/mol, M_{w}-Werte von 70.300 g/mol und PD von 4,8 bestimmt. Der Überschuss der Isocyanatgruppen kann auch mit Carboxygruppen der PLA zu Amidbindungen reagieren oder mit der Urethangruppe zu Kettenverzweigung oder Vernetzung führen. Die Kettenverzweigung führt zur Verbreitung der Molmassenverteilung. Das ist wahrscheinlich der Grund für die größere Molmassenverteilung (MWD) der kettenverlängerten PLA-Proben im Vergleich zum Präpolymer.

Die DSC-Messergebnisse der durch die Kettenverlängerung hergestellten PLA-Proben zeigen, dass die Glasübergangstemperatur der Copolymere höher als die des Ausgangsmaterials ist. Die Glasübergangstemperatur nach der Kettenverlängerung liegt fast 20°C höher als die Glasübergangstemperatur vor der Kettenverlängerung. Die T_{g} der untersuchten Copolymere aus OH-terminiertem PLA und pMDI liegt im Bereich von 44,7 °C bis 61,5 °C mit steigenden Mengen an eingesetztem pMDI. Die T_{g} des Ausgangsmaterials liegt bei 39 °C. Wenn anstatt PLA-OH OLA-OH mit der Molmasse von ca. 806 g/mol als Polyol-Komponente mit pMDI umgesetzt wurde, dann lag die T_{g} nur bei 17,6 °C.

### Reaktionen von PLA mit TDI

Die Molmassen der hergestellten Polymere nahmen im Vergleich zu den eingesetzten Präpolymeren zu. Die Molmassen Mₙ und M_{w} der Polymere stiegen von Mₙ 4.900 g/mol und M_{w} 7.300 g/mol des Ausgangsmaterials bis zu Mₙ von 5.400 g/mol und M_{w} von 8.500 g/mol, wenn nur 1,0 Gew.-% TDI eingesetzt wurde. Wenn der TDI-Gehalt auf 5 Gew.-% erhöht wurde, so stiegen der Mₙ-Wert bis zu 7.800 g/mol und der M_{w}-Wert bis zu 13.800 g/mol. Bei diesen Versuchen wurde keine Zunahme der Polydispersität festgestellt, d. h. hierbei hat keine Vernetzungsreaktion stattgefunden.

Die Polyester-Proben wurden nach der Kettenverlängerung mit TDI mittels DSC untersucht. Mit steigendem NCO/OH-Verhältnis wurde eine signifikante Steigerung der Glasübergangstemperatur beobachtet. Dies deutet darauf hin, dass die erhaltenen Polyesterurethane eine höhere thermische Stabilität als PLA aufweisen.

### 2.4.3.1. Herstellung von Rückgratpolymeren auf Basis von Polyesterurethanen durch Reaktion hydroxyterminierter Polymilchsäuren gemäß Abschnitt 2.3.1

Thermoplastische Polyester-Urethane können in einem zweistufigen Verfahren synthetisiert werden. Zuerst wird die Milchsäure polykondensiert und anschließend erfolgt eine Erhöhung des Molekulargewichts mittels einer Reaktion mit Diisocyanaten. Durch die stufenweise Polyaddition von verschiedenen Komponenten lassen sich prinzipiell Segmente an definierten Stellen in die Ketten einbauen. Somit können die Eigenschaften wie Aktivität, Viskosität und Hydrophilie in gewünschter Weise gesteuert werden (vgl. G. Oertel "Polyurethane, Kunststoff Handbuch" 1993).

Die Synthese von PEU auf Basis von oligomerer Milchsäure im Rahmen dieses Vorhabens erfolgt in zwei Schritten. Zunächst wird eine OH-terminierte oligomere Milchsäure hergestellt, wie in Kapitel 2.3.1. beschrieben wurde. In einem nächsten Schritt findet die Reaktion zwischen OLA-OH und einem Diisocyanat statt.

Als Kettenverlängerer wurden folgende Diisocyanate eingesetzt:
Diphenylmethandiisocyanat (MD), DESMODUR^{®}44M, Fa. Bayer Material-Science AG, NCO-Gehalt ca. 33,6 w-%), monomeres aromatisches Diisocyanat;
Diphenylmethandiisocyanat mit hohem Anteil des 2,4'-lsomeren (MDI_{Isomer}, DESMODUR^{®}2460M, Fa. Bayer MaterialScience AG, NCO-Gehalt ca. 33,6 w-%), monomeres aromatisches Diisocyanat;
1:1-Gemisch von 2,2,4- und 2,4,4-Trimethylhexamethylendiisocyanat (TMDI, VESTANAT^{®}TMDI, Fa. Evonik Industries, NCO-Gehalt ca. 40 w-%), methylgruppenverzweigtes, aliphatisches Diisocyanat.

Das stöchiometrische Verhältnis für eine Umsetzung von Isocyanaten mit Polyolen wird über das NCO/OH-Verhältnis (Index) angegeben. Die OH-Zahl und SäureZahl der eingesetzten Präpolymere wurden nach DIN EN ISO 2554 und DIN EN ISO 2114 bestimmt. Aus den erhaltenen Daten wurde die Menge des Diisocyanats berechnet.

Der Erfolg einer Kettenverlängerung von Polymeren auf Basis von PLA-OH, Polyethylenglykol (PEG) und Polypropylenglykol (PPG) ist abhängig von der Reaktivität der verschiedenen Hydroxygruppen. PLA-OH und PPG enthalten eine sekundäre Hydroxygruppe, deren Aktivität gegenüber Isocyanatgruppen im Vergleich zu den primären Hydroxygruppen in PEG geringer ist. Bei einem höheren Verhältnis PEG/PLA-OH im Reaktionssystem verläuft die Kettenverlängerung daher deutlich schneller, weil sich mehr primäre Hydroxygruppen im Reaktionsgemisch befinden. Im vorliegenden Berichtszeitraum wurden verschiedene Polyesterurethane hergestellt und auf ihre Eignung zur Klebstoffherstellung untersucht:
Polyesterurethane auf Basis von OLA-OH und verschiedenen Polyolen und
Polyesterurethane auf Basis von OLA-OH.

### 2.4.3.1.1. Herstellung von Polyesterurethanen auf Basis von OLA-OH und verschiedenen Polyolen

Die Polyesterurethane (PEU) wurden zunächst aus OH-terminierter oligomerer Milchsäure (OLA-OH) sowie PEG1000 und PPG2000 als Polyole in einem Verhältnis 50/50 durch die Umsetzung mit MDI oder MDIᵢₛₒₘₑᵣ hergestellt. Die OLA-OH wurde mit 2 mol-% 1,4-BDO ohne Katalysator hergestellt. Für die durchgeführten Versuche wurde OLA-OH aus der gleichen Charge eingesetzt, um die Reproduzierbarkeit der Versuche zu überprüfen und die Unterschiede im Verlauf der Reaktion besser erkennen zu können.

Die gemessene Mₙ lag bei 1.200 g/mol, M_{w} bei 1.600 g/mol und PD bei 1,259. Die Gesamtmolmasse der OLA- und PEG1000-Segmente wurde zu 2.200 g/mol berechnet. Die Molmassenbestimmung ergab im Falle des PEG1000 eine fast dreimal höhere Molmasse im Vergleich zu den Molmassen der ursprünglichen Materialien.

Die Molmassenwerte lagen für Mₙ bei 6.200 g/mol und für M_{w} bei 17.100 g/mol. Die Muster wiesen mit einer Polydispersität von 2,8 eine breite Molmassenverteilung auf. Bei den Umsetzungen von PEG1000 wurde kein Unterschied in der Molmasse zwischen den eingesetzten MDI-Typen festgestellt.

Die Gesamtmolmasse der OLA- und PPG2000-Segmente beträgt 3.200 g/mol. Die Molmassen der Polyester-Urethane aus PPG2000 waren mit einem Mₙ-Wert von 6.700 g/mol ebenfalls mehr als doppelt so hoch wie die der Ausgangskomponenten. Die M_{w}-Werte lagen bei 18.400 g/mol. Die Polydispersität betrug 2,7. Es wurde festgestellt, dass die Polymere aus MDIᵢₛₒₘₑᵣ mit Mₙ = 8.400 g/mol und M_{w} = 17.400 g/mol höhere Molmassen als die Polymere aus MDI (Mₙ = 6.700 g/mol und M_{w} = 18.400 g/mol) ergeben.

IR-spektroskopische Untersuchungen der Muster zeigen, dass eine vollständige Umsetzung stattgefunden hat.

Die Polymer-Muster aus OLA-OH und Polyolen wurden nach der Kettenverlängerung mit DESMODUR^{®}-Typen mittels DSC untersucht. Alle untersuchten Copolymere zeigten sowohl im ersten als auch im zweiten Aufheizvorgang nur einen Glasübergang. Da weder Schmelz- noch Kristallisationsprozesse detektiert wurden, handelt es sich um amorphe Polymere. Es ist eine Abhängigkeit der Glasübergangstemperatur vom Typ des eingesetzten Diisocyanats zu erkennen. Die Polyester-Urethane wiesen einen niedrigen T_{g} auf, wenn die Umsetzung mit MDIᵢₛₒₘₑᵣ stattfand. Ebenfalls zu erkennen ist, dass die T_{g} von Polyester-Urethanen mit PEG1000 niedriger sind als die von Polyester-Urethanen mit PPG2000.

### 2.4.3.1.2. Herstellung von Polyester-Urethanen auf Basis von OLA-OH aus linearem Diol und aromatischen Diisocyanaten

Die PEU-Synthese auf Basis von OLA-OH (mit 1,4-Butandiol OH-terminiert) erfolgte zunächst ohne Katalysator. Die Reaktionszeit wurde anhand der Literaturrecherche auf 20 min ab der Zugabe des Diisocyanates festgelegt. Die Menge an Diisocyanat wurde durch die Endgruppenbestimmung der OLA berechnet und betrug ca. 20 Gew.-%. Die Ergebnisse der Molmassenbestimmung zeigten, dass die Umsetzung mit Diisocyanaten nur zur Verdoppelung der Molmassen im Vergleich zu den Ausgangsmaterialien geführt hat. Es wurde kein Unterschied zwischen OLA-OH und ODLA-OH festgestellt. Die IR-Spektren wiesen keine freien NCO-Banden auf. Das deutet darauf hin, dass die eingesetzte Menge an Diisocyanat vollständig umgesetzt wurde.

Die Ergebnisse der Molmassenbestimmung zeigen deutlich, dass die Addition von Diisocyanaten an die sekundäre OH-Gruppe der OLA ohne Katalysator sehr langsam verläuft und die Molmassen der PEU nur langsam aufgebaut werden.

Die Polymer-Muster aus OLA-OH bzw. ODLA-OH wurden nach der Kettenverlängerung mit DESMODUR^{®}-Typen mittels DSC untersucht. Auch in dieser Versuchsreihe zeigen alle untersuchten Copolymere sowohl im ersten als auch im zweiten Aufheizvorgang nur einen Glasübergang. Da weder Schmelz- noch Kristallisationsprozesse detektiert wurden, handelt es sich um amorphe Polymere.

Zunächst wurden die ohne einen Katalysator hergestellten Muster mittels DSC untersucht und die Ergebnisse analysiert. Es stellte sich heraus, dass die Polyester-Urethane aus mit 2 mol-% 1,4-BDO terminierter OLA-OH und MDI einen höheren T_{g} als die Muster aus mit 2 mol-% 1,4-BDO terminierter ODLA-OH (50/50) und MDI zeigen. Der Unterschied zwischen den Mustern aus derselben ODLA-OH (50/50) und MDI und MDIᵢₛₒₘₑᵣ war gering. Die T_{g} nimmt für ein kettenverlängertes PEU bis zu 54 °C im Vergleich zu der OLA-OH von 20 °C zu.

Um die Kettenverlängerung zu beschleunigen, wurden verschiedene Katalysatoren eingesetzt. Der Katalysator wurde entweder schon bei der OLA-OH-Synthese (mit 1,4-Butandiol OH-terminiert) oder/und bei der Reaktion mit den Diisocyanaten eingesetzt. Als Katalysator wurden zunächst Zinkacetylacetonat (Zn(acac)₂) und Zirkoniumacetylacetonat (Zr(acac)₄) mit einer Konzentration von 0,5 w-% getestet. Diese Versuche zur Kettenverlängerung von OLA-OH bzw. ODLA-OH mit DESMODUR^{®}-Typen haben jedoch gezeigt, dass der Molmassenaufbau trotz des eingesetzten Katalysators Zinkacetylacetonat (Zn(acac)₂) oder Zirkoniumacetylacetonat (Zr(acac)₄) nur sehr langsam verläuft.

Des Weiteren wurde festgestellt, dass die Zusammensetzung der oligomeren Milchsäure (mit D-Anteilen von 50, 25 oder 20 % oder ohne D-Anteil) keinen Einfluss auf die Geschwindigkeit der Kettenverlängerung hat. Aufgrund der guten Eigenschaften wurde OLA mit 20 % D-Anteil für die weiteren Versuchsreihen ausgewählt.

Da Zinkacetylacetonat und Zirkoniumacetylacetonat sich als nur mäßig geeignete Katalysatoren für die Kettenverlängerung erwiesen hatten, wurde in einem weiteren Versuch die Kettenverlängerung von ODLA-OH (Mₙ= 3.700 g/mol; M_{w}= 6.100 g/mol) mit Zinnoctoat (SnOct₂) durchgeführt. Hierfür wurde der zeitliche Verlauf der Molmassen (Mₙ und M_{w}) bei der Reaktion von ODLA-OH mit MDI_{Isomer} in der Schmelze bei 160 °C untersucht. Die Ergebnisse der Molmassenbestimmung haben gezeigt, dass schon 10 min nach der Katalysatorzugabe ein Mₙ-Wert von 11.500 g/mol erreicht wurde. Die Molmassenverteilung war mit 1,9 relativ eng. Nach der Gesamtreaktionszeit von 80 min wurde ein Polymer mit der Mₙ von 9.900 g/mol erhalten. Die Reaktionszeit der weiteren Versuche zur Herstellung von Polyester-Urethanen wurde anhand der erhaltenen Ergebnisse angepasst.

Die katalytisch hergestellten Polyester-Urethane aus mit 2 mol-% 1,4-BDO terminierter ODLA-OH (80/20) und MDIᵢₛₒₘₑᵣ weisen höhere Glasübergangstemperaturen auf als Polyester-Urethane aus mit 2 mol-% 1,4-BDO terminierter ODLA-OH (50/50). Der Unterschied zwischen 50 w-% und 20 w-% D-Anteil bei den Polyester-Urethanen bezüglich der T_{g} beträgt ca. 7 °C.

### 2.4.3.1.3. Herstellung von Polyesterurethanen auf Basis von OLA-OH aus verzweigten Diolen und aromatischen Diisocyanaten als Rückgratpolymere

Um die innere Festigkeit der Rückgratpolymere durch den Einbau von Seitengruppen zu erhöhen, wurden weitere Versuche zur Synthese von Polyesterurethanen mit den verzweigten Diolen 2-Ethyl-1,3-Hexandiol (EHD) und 1,2-Hexandiol (1,2-HD) durchgeführt. Zur Beschleunigung der Kettenverlängerung wurde Titan(IV)-isopropylat (Ti(ⁱOPr)₄) und Titan(IV)-butylat (Ti(OBu)₄) als Katalysator eingesetzt, da zink- und zirkoniumbasierte Katalysatoren ungeeignet sind. Als Diisocyanat wurde DESMODUR^{®}2460M (MDIᵢₛₒₘₑᵣ) verwendet, da die damit hergestellten Polyesterurethane bessere Eigenschaften aufweisen.

Das Polyesterurethan aus OLA-OH (EHD) und 0,5 w-% Ti(ⁱOPr)₄ wies nach der Umsetzung mit 12 w-% MDIᵢₛₒₘₑᵣ nach 150 min Reaktionszeit eine mittlere Molmasse Mₙ von 9.000 g/mol, M_{w} von 18.700 g/mol und eine Polydispersität von 2,07 auf. Wird ODLA-OH (80/20) anstatt OLA-OH unter gleichen Bedingungen mit 12 w-% MDIᵢₛₒₘₑᵣ umgesetzt, so wurde nach 2 h ein Polymer mit Mₙ von 14.300 g/mol, M_{w} von 47.900 g/mol und PD von 3,35 erhalten.

Das Polyesterurethan aus OLA-OH (1,2-HD) und 0,5 w-% Ti(iOPr)₄ wies nach der Umsetzung mit 12 w-% MDIᵢₛₒₘₑᵣ nach 150 min Reaktionszeit eine mittlere Molmasse Mₙ von 8.000 g/mol, M_{w} von 17.100 g/mol und eine Polydispersität von 2,15 auf. Wird ODLA-OH (80/20) anstatt OLA-OH unter gleichen Bedingungen mit 8 w-% MDIᵢₛₒₘₑᵣ umgesetzt, so wurde nach 1 h ein Polymer mit Mₙ von 18.500 g/mol, M_{w} von 49.600 g/mol und PD von 2,69 erhalten.

Das Polyesterurethan aus OLA-OH (HD) und 0,5 w-% TiOBu₄ wies nach der Umsetzung mit 11 w-% MDIᵢₛₒₘₑᵣ nach 30 min Reaktionszeit eine mittlere Molmasse Mₙ von 10.700 g/mol, M_{w} von 23.300 g/mol und eine Polydispersität von 2,18 auf. Es wurden während der Reaktionszeit mehrere Proben entnommen, um die Abhängigkeit der Molmassen von der Reaktionszeit festzustellen.

Die Molmasse nimmt im Vergleich zu der Molmasse des Ausgangsmaterials schon 7 min nach der Zugabe von MDI_{Isomer} stark zu. Nach 10 min erreichen die Mₙ-Werte ihr Maximum und bilden für die nächsten 25 min ein Plateau aus. Die M_{w}-Werte steigen in dieser Zeit nur geringfügig. Anhand dieser Ergebnisse wurde festgelegt, dass die Reaktionszeit für weitere Versuchsreihen mit diesem Katalysator auf max. 20 min beschränkt wird.

Die Ergebnisse der Untersuchungen von Mustern mit EHD im Vergleich zu den Mustern mit 1,4-BDO zeigen, dass amorphe Polymere erhalten wurden.

Die Muster wurden mittels DSC untersucht. Die 1. und 2. Aufheizkurve der untersuchten Muster zeigen, dass diese amorph sind. Der Glasübergang des Musters ohne D-Anteil liegt 2 °C höher als der Glasübergang des Musters mit D-Anteil. Das Muster mit D-Anteil und 1,4-BDO weist eine deutlich höhere Glasübergangstemperatur als das Muster mit 1,2-Hexandiol auf. Das deutet darauf hin, dass die Kettenverzweigungen in den PEU zu den weicheren und elastischeren PEU führen.

### 2.4.4. Herstellung von Rückgratpolymeren durch Umsetzung von ODLA mit Epoxiden

Eine weitere Möglichkeit zur Herstellung von Haftklebstoffen auf Basis gesättigter Polyester besteht in der Funktionalisierung mit Carboxygruppen, die dann nach Umsetzung mit Diepoxiden umgesetzt werden. Die auf diese Weise entstehenden Klebstoffe weisen hohe Festigkeiten bei gleichzeitig guter Flexibilität auf.

Für diese Umsetzung wurde oligomere Milchsäure (ODLA (80/20)) und JONCRYL^{®}4368-CS eingesetzt. JONCRYL^{®}4368-CS, erhältlich von der Firma BASF SE, ist ein multifunktionales epoxydiertes Reaktivpolymer auf Basis von Acrylat/Styrol-Copolymeren, das speziell für die Anwendungen von PLA und PET in der Lebensmittelindustrie formuliert wurde (EU/FDA-Zulassung; FDA: Food and Drug Administration). JONCRYL^{®}4368-CS ist ein polymerer Kettenverlängerer mit einer gewichtsmittleren Molmasse M_{w} von 6.800 g/mol und einem Äquivalentgewicht der Epoxidgruppen von 285 g/mol.

JONCRYL^{®}4368-CS kann durch Ringöffnung mit den COOH-Gruppen der oligomeren Milchsäure reagieren, wodurch es zur Kettenverlängerung kommt. Durch die Umsetzung mit JONCRYL^{®}4368-CS wird weiterhin die hydrolytische Stabilität erhöht.

Die Konzentration von JONCRYL^{®}4368-CS betrug 2,5 bzw. 5 Gew.-% bezogen auf die Menge der ODLA (Mₙ 3.700 g/mol). Es wurde festgestellt, dass das Drehmoment während der Reaktion ein Maximum durchläuft. Der Anstieg des Drehmomentes kann durch die Zunahme der Viskosität erklärt werden und ist ein Hinweis darauf, dass die Reaktion des Epoxid-Rings mit den COOH-Gruppen der ODLA stattgefunden hat.

Mittels GPC wurden die Molmassen der erhaltenen Polymere und deren Molmassenverteilungen bestimmt. Die mittels GPC aufgenommenen Elugramme von beiden Mustern mit 2,5 bzw. 5 w-% JONCRYL^{®}4368-CS zeigen eine bimodale Verteilung. Die Molmassenverteilung ist mit 2,97 und 4,3 entsprechend breit. Neben dem höhermolekularen Anteil wiesen die hergestellten Muster einen Anteil an niedermolekularen Verbindungen auf. Die Molmassen Mₙ liegen bei den hochmolekularen Anteilen beider Muster bei 46.300 und 43.000 g/mol und M_{w} bei 60.600 und 63.000 g/mol. Der niedermolekulare Anteil weist Mₙ-Werte von 3.900 und 3.600 g/mol sowie M_{w}-Werte von 6.300 g/mol und 5.700 g/mol auf. Die Werte des niedermolekularen Anteils entsprechen den Werten der Ausgangsmaterialen. Die Gesamtmolmassen der beiden Muster waren Mₙ 4.660 g/mol und 4.660 g/mol sowie M_{w} 11.400 und 20.400 g/mol.

Die Produkte nach der Umsetzung von 2,5 bzw. 5,0 w-% JONCRYL^{®}4368-CS und ODLA sind amorphe Materialien mit einem T_{g} von 35 °C.

### 3. Basismischungen für Klebstoffzusammensetzungen

### 3.1. Spezielle Analysemethoden

### 180°-Schälfestigkeitstest (180°-peel-Test)

Die Durchführung des 180°- Schälfestigkeitstest erfolgte gemäß AFERA 5001 (vgl. DIN EN 1939). Die Probenvorbereitung der hergestellten Formulierungen ist um die Beschichtung der Trägerfolie mithilfe eines automatischen Filmziehgeräts (Fa. Zehntner) und eines 50 µm Rakels erweitert.

Mit einer Beschichtungsgeschwindigkeit von 50 mm/s ergab sich ein resultierendes Flächengewicht von ca. 18 g/m².

### 3.2. Entwicklung von Klebstoffformulierungen

Im Rahmen der Formulierungen bestand die Zielsetzung zunächst darin, eine geeignete Basisrezeptur zu finden. Zu diesem Zweck erfolgte eine Vorauswahl geeigneter Zusatzstoffe, wie Tackifier bzw. Weichmacher (TF/WM), sowie eines Antioxidationsmittels (AO). Dabei spielen Vorversuche insbesondere zur Ermittlung der Verträglichkeit der synthetisierten PLA- und CoPLA-Typen, dem Rückgratpolymer (BM), mit den weiteren Komponenten eine wichtige Rolle.

### Versuchsplan

Um erste Aussagen über das Schmelzverhalten der Rohstoffe treffen zu können, wurden Vorversuche durchgeführt. Dabei wurden sowohl die Verträglichkeiten einzelner Komponenten getestet, als auch das Verhältnis zwischen Bindemittel (BM), d.h. dem Rückgratpolymer (PLA, CoPLA), und Tackifier/Weichmacher (TF/WM) variiert.

Bei der Auswahl der Tackifier/Weichmacher wurde neben der technischen Eignung auch darauf geachtet, dass sie auf Basis nachwachsender Rohstoffe (Nawaro) sind. Bei der Beurteilung der technischen Eignung wurden hauptsächlich Stoffgruppen berücksichtigt, die ein besonders gutes Verträglichkeitspotenzial mit dem Bindemittel vermuten lassen. Dieses basiert auf ähnlichen Eigenschaften im Vergleich zum PLA- oder CoPLA-Grundpolymer.

Die daraus resultierende Vorauswahl der Tackifier/Weichmacher umfasst daher folgende Stoffgruppen: Citrate (Cit), Polyethylenglykole (PEG), polare Kolophoniumester (pKE) und aromatische Harze (arH).

Als Antioxidationsmittel (AO) wurde das in diesem Anwendungsbereich bereits etablierte 2,2-bis(((3-(3,5-di-tert-butyl-4-hydroxyphenyl)propanoyl)oxy)methyl)propan-1,3-diyl-bis(3-(3,5-di-tert-butyl-4-hydroxyphenyl)propanoat) ausgewählt, das der Rezeptur mit einem Anteil von 1 % zugesetzt wird. Der Bindemittelanteil in der Rezeptur wurde analog zu Rezepturen auf anderer Rohstoffbasis auf einen Bereich zwischen 25 und 35 % festgesetzt. Die restliche Ansatzmenge von 65 bis 75 % besteht aus dem Tackifier/Weichmacher.

Die Vorversuche zur Untersuchung der Formulierungsfähigkeit der Bindemittel-Muster erfolgten zunächst unter Variation von drei Parametern:
1. BM-TF-Kombination (aus 4 Stoffgruppen jeweils 3 TF/WM)
2. Verhältnis BM:TF/WM (3 Mengenverhältnisse)
3. Temperatur (3 Schmelztemperaturen)

Die Ergebnisse dieser ersten Versuche lieferten Aussagen über die Formulierungsfähigkeit der Polymilchsäuren (PLA) und ihrer Derivate (CoPLA). Das entscheidende Evaluationskriterium hierfür ist die Homogenität des Formulierungsprodukts. Bei Inhomogenität treten Abscheidungen eines Bestandteils auf oder es bildet sich eine grießartige Masse - beide Fälle führen sowohl bei der Formulierung, als auch der Verarbeitung zu Schwierigkeiten.

Vor diesem Hintergrund wurde zunächst ein Plan erstellt, der die Kombinationen jeweils eines Bindemittels mit drei TF/WM-Produkten einer Stoffgruppe beinhaltete. Anhand dieses Versuchsplans wurde mit 12 Vorversuchen untersucht, ob ein Tackifier/Weichmacher grundsätzlich für eine Formulierung mit PLA bzw. CoPLA als Bindemittel geeignet ist.

Pro BM-Muster werden insgesamt 36 geplante Versuche durchgeführt, wenn die Eignung für die einzelnen Tackifier/Weichmacher festgestellt wird. Auf diese Weise werden wichtige Anhaltspunkte für das Verhalten und die Eigenschaften der entsprechenden Rohstoffkombination gewonnen, sowie eine Grundlage für weitere Optimierungsschritte geschaffen.

### Formulierung / Prüfung

Zur Formulierung werden Aluminium-Becher mit nominalem Fassungsvermögen von 250 ml verwendet, die genau in die Vorrichtung des Liebisch-Thermoblocks passen. Die Gesamtmenge für einen Ansatz wurde auf mindestens 50 g und maximal 100 g festgelegt. Die einzelnen Komponenten werden in den Alu-Becher eingewogen und mithilfe des Thermoblocks aufgeschmolzen. Währenddessen wird die Masse gerührt, sodass eine gute Durchmischung der Komponenten erreicht wird. Sowohl während des Aufschmelzvorgangs und der Durchmischung der jeweiligen Komponenten, als auch nach Abkühlung wird die Verträglichkeit visuell beurteilt. Die erste Prüfung auf die Eigenklebrigkeit wird bei Raumtemperatur nach der sog. "Finger-Tack"-Methode durchgeführt. Weitere Eigenschaftsmerkmale, wie Zähigkeit oder Viskosität, werden ebenfalls nach Abkühlung des Produkts eingeschätzt.

### Ergebnisse

Die Vorversuche haben bezüglich der Verträglichkeit gezeigt, dass die BM-Produkte mit den verschiedenen Tackifiern/Weichmachern gut misch- und formulierbar sind. Unterschiede zwischen PLA-Roh- und Reinprodukt sind während des Schmelzens und Durchmischens nicht zu erkennen. Allerdings sind die Ergebnisse für die verschiedenen Tackifier/Weichmacher nach Abkühlung und Abbinden sehr unterschiedlich. Die Produkte der Polyethylenglykol- und Kolophoniumester-Gruppe lieferten zunächst nur wenige verwertbare Ergebnisse, da die Formulierungsprodukte teilweise wachsartig vorlagen oder sich einzelne Bestandteile abgeschieden haben. Bei der Verwendung der Citrate allein wurden niedrigviskose Produkte erhalten. Im Gegensatz dazu waren die Produkte mit aromatischen Harzen hart und spröde.

Basierend auf diesen Vorversuchen und positiven Verträglichkeitstests zwischen Citraten und aromatischen Harzen, wurden diese zum 75 %-igen TF/WM-Anteil kombiniert und mit dem entsprechenden BM-Anteil (25 %) formuliert. Die Citrat-Komponente dient dabei als Weichmacher, die Harz-Komponente als Tackifier bzw. Klebrigmacher. Das Verhältnis von Harz zu Citrat wurde innerhalb des festgelegten Anteils (75 %) zwischen 10:90 und 80:20 verändert. Auf diese Weise konnten Produkte erzeugt werden, die bei Raumtemperatur dauerhaft klebrig sind. Einige weitere Eigenschaften, z.B. die Zähigkeit, scheinen sich in Abhängigkeit des Weichmacher-Anteils zu verändern.

Durch die visuelle Bewertung ausgewählter Eigenschaftsmerkmale und Beurteilung der Eigenklebrigkeit mittels "Finger-Tack" wurde eine viel versprechende Kombination von Bindemittel und einer Mischung zweier Tackifier/Weichmacher herausgefunden. Dabei handelt es sich um jeweils ein Produkt aus der Stoffgruppe der aromatischen Harze (arH 2) und der Citrate (Cit 3). Insbesondere Mischungen des Harzes mit dem Citrat in den Verhältnissen von 45:55 bis 35:65 lieferten eine gute Grundlage für die Weiterentwicklung von Klebstoffzusammensetzungen.

**Tabelle 4: Kriterien der visuellen Beurteilung und Einschätzung von Eigenschaftsmerkmalen ausgewählter Formulierungen**

| **Kombination** | | | | | **Eigenschaftsmerkmale** | | | | | | |
|---|---|---|---|---|---|---|---|---|---|---|---|
| **BM (25** %) | **TFIWM (75 %)** | | **TFIWM-Verhältnis** | | **Verträglichkeit** | **Homogenität** | **Viskosität** | | **Härte** | **Zähigkeit** | **Finger-Tack** |
| PLA 38 | arH 2 | Cit 3 | 45:55 | | ++ | ++ | +++ | | + | -- | ++ |
| | | | 40:60 | | +++ | +++ | ++ | | - | +++ | + |
| | | | | | +++ | ++ | ++ | | - | + | + |
| PLA 40 | arH 2 | Cit 3 | 45:55 | | +++ | +++ | + | | -- | + | ++ |
| | | | 40:60 | | +++ | +++ | ++ | | - | ++ | ++ |
| | | | | | +++ | ++ | ++ | | - | + | ++ |
| PLA 41 | arH 2 | Cit 3 | 45:55 | | +++ | +++ | + | | - | ++ | ++ |
| | | | 40:60 | | +++ | +++ | +++ | | ++ | - | ++ |
| | | | | | +++ | +++ | +++ | | ++ | - | ++ |
| | | | 35:65 | | +++ | +++ | +++ | | ++ | -- | + |
| | | | | | +++ | +++ | +++ | | +++ | --- | + |
| PLA 49 | arH 2 | Cit 3 | 45:55 | | ++ | - | + | | + | - | + |
| | | | 40:60 | | ++ | + | + | | - | + | - |
| CoPLA 05 | arH 2 | Cit 3 | 40:60 | | +++ | +++ | + | | - | ++ | ++ |
| CoPLA 17 | arH 2 | Cit 3 | 45:55 | | +++ | ++ | + | | + | + | + |
| | | | 40:60 | | +++ | ++ | ++ | | + | ++ | + |
| CoPLA 19 | arH 2 | Cit 3 | 45:55 | | +++ | + | ++ | | - | + | + |
| | | | 40:60 | | +++ | + | + | | -- | ++ | + |
| CoPLA 21 | arH 2 | Cit 3 | 45:55 | | +++ | ++ | ++ | | - | ++ | ++ |
| | | | 35:65 | | +++ | ++ | ++ | | - | + | ++ |
| | | | | +++ | | | | --- | | | |
| **Verträglichkeit** | | | | sehr gut mischbar keine Ab- | | | | nicht mischbar | | | |
| **Homogenität** | | | | scheidungen | | | | Abscheidungen; grießartig | | | |
| **Viskosität** | | | | sehr hoch | | | | gering, flüssig | | | |
| **Härte** | | | | sehr hart | | | | sehr weich | | | |
| **Zähigkeit** | | | | sehr zäh, dehnbar | | | | nicht dehnbar | | | |
| **Finger-Tack** | | | | hohe Klebrigkeit | | | | keine Klebrigkeit | | | |

Die Auswahl und Beurteilung der Eigenschaftsmerkmale in der Darstellung der Ergebnisse (Tabelle 4) beruht auf der subjektiven Charakterisierung der jeweiligen Formulierung und bezieht sich innerhalb der Bewertung auf das gewünschte Eigenschaftsprofil. Um dieses Ziel erreichen zu können, müssen die eingesetzten Komponenten zunächst als verträglich bezeichnet werden können. Diese Aussage bezieht sich hauptsächlich auf den Schmelz- und Mischungsvorgang. Die weiteren Einschätzungen betreffen dagegen das bereits abgekühlte Produkt. Homogenität bedeutet dabei, dass sich keine Abscheidungen bilden. Die Beurteilung der Viskosität beinhaltet die Abgrenzung zwischen flüssig und fest. Bei der Härte und Zähigkeit wird die Dehnbarkeit und Festigkeit berücksichtigt. Durch die Methode des "Finger-Tack" wird die Eigenklebrigkeit bewertet.

Die Basisrezeptur mit einem BM-Anteil von 25% (Tabelle 5) resultiert aus den dargestellten Ergebnissen der Formulierungen und dient als Grundlage für die zukünftige Vorgehensweise. Der TF/WM-Gesamtanteil von 75% gliedert sich in die o.g. verschiedenen Verhältnisse auf.

**Tabelle 5: Basisrezeptur für die Formulierung mit einem BM-Anteil von 25% und verschiedenen Verhältnissen zwischen aromat. Harz und Citrat**

| **Komponente** | **w-% [m_{ges} = 50 g]** | | | |
|---|---|---|---|---|
| **Bindemittel** | 25 | | | |
| **Aromatisches Harz** | 75 | 33,75 | 30,00 | 26,25 |
| | | 45 : 55 | 40 : 60 | 35 : 65 |
| **Citrat** | | | | |
| | | 41,25 | 45,00 | 48,75 |
| **Antioxidans** | 1,0 | 1,0 | 1,0 | 1,0 |

In dem Bereich der Harz-Citrat-Verhältnisse von 55:45 bis 65:35 besteht weiterer Untersuchungsbedarf. Es wird vermutet, dass verschiedene PLAs bzw. CoPLAs unterschiedliche Ausprägungen der Eigenschaftsmerkmale zur Folge haben.

Des Weiteren gibt es bisher Anhaltspunkte, dass eine Erhöhung des Bindemittel-Anteils auf 30 oder 35% ebenfalls eine Veränderung der Produkteigenschaften verursacht.

### 3.3. Untersuchung von Basisformulierungen für Klebstoffzusammensetzungen

Für diese Untersuchungen der Klebstoffformulierungen wurde aus Vorversuchen zunächst eine Basisrezeptur mit Basiskomponenten festgelegt, die als Grundlage für alle vergleichenden Tests diente (Tabelle 6).

**Tabelle 6: Basisrezeptur mit den eingesetzten Verhältnissen der Komponenten (Rückgratpolymer, Tackifier, Weichmacher, Antioxidationsmittel)**

| **Komponente** | **Gewichtsanteile** |
|---|---|
| | **[m_{ges} = 50 g]** |
| **Polymer** | **25,0** |
| **Kohlenwasserstoffharz** | **45,0** |
| *Tackifier-Weichmacher-System (Verh. 60:40)* | |
| **Citrat** | **30,0** |
| Antioxidans | 1,0 |

Bei den verwendeten Komponenten handelt es sich um die zuvor beschriebenen Rückgratpolymere auf Basis von Polymilchsäure (25 %), Kohlenwasserstoffharze als Tackifier (45 %), Citronensäureester als Weichmacher (30 %) und zusätzlich ein Antioxidationsmittel, nämlich 2,2-bis(((3-(3,5-di-tert-butyl-4-hydroxyphenyl)-propanoyl)oxy)methyl)propan-1,3-diyl-bis(3-(3,5-di-tert-butyl-4-hydroxy-phenyl)pro-panoat), das der Rezeptur mit einem Anteil von 1 % zugesetzt wird. Diese Rezeptur basiert auf den zuvor geschilderten Untersuchungen bezüglich zur Verträglichkeit der Komponenten und Eigenklebrigkeit der Formulierungen.

Die Ergebnisse der Einschätzung von Formulierungseigenschaften sind in der folgenden Tabelle (Tabelle 8) exemplarisch dargestellt und mithilfe der zugehörigen Legende in Tabelle 7 beschrieben.

**Tabelle 7: Legende zu den bewerteten Eigenschaftsmerkmalen der Formulierungen**

| | **+ + +** | **- - -** |
|---|---|---|
| **Homogenität** | keine Abscheidungen | grießartig, Phasentrennung |
| **Viskosität** | hoch, kein Fließen | gering, flüssig |
| **Festigkeit** | fest, elastisch | weich, plastisch verformbar |
| **Zähigkeit** | sehr zäh, dehnbar | nicht dehnbar, abreißen |
| **Finger-Tack** | hohe Eigenklebrigkeit | keine Eigenklebrigkeit |

Am Beispiel des Eigenschaftsprofils eines kommerziell erhältlichen Haftklebstoffmusters, nachfolgend auch als Marktprodukt 1 bezeichnet, können die Anforderungen an die formulierten Klebstoffe beschrieben werden. Neben einer ausgeprägten Eigenklebrigkeit (Finger-Tack +++) besteht eine der Hauptanforderungen in der Homogenität der einzelnen Komponenten (+++). Bei inhomogenen Gemischen, Phasentrennungen o.ä. ist von einer Beeinträchtigung der Klebefähigkeit auszugehen. Die Bewertungen hinsichtlich der Viskosität, Festigkeit und Zähigkeit sind im Zusammenhang zu sehen. Die Konkurrenz zwischen Festigkeit und Zähigkeit liegt darin, dass das Material dehnbar im Sinne von zäh ist, nicht abreißt oder bricht. Gleichwohl ist eine gewisse Festigkeit gefordert, um das Material möglichst kohäsiv zu gestalten. Im Gegensatz dazu stünde eine geringe Viskosität, die ein flüssiges Material beschreiben würde, das weder zäh noch fest ist. Die Festigkeit müsste gerade so hoch sein, dass das Material einerseits nicht flüssig vorliegt und andererseits weder hart noch spröde ist, sodass ein Abreißen erst bei sehr großer Dehnungsbeanspruchung erreicht wird.

**Tabelle 8: Visuelle Bewertung von Eigenschaftsmerkmalen des Marktprodukts und Vergleich mit der Formulierung reiner Poly-L-Milchsäure gemäß Basisrezeptur.**

| **Polymertyp (in Formulierung gem. Basisrezeptur)** | **Eigenschaftsmerkmale** | | | | |
|---|---|---|---|---|---|
| | **Homogenität** | **Viskosität** | **Festigkeit** | **Zähigkeit** | **Finger-Tack** |
| reine Poly-L-Milchsäure | ++ | ++ | ++ | -- | -- |
| Marktprodukt 1 | +++ | + | + | +++ | +++ |

Bei diesem Vergleich besteht der größte Unterschied hinsichtlich der Zähigkeit. Die PLA-Formulierung liegt viskos und fest vor, verfügt jedoch über keinerlei Dehnbarkeit, sodass das Material sehr leicht abreißt. Weiterhin liegen bei der PLA-Formulierung gute Anhaltspunkte bezüglich Homogenität und Eigenklebrigkeit vor. Die weiterführende Charakterisierung der in Frage kommenden Formulierungen erfolgt zum jetzigen Zeitpunkt sowohl rheologisch mittels Oszillationsmessung, als auch anhand eines Abzugsversuchs von Haftklebestreifen. Für diese beiden Methoden wurde jeweils ein entsprechendes Referenzprodukt als Vergleichsgrundlage ausgewählt:

| | |
|---|---|
| DMA | Marktprodukt 1 |
| 180°-peel-Test | Marktprodukt 2 |

Die versuchsbezogene Referenzauswahl dient einer verbesserten Vergleichbarkeit der einzelnen Messergebnisse. Die im 180°-peel-Test ermittelte Klebfestigkeit wird direkt mit einem kommerziell erhältlichen Klebstreifen (Marktprodukt 2) verglichen, um bei der Prüfkörperherstellung den Prozess der Folienbeschichtung auszuklammern. Im Folgenden werden zunächst die Untersuchungsergebnisse der gewählten Referenzmaterialien beschrieben, woraufhin der anschließende Ergebnisteil die Resultate der Formulierungsversuche beinhaltet.

### DMA-Untersuchung des Referenzmaterials (Marktprodukt 1)

Bei einem Vergleich der Kurven von Polymer und Referenz lässt sich feststellen, dass sie sich ähnlich verhalten. Jedoch liegen die entscheidenden Anstiege bzw. Abfälle der Formulierungskurven um ca. 30 bis 40 °C in Richtung niedrigerer Temperaturen verschoben. Verglichen mit der Marktprodukt 1-Referenz befinden sich diese charakteristischen Bereiche der Kurven beider Proben (Formulierung und Polymer) bei niedrigeren Temperaturen.

### Untersuchung des Referenzmaterials im 180°-peel-Test (Marktprodukt 2)

Die Anforderungen bezüglich des Flächengewichts für die Klebstoffe liegen je nach Anwendung zwischen 10 und 25 g/m², sodass für die Prüfungen mit 18 g/m² ein Richtwert im mittleren Bereich gewählt wurde. Die wie zuvor beschrieben hergestellten Probestreifen werden gemäß der AFERA-Vorschrift zu Prüfkörpern präpariert und gemessen.

Aus den Messungen der Marktprodukt 2-Filmstreifen resultiert ein Mittelwert für die Abzugskraft von 2,9 N/10 mm, mit einer Standardabweichung von ± 0,036 (1,2 %). Dieser wird als Referenzwert für die Untersuchungen zugrunde gelegt.

### 3.3.1. Untersuchungen mit Rückgratpolymeren auf Basis reiner Polymilchsäuren

Zunächst wurden Polymere auf Basis reiner Milchsäure mit und ohne D-Anteil als Klebstoffe anhand der Basisrezeptur formuliert. Die erste Beurteilung des Eigenschaftsprofils erfolgte visuell sowie haptisch, z.B. anhand der "Finger-Tack"-Methode und ist hier tabellarisch dargestellt.

**Tabelle 9: Visuelle Bewertung von Eigenschaftsmerkmalen der Formulierungen gemäß Basisrezeptur. Spalten links: Auflistung der 2 relevanten Rückgratpolymertypen mit unterschiedlicher Zusammensetzung (mit 20 oder 50 % D-Anteil). Vergleiche: Formulierung mit reiner PLA und Marktprodukt 1**

| **Polymertyp (in Formulierung gem. Basisrezeptur)** | | **Eigenschaftsmerkmale** | | | | |
|---|---|---|---|---|---|---|
| | | **Homogenität** | **Viskosität** | **Festigkeit** | **Zähigkeit** | **Finger-Tack** |
| + D-Anteil | 20 % | ++ | ++ | - | ++ | ++ |
| | 50 % | - | + | -- | ++ | + |
| reine Poly-L-Milchsäure | | ++ | ++ | ++ | -- | -- |
| Marktprodukt 1 | | +++ | + | + | +++ | +++ |

Die Formulierungen der beiden Polymere mit D-Anteil zeichnen sich beide durch verbesserte Eigenschaften hinsichtlich der Zähigkeit und Viskosität aus. Das Material ist jedoch sehr weich, was zwar für eine gewisse Dehnbarkeit sorgt, die innere Festigkeit ist jedoch herabgesetzt. Da an der Rezeptur ansonsten keinerlei Veränderungen vorgenommen wurden, ist dies auf die veränderten Eigenschaften des Rückgratpolymers zurückzuführen. Die Formulierung mit 50 %-D-Anteil-Polymer weist Anzeichen von Unverträglichkeiten in Form von Inhomogenitäten auf. Die mittels Finger-Tack getestete Eigenklebrigkeit ist bei der Formulierung des 20 %-D-Anteil-Polymers ausgeprägter und vergleichbar mit der Formulierung reiner Poly-L-Milchsäure. Rückgratpolymere mit einem D-Anteil von 20 % lassen, basierend auf dieser Einschätzung, das größere Potential vermuten.

Die Unterschiede der visuellen Beurteilung der Formulierungen lassen sich zunächst anhand der DMA-Untersuchungen der Polymere beschreiben. Der Vergleich beider mit D-Anteil-modifizierten Polymere zeigt sehr ähnliche Kurvenverläufe. Bezogen auf die reine Poly-L-Milchsäure lassen sich geringfügige Abweichungen feststellen.

Dadurch werden die Feststellungen aus Tabelle 9 bestätigt, die auf eine positive Weiterentwicklung der Formulierungen mit 20 %-D-Anteil-Polymeren hindeuten.

Die DMA-Messungen der Formulierungen mit den beiden D-Anteil-modifizierten Polymeren liefern als Ergebnisse fast deckungsgleiche Kurvenverläufe. Um die Charakteristika des Marktprodukts 1 zu erreichen, müssten die Kurven der Formulierungen weiter zu höheren Temperaturen verschoben sein.

Die visuelle Beurteilung (Homogenität) und die Auswertung der DMA-Kurven bestätigen die Annahme, dass ein gewisser Teil an D-Lactid im Polymer zu verbesserten Eigenschaften des Klebstoffs führt.

### 3.3.2. Untersuchungen mit Rückgratpolymeren auf Basis von Copolymeren der Polymilchsäuren und Polyolen

Die Copolymere mit Polyolen, Polypropylenglykol (PPG) und Polyethylenglykol (PEG), wurden ebenfalls gemäß der Basisrezeptur formuliert und die Eigenschaftsmerkmale analog zu der Beschreibung anhand der Legende in Tabelle 7 visuell beurteilt.

**Tabelle 10: Visuelle Bewertung von Eigenschaftsmerkmalen der Formulierungen gemäß Basisrezeptur. Spalten links: Auflistung der 3 relevanten Rückgratpolymertypen mit unterschiedlicher Zusammensetzung (Copolymere mit 20 oder 50 % Polyol-Komponente). Vergleiche: Formulierung mit reiner PLA und PDLA 20 % D, Marktprodukt 1**

| **Polymertyp (in Formulierung gern. Basisrezeptur)** | | **Eigenschaftsmerkmale** | | | | |
|---|---|---|---|---|---|---|
| | | **Homogenität** | **Viskosität** | **Festigkeit** | **Zähigkeit** | **Finger-Tack** |
| PPG2000 | 50 % | ++ | -- | --- | + | + |
| | 20 % | ++ | + | -- | ++ | ++ |
| PEG1000 | 50 % | + | -- | --- | + | + |
| reine Poly-L-Milchsäure | | ++ | ++ | ++ | -- | -- |
| 20 % D-Anteil | | ++ | ++ | - | ++ | ++ |
| Marktprodukt 1 | | +++ | + | + | +++ | +++ |

Eine weitere Möglichkeit die Vorteile der PLA-Polyol-Copolymere hinsichtlich ihrer niedrigen Glasübergangstemperaturen durch PPG oder PEG zu nutzen besteht darin, eine Kettenverlängerung durch Diisocyanate herbeizuführen und somit die Eigenschaften über ein höheres Molekulargewicht positiv zu beeinflussen. Ein weiterer Weg besteht in der direkten Kettenverlängerung durch Diisocyanat an den OH-Termini oligomerer Milchsäure.

### 3.3.3. Untersuchungen mit Rückgratpolymeren auf Basis von Polyester-urethanen

Es wurden weitere Polymere mit 20%igem D-Anteil mit Polyesterurethanen, bestehend aus unterschiedlichen Diolen mit isomerem MDI, betrachtet. Diese wurden gemäß der Basisrezeptur zu Klebstoffen formuliert und anschließend untersucht (Tabelle 11).

**Tabelle 11: Visuelle Bewertung von Eigenschaftsmerkmalen der Formulierungen gemäß Basisrezeptur. Spalten links: Auflistung der 2 relevanten Rückgratpolymertypen mit unterschiedlicher Zusammensetzung (2-Ethyl-1,3-hexandiol (2-E-1,3-HD), 1,2-Hexandiol (1,2-HD)). Vergleiche: Formulierung mit PDLA 20% D, 1,4-Butandiol, MDIᵢₛₒₘₑᵣ; Marktprodukt 1**

| **Polymertyp (in Formulierung gern. Basisrezeptur)** | | | **Eigenschaftsmerkmale** | | | | |
|---|---|---|---|---|---|---|---|
| | | | **Homogenität** | **Viskosität** | **Festigkeit** | **Zähigkeit** | **Finger-Tack** |
| 20 % D-Anteil | 2-E-1,3-HD | + MDIᵢₛₒₘₑᵣ | ++ | ++ | ++ | - | ++ |
| | 1,2-HD | | ++ | ++ | ++ | - | +++ |
| 20 % D-Anteil | 1,4-BDO | + MDIᵢₛₒₘₑᵣ | ++ | + | + | ++ | ++ |
| Marktprodukt 1 | | | +++ | + | + | +++ | +++ |

Die Formulierungseigenschaften konnten verbessert werden, allerdings bestehen weiterhin Defizite hinsichtlich der Zähigkeit. Dagegen konnten bessere Festigkeitseigenschaften und vor allem eine bessere Eigenklebrigkeit festgestellt werden.

Die Formulierungen der oben genannte Rückgratpolymere (Tabelle 11) n wurden aufgrund ihrer visuell beurteilten Eigenschaften und Eigenklebrigkeit mittels DMA sowie gemäß der Versuchsdurchführung für den 180°-peel-Test untersucht.

Bei der DMA-Messung der Rohpolymere zeigt das Polymer mit 1,2-Hexandiol ein vielversprechendes Ergebnis für die Kurvenverläufe bei Temperaturen oberhalb von 80 °C.

Bei allen untersuchten Polymeren fällt auf, dass die Kurven, im Gegensatz zu den bisherigen, eine Verschiebung zu höheren Temperaturen (nach rechts) aufweisen.

Die Formulierungen mit den oben genannten Polymeren (Tabelle 11) wurden anhand des 180°-peel-Tests auf ihre Klebfestigkeit untersucht. Die Versuchsdurchführung richtet sich nach der AFERA-Norm 5001 (DIN EN 1939). Je nach Aufbau des verwendeten Rückgratpolymers sind Unterschiede feststellbar. Dabei wird mit einigen Formulierungen der Referenzwert erreicht oder bereits übertroffen.

Der Vergleich mit den Messungen der ersten Formulierungen mit reiner PLA und auch mit 20 % D-Anteil zeigt, dass der Einsatz verzweigter Diole im Polymer positiven Einfluss auf die Klebfestigkeit hat. Die Formulierungen der Polymere mit 1,2-Hexandiol oder 2-Ethyl-1,3-Hexandiol zeigen mit Werten zwischen 2,5 und 3,5 N/10 mm vielversprechende Ergebnisse. Zieht man die DMA-Ergebnisse hinzu, kann dem mit 1,2-Hexandiol modifizierten Polymer das größere Potential für den Einsatz als Rückgratpolymer zugeschrieben werden.

Die Bruchbilder nach den 180°-peel-Tests wiesen sehr große Unterschiede im Vergleich zur Referenz auf. Im Gegensatz zu vollständigem Adhäsionsbruch bei der Referenzprobe (Marktprodukt 2), zeigte sich das Bruchbild der getesteten Formulierungen als nahezu vollständigen Transfer der Klebstoffschicht von der beschichteten Trägerfolie auf das Edelstahlsubstrat.

### 3.3.4. Untersuchungen mit Rückgratpolymeren auf Basis von Polymilchsäuren und Epoxiden

Als Alternative zu den PEU-Polymertypen wurden Copolymere mit JONCRYL^{®}4368-CS synthetisiert und die der Basisrezeptur entsprechenden Formulierungen untersucht. Die Beurteilung erfolgte analog zu den anderen Klebstoffproben zunächst visuell.

**Tabelle12: Visuelle Bewertung von Eigenschaftsmerkmalen der Formulierungen gemäß Basisrezeptur. Spalten links: Auflistung der 2 relevanten Rückgratpolymertypen mit unterschiedlichem Anteil (2,5 oder 5 %) des JONCRYL^{®}4368-CS. Vergleiche: PDLA 20 % D, 1,2-Hexandiol, Marktprodukt 1**

| **Polymertyp (in Formulierung gern. Basisrezeptur)** | | | **Eigenschaftsmerkmale** | | | | |
|---|---|---|---|---|---|---|---|
| | | | **Homogenität** | **Viskosität** | **Festigkeit** | **Zähigkeit** | **Finger-Tack** |
| 20 % D-Anteil | JONCRYL^{®}4 368-CS | 2,5 w-% | ++ | + | + | ++ | +++ |
| | | 5,0 w-% | ++ | + | + | ++ | +++ |
| 20 % D-Anteil | 1,2-HD | + MDIᵢₛₒₘₑᵣ | ++ | ++ | ++ | - | +++ |
| Marktprodukt1 | | | +++ | + | + | +++ | +++ |

Die Modifikation der Polymere mit JONCRYL^{®} hat weitere Eigenschaftsverbesserungen der Formulierung zur Folge. Durch das Polymer mit einem Anteil von 5 % konnte ein positiver Einfluss auf die Eigenklebrigkeit der Formulierung beobachtet werden. Zusätzlich wurden hinsichtlich Viskosität und Zähigkeit Fortschritte erzielt. Die Formulierungen auf Basis der in Tabelle 12 aufgeführten Rückgratpolymere in ihren Formulierungen wurden außerdem mittels DMA und dem 180°-peel-Test untersucht.

Bei der DMA-Messung der Rohpolymere mit 2,5 oder 5%-igem JONCRYL^{®}-Anteil wird als Vergleich das Polymer mit 1,2-Hexandiol herangezogen. Das Polymer mit 1,2-Hexandiol zeigte sehr gute Ergebnisse.

Die Formulierungen der Polymere mit unterschiedlichem JONCRYL^{®}-Anteil (Tabelle 12) wurden anhand des 180°-peel-Tests auf ihre Klebfestigkeit untersucht. Das Ergebnis der Formulierung des Polymers mit dem höheren JONCRYL^{®}-Anteil von 5 % zeigt sowohl einen Wert im Referenz-Bereich (2,5 N/10mm), als auch ein verbessertes Bruchbild. Die bisher vielversprechendsten Ergebnisse liegen bei Werten um 3,5 N/10mm, im Vergleich zur Referenzprobe (Marktprodukt 2) mit 2,9 N/10 mm. Entgegen der Vermutung anhand der DMA-Ergebnisse konnten Verbesserungen hinsichtlich des Bruchbildes erzielt werden. Bei beiden Formulierungen der JONCRYL^{®}-Polymere ist zu einem sehr großen Anteil Kohäsionsbruch festzustellen. Darin besteht eine deutliche Verbesserung, da der Transfer der Klebschicht von Folie auf Substrat sehr stark vermindert werden konnte. Im Fall der Referenz liegt dagegen ausschließlich Adhäsionsbruch vor.

### 4. Anwendungstechnische Untersuchungen

### 4.1. Analysemethoden

### Viskosität

Die Bestimmung der Viskosität erfolgt mit einem Brookfield-Rotationsviskosimeter in Anlehnung an DIN 53019 und DIN EN ISO 2555.

### DMA

Die Messung erfolgt mit einem Platte-Platte-System. Die Probe wurde in 2 °C-Schritten erwärmt (10 rad/s).

Für die nachfolgenden Messungen werden mit einem 30µm-Kastenrakel Klebstofffilme mit einer Breite von 25 mm auf einer 36 µm-dicken Hostaphanfolie hergestellt. Als Gegensubstrat werden Edelstahlplatten eingesetzt:

### Loop Tack

Die Bestimmung des Loop Tacks erfolgt in Anlehnung an FTM9.

### 180°-Schälfestigkeit

Die Bestimmung der 180°-Schälfestigkeit erfolgt in Anlehnung an FTM1. Die Prüfkörper werden vor der Abprüfung 20 min konditioniert.

### SAFT (shear adhesion failure temperature)

Die Bestimmung des SAFT-Wertes erfolgt in Anlehnung an ASTM D4498-07. Die Überlappungsfläche zwischen der Edelstahlplatte und der Hostaphanfolie beträgt 25 mm x 25 mm. Die Verklebung wird mit einem 100 g-Gewicht belastet. Die Prüfkörper werden vor der Abprüfung 10 min konditioniert. Die Ofentemperatur beträgt beim Start 40 °C und wird in 13 min-Intervallen um 5 °C erhöht.

### 4.2. Untersuchung der klebtechnischen Eignung der Rückgratpolymere und Optimierung der Rezepturen

Für alle nachfolgend genannten Anwendungen spielt die thermische Stabilität des Klebstoffs eine große Rolle. Die Klebstoffeigenschaften sollten durch eine thermische Belastung für 8 h bei Verarbeitungstemperatur nicht gravierend beeinträchtigt werden, so dass der Klebstoffanwender auch im Störfall oder bei nur geringen Abnahmemengen weitgehend uneingeschränkt die Produktion fortsetzen kann. Hierzu wird eine Klebstoffprobe bei Verarbeitungstemperatur für 48 h belastet. In Achtstunden-Intervallen wird die Probe auf ihre Farbentwicklung und auf Phänomene wie Phasentrennung, Vercrackungen, etc. untersucht.

Es wurden 3 Muster mit den Bezeichnungen Muster 1 (OLA-COOH + PBS-OH (80/20), Mₙ = 2030 g/mol), Muster 2 (OLA-COOH + PPG2000 (80/20), Mₙ = 3500 g/mol) und Muster 3 (reines PLA, nachkondensiert, Mₙ = 2600 g/mol) untersucht. Die Zusammensetzung ist in Tabelle 13 aufgeführt.

**Tabelle 13: Zusammensetzung der formulierten PLA-Proben**

| **Versuch** | **Anteil an Polymer [%]** | **Anteil an Novares TNA 120 [%]** | **Anteil an Novares TV 100 [%]** | **Anteil an Citrofol B II [%]** |
|---|---|---|---|---|
| Muster 1 | 25,00 | 32,50 | 16,25 | 26,25 |
| Muster 2 | 25,00 | 32,50 | 16,25 | 26,25 |
| Muster 3 | 25,00 | 30,00 | 15,00 | 30,00 |

Die ermittelten klebtechnischen Werte sind in Tabelle 14 wiedergegeben.

**Tabelle 14: Klebtechnische Werte der formulierten PLA-Proben und Modellsystemen im Vergleich (In der Regel ist das Bruchbild 100% Adhäsionsbruch. Falls Kohäsionsbruch (KB) oder Umspulung auftritt, so ist dies vermerkt.)**

| **Versuch** | **Muster 1** | **Muster 2** | **Muster 3** | **PSA für Montageklebungen** | **PSA für Trittschalldämmung** | | **PSA für Etikettierung** |
|---|---|---|---|---|---|---|---|
| | | | | | **Düsenauftrag** | **Walzenauftrag** | |
| Viskosität 120°C [mPas] | 124 | 165 | 160 | | | | |
| Viskosität 160°C [mPas] | | | | 16.000 | 600 | 22.000 | 500 |
| Farbe in der Schmelze | braun | braun | braun | gelb | braun | braun | braun |
| | opak | opak | trüb | transparent | transparent | transparent | transparent |
| SAFT (40°C-) [°C] | 40 | 40 | 40 | 90 | 55 | 100 | 45 |
| Loop Tack [N/25mm] | 19,3 (40% KB) | 12,3 (40% Umspulung) | 0,3 (40% KB) | 21,1 | 8,4 | 21,6 | 8,2 |
| 180° Schälfestigkeit [N/25mm] | 12,0 (40% KB) | 14,6 (40% KB) | 0,5 (50% KB) | 18,2 | 5,9 | 11,7 | 4,1 |

Auffällig bei den formulierten PLA-Proben ist die sehr niedrige Viskosität. Diese liegt bei 120 °C bei 120 - 170 mPa•s. Im Vergleich dazu wird die Viskosität von konventionellen Haftschmelzklebstoffen in der Regel zwischen 140 und 180 °C bestimmt und liegt hier mit typischen Werten von 500 bis 30.000 mPa•s deutlich höher.

Die Anforderungen an die Kohäsion und den Wärmestand eines Klebstoffes sind je nach Anwendungsgebiet sehr unterschiedlich.

Die relativ geringe Kohäsion der Muster spiegelt sich auch in den Werten, die für die 180°-Schälfestigkeit bestimmt wurden, wieder. Die 180°-Schälfestigkeit ist ein Maß für die Klebkraft. Im Gegensatz zum SAFT-Wert wird die 180°-Schälfestigkeit nicht nur von der Kohäsion, sondern auch von der Adhäsion des Klebstoffes beeinflusst. Die Werte für Muster 1 und Muster 2 finden sich im mittleren Segment wieder. Im Gegensatz zu Haftschmelzklebstoffen auf konventioneller Basis tritt kein reiner Adhäsionsbruch, sondern auch in hohem Maße Kohäsionsbruch auf. Dieses Verhalten wird in der Regel nur bei relativ weichen Systemen beobachtet.

Zur Beurteilung der Eigenklebrigkeit der Haftschmelzklebstoffe wurde der Loop Tack bestimmt. Mit den Formulierungen Muster 1 und Muster 2 konnten bereits zufriedenstellende Werte erreicht werden. Der Loop Tack ist eine wichtige Größe zur Beurteilung der Eigenklebrigkeit bzw. der Benetzungsfähigkeit bei Raumtemperatur. Ein hoher Wert ist hier für Anwendungen, in denen Substrate selbstklebend ausgerüstet werden und die Fügung mit dem zweiten Substrat bei Temperaturen deutlich unterhalb der Verarbeitungstemperatur erfolgt, eine sehr wichtige Voraussetzung.

### 4.4. Untersuchung von spezifischen Klebstoffzusammensetzungen

Ergänzend zu den zuvor geschilderten allgemeinen anwendungstechnischen Versuchen wurden noch weitere zur Untersuchung spezifische Klebstoffsysteme im Hinblick auf ihre Anwendungseigenschaften durchgeführt.

Die Klebstoffzusammensetzungen enthalten Polymer 1 oder Polymer 2 als polymilchsäurebasiertes Basis- bzw. Rückgratpolymer.

Polymer 1 wird aus oligomerer hydroxyterminierter Milchsäure mit einer Säurezahl SZ ≥ 30 und einer mittleren Molmasse Mₙ = 2.900 g/mol durch Umsetzung mit Diphenylmethandiisocyanat mit einem hohen Anteil an 2,4'-Diphenylmethandiisocyanat erhalten. Die oligomere hydroxyterminierte Milchsäure weist ein Verhältnis von L- zu D-Milchsäure von 80 : 20 auf und wird durch Polymerisation in Gegenwart von 1,2-Hexandiol hergestellt. Polymer 1 weist mittlere Molmassen M_{w} = 7.000 g/mol und Mₙ = 13.200 g/mol auf.

Polymer 2 wird aus oligomerer hydroxyterminierter Milchsäure mit einer Säurezahl SZ ≤ 10 und einer mittleren Molmasse Mₙ = 4.500 g/mol durch Umsetzung mit Diphenylmethandiisocyanat mit einem hohen Anteil an 2,4'-Diphenylmethandiisocyanat erhalten. Die oligomere hydroxyterminierte Milchsäure weist ein Verhältnis von L- zu D-Milchsäure von 80 : 20 auf und wird durch Polymerisation in Gegenwart von 1,2-Hexandiol hergestellt. Polymer 2 weist mittlere Molmassen M_{w} = 14.700 g/mol und Mₙ= 30.800 g/mol auf.

Neben den Basis- bzw. Rückgratpolymeren enthalten die Klebstoffzusammensetzungen noch Harze, Weichmacher bzw. Tackifier sowie Antioxidantien und weitere Zusatzstoffe.

Die Klebstoffzusammensetzungen enthalten insbesondere folgende Inhaltsstoffe:
Novares TV-100, ein Kohlenwasserstoffharz, welches ein Polymerisationsprodukt aus ungesättigten aromatischen C9- und C10 Kohlenwasserstoffen ist.
Novares TNA 120, ein rohölbasiertes Kohlenwasserstoffharz, welches ein Polymerisat ungesättigter, aromatischer C9- und C10 Kohlenwasserstoffe mit Phenol ist.

Die Novares Harze sind von der Firma RÜTGERS Novares GmbH, Duisburg, Deutschland zu beziehen.

IRGANOX^{®}, ein primäres, phenolbasiertes Antioxidans [Pentaerythrit-tetrakis(3-(3,5-di-tert-butyl-4-hydroxyphenyl)propionat)], erhältlich von der Firma BASF SE.

Citrofol^{®} B1, ein Weichmacher auf Basis von Zitronensäureestern, erhältlich von der Firma JUNGBUNZLAUER Ladenburg GmbH, Ladenburg, Deutschland.

Pearlbond^{®} Eco D590, ein Kristallisationsadditiv sowie Viskositätsregulierer auf Basis eines linearen, aromatischen thermoplastischen Polyurethans, erhältlich von der Firma DANQUINSA GmbH, Dettenhausen, Deutschland.

Dynacoll^{®} Terra EP 424.01, ein hydroxylgruppenhaltiger Copolyester auf Basis nachwachsender Rohstoffe, erhältlich von der EVONIK Industries AG, Essen, Deutschland.

Die verschiedenen Komponenten werden in unterschiedlichen Zusammensetzungen gemischt - wie in Tabelle 15 angegeben - und anschließend im Hinblick auf ihre klebetechnischen Eigenschaften untersucht. Die Ergebnisse der klebetechnischen Untersuchungen sind in Tabelle 16 zusammengefasst.

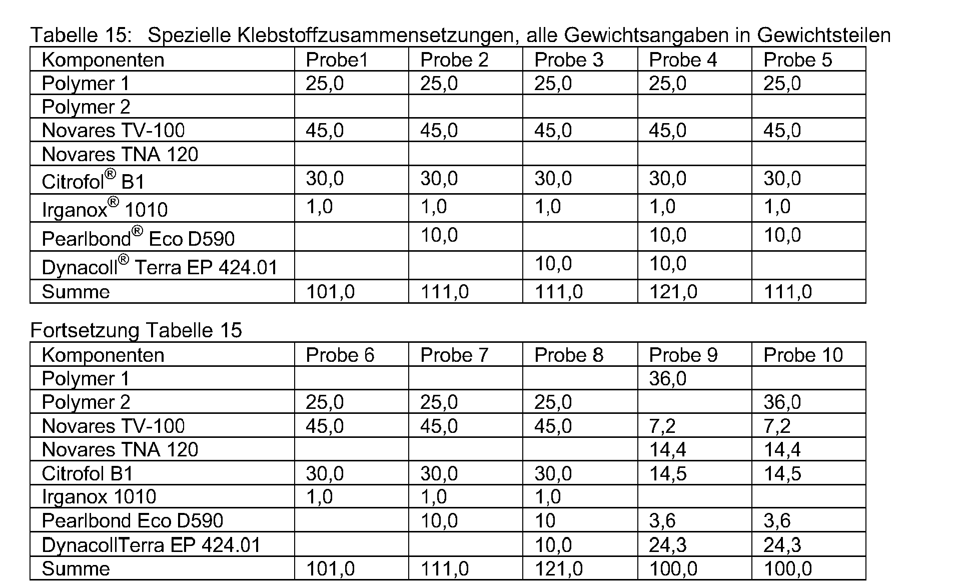

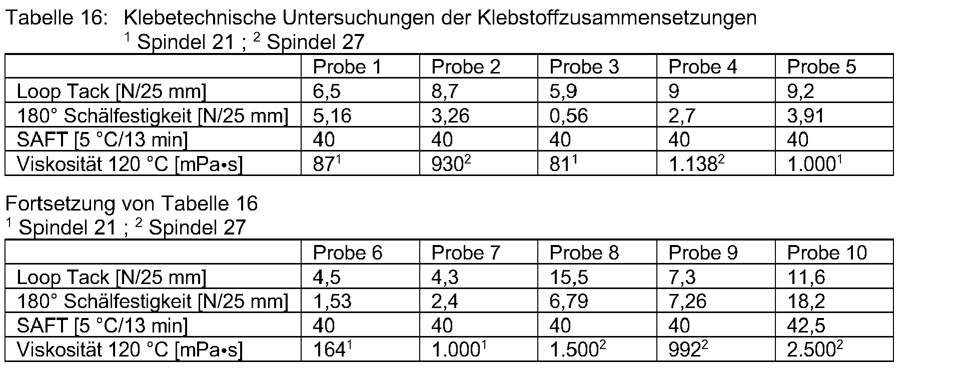

Wie sich aus den Daten von Tabelle 16 ergibt, besitzen die erfindungsgemäßen Klebstoffzusammensetzungen bereits hervorragende klebetechnische Eigenschaften, insbesondere verfügen sie über eine für die meisten Anwendungen ausreichende Anfangsklebrigkeit (Loop Tack) sowie eine ausreichend hohe 180°-Schälfestigkeit. Was die Klebekraft anbelangt, so zeigt sich, dass die Proben 8 bis 10 selbst für semistrukturelle Anwendungen, d. h. als Montagehilfe oder als Montagekleber im Automobilbereich sowie im Baubereich geeignet sind. Weiterhin ist ersichtlich, dass die erfindungsgemäßen Klebstoffzusammensetzungen auch über Viskositäten verfügen, welche sie für einen Auftrag aus der Schmelze qualifizieren. Die Viskositätswerte bei 120 °C liegen im Bereich von 87 bis 2.500 mPa·s. Es fällt weiterhin auf, dass insbesondere die Klebstoffzusammensetzungen gemäß den Proben 9 und 10, welche 36 Gew.-% an Basis- bzw. Rückgratpolymer enthalten, besonders gute Klebeigenschaften aufweisen.

## Patentansprüche

1. Haftklebstoffzusammensetzung auf Basis nachwachsender Rohstoffe, wobei die Klebstoffzusammensetzung enthält:
(a) mindestens ein Polymer auf Basis von Polymilchsäure in Mengen von 10 bis 60 Gew.-%, bezogen auf die Klebstoffzusammensetzung;
(b) mindestens ein Harz in Mengen von 10 bis 60 Gew.-%, bezogen auf die Klebstoffzusammensetzung;
(c) mindestens ein Plastifizierungsmittel (Weichmacher) in Mengen von 2 bis 60 Gew.%, bezogen auf die Klebstoffzusammensetzung; und
(d) gegebenenfalls mindestens ein Wachs in Mengen von 0,1 bis 50 Gew.-%, bezogen auf die Klebstoffzusammensetzung,
wobei das Polymer (a) ein gewichtsmittleres Molekulargewicht M_{w} im Bereich von 1.000 bis 80.000 g/mol, bestimmt mittels GPC gemäß Punkt 1 der Ausführungsbeispiele, aufweist,
wobei das Polymer (a) eine Polydispersität M_{w}/Mₙ im Bereich von 1,5 bis 7 aufweist,
wobei das Polymer (a) auf Basis von Polymilchsäure L-Milchsäure- und D-Milchsäureeinheiten enthält, wobei das Polymer (a) ein Verhältnis von L-Milchsäureeinheiten zu D-Milchsäureeinheiten im Bereich von 85 : 15 bis 60 : 40 aufweist,
wobei das Polymer (a) Abschnitte und/oder Segmente aus Milchsäureeinheiten aufweist, wobei die einzelnen Abschnitte und/oder Segmente aus Milchsäureeinheiten eine zahlenmittlere Molmasse Mₙ im Bereich von 400 bis 8.000 g/mol, bestimmt mittels GPC gemäß Punkt 1 der Ausführungsbeispiele, aufweisen, und
wobei das Polymer (a) im Anschluss an die Abschnitte und/oder Segmente aus Milchsäureeinheiten zur Kettenverlängerung Modifizierungen auf Basis chemischer Gruppen und/oder Segmente ausgewählt aus
(i) Polyethern, Polyestern, Polyamiden und/oder
(ii) Urethanen, Polyurethanen und/oder
(iii) Polyacrylaten, Polymethacrylaten, Polystyrolen, Acryl/Styrol-Copolymeren, Styrol-Copolymeren, Polyvinylacetaten, Polyolefinen
sowie deren Mischungen und Co- und Terpolymeren aufweist.

2. Klebstoffzusammensetzung nach Anspruch 1, **dadurch gekennzeichnet, dass** die Klebstoffzusammensetzung eine Schmelzhaftklebstoffzusammensetzung ist.

3. Klebstoffzusammensetzung nach einem der vorangehenden Ansprüche, **dadurch gekennzeichnet, dass** die einzelnen Abschnitte und/oder Segmente aus Milchsäureeinheiten eine zahlenmittlere Molmasse Mₙ im Bereich von 500 bis 7.000 g/mol bevorzugt 600 bis 6.000 g/mol, besonders bevorzugt 700 bis 5.000 g/mol, ganz besonders bevorzugt 750 bis 4.000 g/mol, bestimmt mittels GPC gemäß Punkt 1 der Ausführungsbeispiele, aufweisen.

4. Klebstoffzusammensetzung nach einem der vorangehenden Ansprüche, **dadurch gekennzeichnet,**
**dass** die Polyether, Polyester, Polyamide sowie deren Mischungen und Co- und Terpolymere ein Molekulargewicht M_{w} im Bereich von 200 bis 10.000 g/mol, insbesondere 300 bis 9.000 g/mol, vorzugsweise 400 bis 8.000 g/mol, bevorzugt 500 bis 7.000 g/mol, besonders bevorzugt 750 bis 6.500 g/mol, ganz besonderes bevorzugt 1.000 bis 6.000 g/mol, bestimmt mittels GPC gemäß Punkt 1 der Ausführungsbeispiele, aufweisen und/oder
**dass** die Urethane und Polyurethane ein Molekulargewicht M_{w} im Bereich von 150 bis 10.000 g/mol, insbesondere 200 bis 8.000 g/mol, vorzugsweise 250 bis 7.000 g/mol, bevorzugt 500 bis 5.000 g/mol, besonders bevorzugt 750 bis 3.000 g/mol, ganz besonderes bevorzugt 1.000 bis 2.000 g/mol, aufweisen, insbesondere wobei im Fall von Urethanen diese ein Molekulargewicht im Bereich von 150 bis 1.000 g/mol, insbesondere 150 bis 750 g/mol, vorzugsweise 150 bis 500 g/mol, bevorzugt 150 bis 300 g/mol, bestimmt mittels GPC gemäß Punkt 1 der Ausführungsbeispiele, aufweisen und/oder
**dass** die Polyacrylate, Polymethacrylate, Polystyrole, Acryl/Styrol-Copolymere, Polyvinylacetate sowie deren Mischungen und Co- und Terpolymere ein Molekulargewicht M_{w} im Bereich von 200 bis 20.000 g/mol, insbesondere 500 bis 15.000 g/mol, vorzugsweise 750 bis 10.000 g/mol, bevorzugt 1.000 bis 9.000 g/mol, besonders bevorzugt 2.500 bis 8.000 g/mol, ganz besonderes bevorzugt 5.000 bis 7.000 g/mol, bestimmt mittels GPC gemäß Punkt 1 der Ausführungsbeispiele, aufweisen.

5. Klebstoffzusammensetzung nach einem der vorangehenden Ansprüche, **dadurch gekennzeichnet,**
**dass** in Polymer (a) die Polyether ausgewählt sind aus Polyglykolen, insbesondere Polyethylenglykol und Polypropylenglykol; und/oder
**dass** in Polymer (a) die Polyester ausgewählt sind aus Polyethylenterephthalat, Polybutylenterephthalat, Polycarbonat, Polyethylennaphthalat und deren Mischungen sowie deren Co- und Terpolymeren; und/oder
**dass** in Polymer (a) die Polyamide ausgewählt sind aus der Gruppe von Polycaprolactam, Poly-*N*,*N*'-hexamethylenadipindiamid, Polyhexamethylensebacamid, Polyhexamethylendodecandiamid, Polyundecanolactam, Polylauryllactam und deren Mischungen sowie deren Co- und Terpolymeren; und/oder
**dass** in Polymer (a) die Urethane durch Umsetzung von Isocyanaten, insbesondere monomeren Isocyanaten, mit Hydroxyfunktionen eines Präpolymers des Polymers (a) erhältlich sind, insbesondere wobei die isocyanate ausgewählt sind aus der Gruppe von Toluoldiisocyanat (TDI), Diphenylmethandiisocyanat (MDI), Hexamethylendiisocyanat (HMDI), Isophorondiisocyanat (IPDI), 4,4'-Diisocyanatodicyclohexylmethan (H12MDI) und/oder polymerem Diphenylmethandiisocyanat (pMDI) und/oder isocyanatterminierten Präpolymeren auf Basis dieser Isocyanate.

6. Klebstoffzusammensetzung nach einem der vorangehenden Ansprüche, **dadurch gekennzeichnet, dass** das Polymer (a)
(I) L-Milchsäure- und/oder D-Milchsäureeinheiten, vorzugsweise L-Milchsäure- und D-Milchsäureeinheiten, und/oder
(II) terminale Hydroxy- und/oder Carbonsäurefunktionen und/oder Carbonsäureester und/oder Carbonsäureamide und/oder
(III) Polyethergruppen und/oder -einheiten und/oder
(IV) Urethangruppen und/oder -einheiten und/oder Polyurethangruppen und/oder - einheiten und/oder
(V) Polyacrylatgruppen und/oder -einheiten
aufweist.

7. Klebstoffzusammensetzung nach einem der vorangehenden Ansprüche, **dadurch gekennzeichnet,**
**dass** das Harz ausgewählt ist aus der Gruppe von Kohlenwasserstoffharzen, insbesondere aliphatischen, cyclischen oder cycloaliphatischen Kohlenwasserstoffharzen, gegebenenfalls modifizierten Kolophoniumharzen, Terpenharzen, Terpenphenolharzen, Polyesterpolyolharzen, Polyurethanharzen, Cumaron-Indenharzen, α-Methylstyrolharzen, Tallharzen, polymerisierten Tallharzestern und/oder Ketonaldehydharzen, vorzugsweise Terpenharzen, Polyesterpolyolharzen und/oder Polyurethanharzen, sowie deren Mischungen; und/oder
**dass** das Wachs aus Polyolefinwachsen, wie Polyethylen- und Polypropylenwachsen, Wachsen auf Basis nachwachsender Rohstoffe, wie Zuckerrohrwachsen und gehärteten Rizinuswachsen, und auf dieser Basis modifizierten Wachsen ausgewählt ist; und/oder
**dass** das Plastifizierungsmittel (Weichmacher) ausgewählt ist aus der Gruppe von Polyglykolen, insbesondere Polyethylenglykol und/oder Polypropylenglykol, Glycerin, Citrat und Citratderivate, insbesondere Citratester, sowie deren Mischungen.

8. Klebstoffzusammensetzung nach einem der vorangehenden Ansprüche, **dadurch gekennzeichnet,**
**dass** die Klebstoffzusammensetzung außerdem mindestens ein Additiv enthält, insbesondere wobei die Additive an sich bekannte Zusatzstoffe, wie hochsiedende organische Öle, Ester oder andere der Plastifizierung dienende Additive, Stabilisatoren, insbesondere UV-Stabilisatoren, Antioxidantien, Säurefänger, Füllstoffe, insbesondere nanoteilige oder mikroskalige Füllstoffe, und/oder Alterungsschutzmittel, sind; insbesondere wobei die Klebstoffzusammensetzung das Additiv in Mengen von 0,01 bis 10 Gew.-%, insbesondere 0,01 bis 8 Gew.-%, vorzugsweise 0,05 bis 7 Gew.-%, bevorzugt 0,05 bis 6 Gew.-%, besonders bevorzugt 0,1 bis 5 Gew.-%, enthält.

9. Verfahren zum Fügen von mindestens zwei Substraten durch Kleben, **dadurch gekennzeichnet, dass** eine Klebstoffzusammensetzung nach einem der vorangehenden Ansprüche auf mindestens eines, vorzugsweise eines, der Substrate aufgebracht wird und anschließend die Substrate unterhalb der Temperatur, bei welcher die Klebstoffzusammensetzung aufgebracht wird, gefügt werden.

10. Verfahren nach Anspruch 9, **dadurch gekennzeichnet,**
**dass** die Klebstoffzusammensetzung kontinuierlich oder diskontinuierlich auf das Substrat aufgebracht wird, insbesondere wobei das Substrat mit der Klebstoffzusammensetzung beschichtet wird, insbesondere wobei eine zusammenhängende Klebstoffschicht oder eine unterbrochene Klebstoffschicht erhalten wird; und/oder
**dass** die Klebstoffzusammensetzung aus der Schmelze aufgebracht wird, insbesondere bei Temperaturen im Bereich von 80 bis 250 °C, insbesondere 90 bis 200 °C, vorzugsweise 100 bis 180 °C; und/oder
**dass** die Klebstoffzusammensetzung mittels Sprühen, Rakeln, Kalandern, Walzen, Druckverfahren, insbesondere mittels Flexodruckverfahren und/oder Siebdruckverfahren, und/oder Extrusion auf das Substrat aufgebracht wird; und/oder
**dass** die Klebstoffzusammensetzung mit einem Flächengewicht von 5 bis 250 g/m², insbesondere 8 bis 100 g/m², vorzugsweise 10 bis 50 g/m², auf das Substrat aufgebracht wird.

11. Verfahren nach einem der vorangehenden Ansprüche, **dadurch gekennzeichnet,**
**dass** der Fügevorgang unter Druck und/oder Anpressen erfolgt, insbesondere wobei der Druck und/oder das Anpressen für eine Dauer von 0,001 bis 100 Sekunden, insbesondere 0,002 bis 80 Sekunden, vorzugsweise 0,005 bis 70 Sekunden, bevorzugt 0,008 bis 60 Sekunden, besonders bevorzugt 0,01 bis 50 Sekunden, aufrecht erhalten wird; und/oder
**dass** mindestens ein Substrat Holz und/oder Papier aufweist; und/oder
**dass** mindestens ein Substrat Kunststoff, Leder und/oder Metall aufweist; und/oder
**dass** mindestens ein Substrat Stein und/oder Beton aufweist.

12. Verwendung einer Klebstoffzusammensetzung nach einem der vorangehenden Ansprüche zur Kaschierung von Kunststoffen, insbesondere zur Anbringung von Etiketten auf Kunststoffflaschen, vorzugsweise PET-Flaschen.

13. Verwendung einer Klebstoffzusammensetzung nach einem der vorangehenden Ansprüche zur Verklebung von Flächenmaterialien auf ebenen Untergründen, insbesondere auf Böden, vorzugsweise zur Verklebung von Trittschalldämmungen, insbesondere für Laminat- und/oder Parkettböden.

14. Verwendung einer Klebstoffzusammensetzung nach einem der vorangehenden Ansprüche als Montagehilfe, insbesondere bei der Herstellung von Fahrzeugen, vorzugsweise bei der Herstellung von Automobilen, bevorzugt bei der Befestigung von Schalldämmplatten in Automobilkarosserien.

15. Verwendung einer Klebstoffzusammensetzung nach einem der vorangehenden Ansprüche für Montageklebungen in der Bauindustrie.

## Claims

1. A pressure-sensitive adhesive composition based on renewable raw materials, wherein the adhesive composition contains:
(a) at least one polymer based on polylactic acid in amounts of from 10 to 60 % by weight, based on the adhesive composition;
(b) at least one resin in amounts of from 10 to 60 % by weight, based on the adhesive composition;
(c) at least one plasticizing agent (plasticizer) in amounts of from 2 to 60 % by weight, based on the adhesive composition; and
(d) optionally at least one wax in amounts of from 0.1 to 50 % by weight, based on the adhesive composition,
wherein the polymer (a) has a weight average molecular weight M_{w} in the range of from 1,000 to 80,000 g/mol as determined by GPC according to item 1 of the embodiments,
wherein the polymer (a) has a polydispersity M_{w} /Mₙ in the range of from 1.5 to 7,
wherein the polymer (a) based on polylactic acid contains L-lactic acid units and D-lactic acid units, wherein the polymer (a) has a ratio of L-lactic acid units to D-lactic acid units in the range of from 85:15 to 60:40,
wherein the polymer (a) comprises sections and/or segments of lactic acid units, wherein the individual sections and/or segments of lactic acid units have a number-average molar mass Mₙ in the range of from 400 to 8,000 g/mol, determined by GPC according to item 1 of the embodiments, and
wherein the polymer (a), following the sections and/or segments of lactic acid units, comprises, for chain extension, modifications based on chemical groups and/or segments selected from
(i) polyethers, polyesters, polyamides and/or
(ii) urethanes, polyurethanes and/or
(iii) polyacrylates, polymethacrylates, polystyrenes, acrylic/styrene copolymers, styrene copolymers, polyvinyl acetates, polyolefins
as well as mixtures and co- and terpolymers thereof.

2. The adhesive composition according to claim 1, **characterized in that** the adhesive composition is a hot-melt pressure-sensitive adhesive composition.

3. The adhesive composition according to any one of the preceding claims, **characterized in that** the individual sections and/or segments of lactic acid units have a number-average molar mass Mₙ in the range of from 500 to 7,000 g/mol, preferably 600 to 6,000 g/mol, more preferably 700 to 5,000 g/mol, particularly preferably 750 to 4,000 g/mol, determined by GPC according to point 1 of the embodiments.

4. The adhesive composition according to any one of the preceding claims, **characterized in**
**that** the polyethers, polyesters, polyamides as well as mixtures and copolymers and terpolymers thereof have a molecular weight M_{w} in the range of from 200 to 10,000 g/mol, in particular 300 to 9,000 g/mol, preferably 400 to 8,000 g/mol, more preferably 500 to 7,000 g/mol, particularly preferably 750 to 6,500 g/mol, very particularly preferably 1,000 to 6,000 g/mol, determined by GPC according to point 1 of the embodiments, and/or
**that** the urethanes and polyurethanes have a molecular weight M_{w} in the range of from 150 to 10,000 g/mol, in particular 200 to 8,000 g/mol, preferably 250 to 7,000 g/mol, more preferably 500 to 5,000 g/mol, particularly preferably 750 to 3,000 g/mol, very particularly preferably 1,000 to 2.000 g/mol, in particular wherein, in the case of urethanes, these have a molecular weight in the range of from 150 to 1,000 g/mol, in particular 150 to 750 g/mol, preferably 150 to 500 g/mol, preferably 150 to 300 g/mol, determined by GPC according to point 1 of the embodiments, and/or
**that** the polyacrylates, polymethacrylates, polystyrenes, acrylic/styrene copolymers, polyvinyl acetates as well as mixtures and co- and terpolymers thereof have a molecular weight M_{w} in the range of from 200 to 20,000 g/mol, in particular 500 to 15.000 g/mol, preferably 750 to 10,000 g/mol, more preferably 1,000 to 9,000 g/mol, particularly preferably 2,500 to 8,000 g/mol, very particularly preferably 5,000 to 7,000 g/mol, determined by GPC according to point 1 of the embodiments.

5. The adhesive composition according to any one of the preceding claims, **characterized in**
**that** in polymer (a) the polyethers are selected from polyglycols, in particular polyethylene glycol and polypropylene glycol; and/or
**that** in polymer (a) the polyesters are selected from polyethylene terephthalate, polybutylene terephthalate, polycarbonate, polyethylene naphthalate as well as mixtures and co- and terpolymers thereof; and/or
**that** in polymer (a) the polyamides are selected from the group consisting of polycaprolactam, poly-*N*,*N*'-hexamethylene adipindiamide, polyhexamethylene sebacamide, polyhexamethylene dodecanediamide, polyundecanolactam, polylauryllactam as well as mixtures and co- and terpolymers thereof; and/or
**that** in polymer (a) the urethanes are obtainable by reacting isocyanates, in particular monomeric isocyanates, with hydroxyl functions of a prepolymer of polymer (a), in particular wherein the isocyanates are selected from the group consisting of toluene diisocyanate (TDI), diphenylmethane diisocyanate (MDI), hexamethylene diisocyanate (HMDI), isophorone diisocyanate (IPDI), 4,4'-diisocyanatodicyclohexylmethane (H12MDI) and/or polymeric diphenylmethane diisocyanate (pMDI) and/or isocyanate-terminated prepolymers based on these isocyanates.

6. The adhesive composition according to any one of the preceding claims, **characterized in that** the polymer (a) comprises
(I) L-lactic acid units and/or D-lactic acid units, preferably L-lactic acid units and D-lactic acid units, and/or
(II) terminal hydroxy and/or carboxylic acid functions and/or carboxylic acid esters and/or carboxylic acid amides and/or
(III) polyether groups and/or units and/or
(IV) urethane groups and/or units and/or polyurethane groups and/or units and/or
(V) polyacrylate groups and/or units.

7. The adhesive composition according to any one of the preceding claims, **characterized in**
**that** the resin is selected from the group of hydrocarbon resins, in particular aliphatic, cyclic or cycloaliphatic hydrocarbon resins, optionally modified rosin resins, terpene resins, terpene phenolic resins, polyester polyol resins, polyurethane resins, coumarone-indene resins, α-methylstyrene resins, tall resins, polymerized tall resin esters and/or ketonaldehyde resins, preferably terpene resins, polyester polyol resins and/or polyurethane resins, and mixtures thereof; and/or
**that** the wax is selected from polyolefin waxes, such as polyethylene and polypropylene waxes, waxes based on renewable raw materials, such as sugarcane waxes and hardened castor waxes, and waxes modified on this basis; and/or
in that the plasticizing agent (plasticizer) is selected from the group consisting of polyglycols, in particular polyethylene glycol and/or polypropylene glycol, glycerol, citrate and citrate derivatives, in particular citrate esters, and mixtures thereof.

8. The adhesive composition according to any one of the preceding claims, **characterized in**
**that** the adhesive composition also contains at least one additive, in particular wherein the additives are additives known per se, such as high-boiling organic oils, esters or other additives serving for plasticizing, stabilizers, in particular UV stabilizers, antioxidants, acid scavengers, fillers, in particular nanoparticulate or microscale fillers, and/or aging inhibitors; in particular wherein the adhesive composition contains the additive in amounts of from 0.01 to 10 % by weight, in particular 0.01 to 8 % by weight, preferably 0.05 to 7 % by weight, more preferably 0.05 to 6 % by weight, particularly preferably 0.1 to 5 % by weight.

9. A method of joining at least two substrates by adhesive bonding, **characterized in that** an adhesive composition according to one of the preceding claims is applied to at least one, preferably one, of the substrates and subsequently the substrates are joined below the temperature at which the adhesive composition is applied.

10. The method according to claim 9, **characterized in**
**that** the adhesive composition is applied continuously or discontinuously to the substrate, in particular wherein the substrate is coated with the adhesive composition, in particular wherein a continuous adhesive layer or an interrupted adhesive layer is obtained; and/or
**that** the adhesive composition is applied from the melt, in particular at temperatures in the range of from 80 to 250°C, in particular 90 to 200°C, preferably 100 to 180°C; and/or
**that** the adhesive composition is applied to the substrate by means of spraying, knife coating (doctoring), calendering, rolling, printing processes, in particular by means of flexographic printing processes and/or screen printing processes, and/or extrusion; and/or
**that** the adhesive composition is applied to the substrate with a basis weight of from 5 to 250 g/m², in particular 8 to 100 g/m², preferably 10 to 50 g/m .²

11. The method according to any one of the preceding claims, **characterized in**
**that** the joining operation is carried out under pressure and/or with pressing, in particular wherein the pressure and/or the pressing is maintained for a duration of 0.001 to 100 seconds, in particular 0.002 to 80 seconds, preferably 0.005 to 70 seconds, more preferably 0.008 to 60 seconds, particularly preferably 0.01 to 50 seconds; and/or
**that** at least one substrate comprises wood and/or paper; and/or
**that** at least one substrate comprises plastic, leather and/or metal; and/or
**that** at least one substrate comprises stone and/or concrete.

12. Use of an adhesive composition according to any one of the preceding claims for laminating plastics, in particular for applying labels to plastic bottles, preferably PET bottles.

13. Use of an adhesive composition according to one of the preceding claims for bonding sheet materials to planar substrates, in particular to floors, preferably for bonding impact sound insulation, in particular for laminate and/or parquet floors.

14. Use of an adhesive composition according to any one of the preceding claims as an assembly aid, in particular in the manufacture of vehicles, preferably in the manufacture of automobiles, preferably in the attachment of sound insulation panels in automobile bodies.

15. Use of an adhesive composition according to any one of the preceding claims for assembly bonding in the construction industry.

## Revendications

1. Composition adhésive sensible à la pression à base de matières premières renouvelables, où la composition adhésive contient:
(a) au moins un polymère à base d'acide polylactique en quantités de 10 à 60 % en poids par rapport à la composition adhésive;
(b) au moins une résine en quantités de 10 à 60 % en poids par rapport à la composition adhésive;
(c) au moins un agent plastifiant (plastifiant) en quantités de 2 à 60 % en poids par rapport à la composition adhésive; et
(d) éventuellement au moins une cire en quantités de 0,1 à 50 % en poids par rapport à la composition adhésive,
où le polymère (a) présente un poids moléculaire moyen en poids M_{w} dans la plage de 1 000 à 80 000 g/mol, déterminé par GPC selon le point 1 des exemples de réalisation,
où le polymère (a) présente une polydispersité M_{w} /Mₙ dans la plage de 1,5 à 7,
où le polymère (a) à base d'acide polylactique contient des unités d'acide L-lactique et des unités d'acide D-lactique, le polymère (a) présentant un rapport des unités d'acide L-lactique aux unités d'acide D-lactique dans la plage de 85:15 à 60:40,
où le polymère (a) présente des sections et/ou des segments d'unités d'acide lactique, les sections et/ou segments individuels d'unités d'acide lactique présentant une masse molaire moyenne en nombre Mₙ dans la plage de 400 à 8 000 g/mol, déterminée par GPC selon le point 1 des exemples de réalisation, et
où le polymère (a) contient, à la suite des sections et/ou des segments d'unités d'acide lactique, pour l'allongement de la chaîne, des modifications à base de groupes chimiques et/ou de segments choisis parmi
(i) polyéthers, polyesters, polyamides et/ou
(ii) uréthanes, polyuréthanes et/ou
(iii) polyacrylates, polyméthacrylates, polystyrènes, copolymères acrylique/styrène, copolymères de styrène, acétates de polyvinyle, polyoléfines
ainsi que leurs mélanges et leurs co- et terpolymères.

2. Composition adhésive selon la revendication 1, **caractérisée en ce que** la composition adhésive est une composition adhésive thermofusible sensible à la pression.

3. Composition adhésive selon l'une des revendications précédentes, **caractérisée en ce que** les sections individuelles et/ou segments individuels d'unités d'acide lactique présentent une masse molaire moyenne en nombre Mₙ dans la plage de 500 à 7 000 g/mol, de préférence de 600 à 6 000 g/mol, préférentiellement de 700 à 5 000 g/mol, de manière particulièrement préférée de 750 à 4 000 g/mol, déterminée par GPC selon le point 1 des exemples de réalisation.

4. Composition adhésive selon l'une des revendications précédentes, **caractérisée en ce**
**que** les polyéthers, polyesters, polyamides ainsi que leurs mélanges et co- et terpolymères présentent un poids moléculaire M_{w} dans la plage de 200 à 10 000 g/mol, en particulier de 300 à 9 000 g/mol, de préférence de 400 à 8 000 g/mol, préférentiellement de 500 à 7 000 g/mol, de manière particulièrement préférée de 750 à 6 500 g/mol, de manière tout particulièrement préférée de 1 000 à 6 000 g/mol, déterminé par GPC selon le point 1 des exemples de réalisation, et/ou
**que** les uréthanes et les polyuréthanes ont un poids moléculaire M_{w} dans la plage de 150 à 10 000 g/mol, en particulier de 200 à 8 000 g/mol, de préférence de 250 à 7 000 g/mol, préférentiellement de 500 à 5 000 g/mol, de manière particulièrement préférée de 750 à 3 000 g/mol, de manière tout particulièrement préférée de 1 000 à 2 000 g/mol, en particulier où, dans le cas des uréthanes, ceux-ci présentent un poids moléculaire dans la plage de 150 à 1000 g/mol, en particulier de 150 à 750 g/mol, de préférence de 150 à 500 g/mol, préférentiellement de 150 à 300 g/mol, déterminé par GPC selon le point 1 des exemples de réalisation, et/ou
**que** les polyacrylates, polyméthacrylates, polystyrènes, copolymères acrylique/styrène, acétates de polyvinyle ainsi que leurs mélanges et co- et terpolymères ont un poids moléculaire M_{w} dans la plage de 200 à 20 000 g/mol, en particulier de 500 à 15 000 g/mol, de préférence de 750 à 10 000 g/mol, préférentiellement de 1 000 à 9 000 g/mol, de manière particulièrement préférée de 2 500 à 8 000 g/mol, de manière tout particulièrement préférée de 5 000 à 7 000 g/mol, déterminées par GPC selon le point 1 des exemples de réalisation.

5. Composition adhésive selon l'une des revendications précédentes, **caractérisée en ce**
**que** dans le polymère (a) les polyéthers sont choisis parmi les polyglycols, en particulier le polyéthylèneglycol et le polypropylèneglycol; et/ou
**que** dans le polymère (a) les polyesters sont choisis parmi le polyéthylène téréphtalate, le polybutylène téréphtalate, le polycarbonate, le polyéthylène naphtalate et leurs mélanges ainsi que leurs co- et terpolymères; et/ou
**que** dans le polymère (a) les polyamides sont choisis dans le groupe constitué par le polycaprolactame, le poly-*N,N'*-hexaméthylène-adipinediamide, le polyhexaméthylène-sébacamide, le polyhexaméthylène-dodécanediamide, le poly-undécanolactame, le polylauryllactame et leurs mélanges ainsi que leurs co- et terpolymères; et/ou
**que** dans le polymère (a) les uréthanes sont obtenus par réaction d'isocyanates, en particulier d'isocyanates monomères, avec des fonctions hydroxy d'un prépolymère du polymère (a), en particulier les isocyanates étant choisis dans le groupe constitué par le toluène diisocyanate (TDI), le diisocyanate de diphénylméthane (MDI), le diisocyanate d'hexaméthylène (HMDI), le diisocyanate d'isophorone (IPDI), le 4,4'-diisocyanatodicyclohexylméthane (H12MDI) et/ou le diisocyanate de diphénylméthane polymère (pMDI) et/ou des prépolymères à terminaison isocyanate à base de ces isocyanates.

6. Composition adhésive selon l'une des revendications précédentes, **caractérisée en ce que** le polymère (a) présente
(I) unités d'acide L-lactique et/ou unités d'acide D-lactique, de préférence des unités d'acide L-lactique et unités d'acide D-lactique, et/ou
(II) fonctions terminales hydroxy et/ou acide carboxylique et/ou esters d'acide carboxylique et/ou amides d'acide carboxylique et/ou
(III) groupes et/ou unités polyéthers; et/ou
(IV) groupes et/ou motifs d'uréthane et/ou groupes et/ou motifs de polyuréthane et/ou
(V) groupes et/ou unités polyacrylate.

7. Composition adhésive selon l'une des revendications précédentes, **caractérisée en ce**
**que** la résine est choisie dans le groupe des résines hydrocarbonées, en particulier des résines hydrocarbonées aliphatiques, cycliques ou cycloaliphatiques, des résines de colophane éventuellement modifiées, des résines terpéniques, des résines de phénol terpénique, des résines de polyesterpolyol, des résines de polyuréthane, des résines de coumarone-indène, des résines d'α-méthylstyrène, des résines de tall, des esters de résine de tall polymérisés et/ou des résines de cétone-aldéhyde, de préférence des résines terpéniques, des résines de polyesterpolyol et/ou des résines de polyuréthane, ainsi que leurs mélanges; et/ou
**que** la cire est choisie parmi les cires de polyoléfine, telles que les cires de polyéthylène et de polypropylène, les cires à base de matières premières renouvelables, telles que les cires de canne à sucre et les cires de ricin durcies, et les cires modifiées sur cette base; et/ou
**que** l'agent plastifiant (plastifiant) est choisi dans le groupe des polyglycols, en particulier du polyéthylèneglycol et/ou du polypropylèneglycol, du glycérol, du citrate et des dérivés de citrate, en particulier des esters de citrate, ainsi que leurs mélanges.

8. Composition adhésive selon l'une des revendications précédentes, **caractérisée en ce que**
que la composition adhésive contient en outre au moins un additif, en particulier où les additifs sont des additifs connus en soi, comme des huiles organiques à point d'ébullition élevé, des esters ou d'autres additifs servant à la plastification, des stabilisateurs, en particulier des stabilisateurs UV, des antioxydants, des capteurs d'acide, des charges, en particulier des charges nanoparticulaires ou micro-scalaires, et/ou des agents de protection contre le vieillissement; en particulier où la composition adhésive contient l'additif en quantités de 0,01 à 10 % en poids, en particulier de 0,01 à 8 % en poids, de préférence de 0,05 à 7 % en poids, préférentiellement de 0,05 à 6 % en poids, de manière particulièrement préférée de 0,1 à 5 % en poids.

9. Procédé d'assemblage d'au moins deux substrats par collage, **caractérisé en ce qu'**une composition adhésive selon l'une des revendications précédentes est appliquée sur au moins un, de préférence un, des substrats, puis les substrats sont assemblés à une température inférieure à celle à laquelle la composition adhésive est appliquée.

10. Procédé selon la revendication 9, **caractérisé en ce**
**que** la composition adhésive est appliquée de manière continue ou discontinue sur le substrat, en particulier où le substrat est revêtu de la composition adhésive, en particulier où une couche adhésive continue ou une couche adhésive discontinue est obtenue; et/ou
**que** la composition adhésive est appliquée à partir de la masse fondue, en particulier à des températures dans la plage de 80 à 250 °C, en particulier de 90 à 200 °C, de préférence de 100 à 180 °C; et/ou
**que** la composition adhésive est appliquée sur le substrat par pulvérisation, raclage, calandrage, laminage, procédé d'impression, en particulier au moyen d'un procédé d'impression flexographique et/ou d'un procédé de sérigraphie, et/ou par extrusion; et/ou
**que** la composition adhésive est appliquée sur le substrat avec un poids surfacique de 5 à 250 g/m², en particulier de 8 à 100 g/m², de préférence de 10 à 50 g/m².

11. Procédé selon l'une des revendications précédentes, **caractérisé en ce**
**que** l'opération d'assemblage s'effectue sous pression et/ou pressage, en particulier la pression et/ou le pressage étant maintenus pendant une durée de 0,001 à 100 secondes, en particulier de 0,002 à 80 secondes, de préférence de 0,005 à 70 secondes, préférentiellement de 0,008 à 60 secondes, de manière particulièrement préférée de 0,01 à 50 secondes; et/ou
**qu'**au moins un substrat comprend du bois et/ou du papier; et/ou
**qu'**au moins un substrat comprend du plastique, du cuir et/ou du métal; et/ou
**qu'**au moins un substrat comprend de la pierre et/ou du béton.

12. Utilisation d'une composition adhésive selon l'une des revendications précédentes pour le contrecollage de matières plastiques, en particulier pour l'application d'étiquettes sur des bouteilles en plastique, de préférence des bouteilles en PET.

13. Utilisation d'une composition adhésive selon l'une des revendications précédentes pour le collage de matériaux de surface sur des supports plans, en particulier sur des sols, de préférence pour le collage d'isolations contre les bruits d'impact, en particulier pour des sols stratifiés et/ou des parquets.

14. Utilisation d'une composition adhésive selon l'une des revendications précédentes comme aide au montage, en particulier lors de la fabrication de véhicules, de préférence lors de la fabrication d'automobiles, de préférence lors de la fixation de panneaux d'isolation acoustique dans des carrosseries automobiles.

15. Utilisation d'une composition adhésive selon l'une des revendications précédentes pour des collages de montage dans l'industrie de la construction.
